# EUROPEAN PATENT APPLICATION

(11) **EP 2 236 557 A1**
(43) Date of publication of application: **06.10.2010**
(21) Application number: 09703235.3
(22) Date of filing: 23.01.2009
(51) Int. Cl.: C08L 33/24, B32B 27/18, C08F 220/58, C08F 246/00, C08L 57/06, C09D 5/14, C09D 7/12, C09D 143/04

(54) **HYDROPHILIC COMPOSITION HAVING MILDEWPROOFING EFFECT AND HYDROPHILIC MEMBER**

(30) Priority: 25.01.2008 JP 2008015141; 25.03.2008 JP 2008079319; 18.08.2008 JP 2008210083
(71) Applicant: FUJIFILM Corporation, Tokyo 106-0031 (JP)
(72) Inventor: MURAYAMA, Yuichiro, Odawara-shi Kanagawa (JP); KONDO, Yoshiaki, Odawara-shi Kanagawa (JP)
(74) Representative: HOFFMANN EITLE
(86) International application number: PCT/JP2009/051076
(87) International publication number: WO 2009/093688

(57) **Abstract**

A hydrophilic composition and a hydrophilic member obtained by using the composition are provided, which composition contains a hydrophilic polymer having a specific structure of having a hydrolysable group in the side chain thereof in a content of 50% by weight or more based on the weight of the solid components and further contains an additive having an antifungal property, and which composition shows excellent water resistance and maintains the high hydrophilicity even after being stored for a long period under an environment of high temperature and high humidity.

## Description

### Technical Field

The present invention relates to a hydrophilic composition and a hydrophilic member having an antifungal property and, in particular, relates to a hydrophilic composition which can maintain its high hydrophilicity over a long period of time without reducing antifungal function, a hydrophilic member having a hydrophilic layer formed by using the hydrophilic composition, a fin stock, a heat exchanger having the fin stock, and an air-conditioner having the heat exchanger.

### Background Art

It has been known to impart antifogging properties and self-cleaning properties to the surface of a substrate of every kind. For example, there are known building materials, exteriors of buildings such as exterior walls and roofs; interiors of buildings, window frames, window panes, and structural members; exteriors and coatings of vehicles such as automobiles, rail cars, aircraft, boats and ships, bicycles, and motorbikes; exteriors, dust-resistant covers and coatings of mechanical devices and articles; exteriors and coatings of traffic signs, various display devices, advertising towers, road sound abatement shields, railroad soundproof walls, bridges, and guardrails; interiors and coatings of tunnels; insulators, solar cell covers, heat collecting covers of solar water heaters, vinyl houses, panel light covers of cars, handcuffs, home accommodations, toilets, bathtubs, washstands, lighting fixtures, illumination covers, kitchen utensils, dishes, dish washers, dish driers, sinks, kitchen ranges, kitchen hoods, ventilating fans, and an aluminum fin stock for an air-conditioner. Of these, bathtubs, washstands, kitchen utensils, fin stocks for air-conditioners, and the like involve the problems that various fungi grow due to water adhering to the surface of the members to give off an unpleasant smell.

Various techniques have been known to suppress growth of fungi and to hydrophilize. As such examples, there can be illustrated use of anti-bacterial and antifungal agents having hydrophilizing properties and being obtained from natural products (see, for example, patent document 1), a technique of imparting antifungal property and hydrophilicity to a substrate by applying a multi-layer film having a PVA based hydrophilic polymer layer and a layer of an aqueous emulsion adhesive containing a hydrophilic organic antifungal agent (see, for example, patent document 2), a technique of imparting antifungal property and hydrophilicity to the surface of a metal by applying an antibacterial and antifungal layer containing a polymer to which a phosphonium base is bound to the main chain or side chain thereof and containing a hydrophilic substance (see, for example, patent document 3), an aluminum fin stock to which antibacterial and antifungal property and hydrophilicity are imparted (see, for example, patent document 4), and a plastic bathtub carrying thereon a hydrophilic inorganic oxide and an antibacterial agent (see, for example, patent document 5).

The above-described examples are conventional art of adding antifungal agents. However, though they exhibit some antifungal effects, they fail to provide sufficient hydrophilicity, and hence there result insufficient self-cleaning properties and, after long-term use, the hydrophilic layer and the antifungal agents are carried away due to water condensed on the surface of the hydrophilic layer, thus durability of not only hydrophilicity but antifungal function having been insufficient.
The conventional art as described in the documents uses, as a hydrophilic composition, a thermoplastic polymer having a hydrophilic group. For example, document 2 describes polyvinyl alcohol having a hydroxyl group as the hydrophilic group, document 3 describes a polyester resin having a phosphonium group, and document 4 describes an acrylic resin having a sulfonic acid group. However, since these resins do not have any cross-linked structure in the coated film, they show such poor water resistance that not only the hydrophilic layer but also the antifungal agents are dissolved away, leading to the aforesaid defects. It is also taken into consideration that a hydrophilic coated film having a cross-linked structure for imparting water resistance and also having long-lasting antifungal function is desired.
In addition, techniques with respect to a hydrophilic composition which can form a film with antifouling and antifogging properties and wear resistance have also been disclosed (see, for example, patent document 6). However, since this composition does not contain antifungal agents, it can suffer growth of fungi when stored for a long period under the environment of high temperature and high humidity.

Patent document 1: JP-A-2007-230920
Patent document 2: JP-A-2006-281580
Patent document 3: JP-A-11-277672
Patent document 4: JP-A-2000-171191
Patent document 5: JP-A-2000-273401
Patent document 6: JP-A-2007-269932

### Disclosure of the Invention

### Problems that the Invention is to Solve

An object of the present invention is to provide a hydrophilic composition and a hydrophilic member which show excellent water resistance and, even after stored for a long period under an environment of high temperature and high humidity, maintains high hydrophilicity and does not suffer reduction of antifungal effect.

### Means for Solving the Problems

As a result of intensive investigations, the inventor has found that the above-described object can be attained by a hydrophilic composition and a hydrophilic member containing a hydrophilic polymer having the specific structure shown below and an additive having an antifungal property.
1. A hydrophilic composition which is characterized by containing a hydrophilic polymer having at least the structural unit represented by the following general formula (I-a) and the structural unit represented by the following general formula (I-b) in a content of 50% by weight or more based on the weight of solid components, and further containing an additive having an antifungal property:

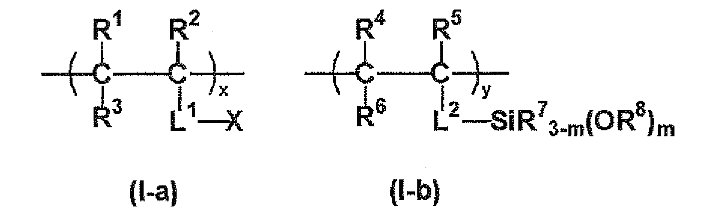

In the general formulae (I-a) and (I-b), R¹ to R⁸ each independently represents a hydrogen atom or a hydrocarbon group, L¹ represents a single bond or a multi-valent organic linking group, L² represents a single bond or a multi-valent organic linking group having one or more structures selected from the group consisting of -CONH-, - NHCONH-, -OCONH-, -SO₂NH-, and -SO₃-, m represents an integer of from 1 to 3, x and y each represents a copolymerization ratio, with x being 0<x<100 and y being 0<y<100, X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.
2. The hydrophilic composition as described in the above 1, which is **characterized in that** the additive having the antifungal property comprises at least one member selected from among water-soluble organic compounds and silver based inorganic compounds.
3. The hydrophilic composition as described in the above 1 or 2, which is **characterized in that** the additive having the antifungal property comprises at least one member selected from among 2-(4-thiazolyl)benzimidazole, methyl 2-benzimidazole carbamate, 10,10'-oxy-bis-phenoxyarsine, bis(2-pyridylthio-1-oxide)zinc, and silicate based silver zeolite.
4. The hydrophilic composition as described in any one of the above 1 to 3, which is **characterized in that** the hydrophilic composition further contains a hydrophilic polymer having the structure represented by the following general formula (II):

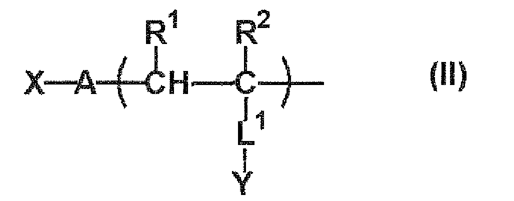

In the general formula (II), R¹ and R² each independently represents a hydrogen atom or a hydrocarbon group, X represents a reactive group, A and L¹ each independently represents a single bond or a linking group, Y represents -NHCOR⁹, -CONH₂, -CON(R⁹)₂, -COR⁹, -OH, -CO₂M, - SO₃M, -PO₃M, -OPO₃M or -N(R⁹)₃Z¹ (wherein R⁹ represents an alkyl group, an aryl group or an aralkyl group, M represents a hydrogen atom, an alkali metal, an alkaline earth metal or an onium, and Z¹ represents a halogen ion.
5. The hydrophilic composition as described in the above 4, which is **characterized in that** the weight ratio of {hydrophilic polymer having at least the structural unit represented by the general formula (I-a) and the structural unit represented by the general formula (I-b)}/{hydrophilic polymer having the structure represented by the general formula (II)} is from 50/50 to 95/5.
6. The hydrophilic composition as described in any one of the above 1 to 5, which is **characterized in that** the hydrophilic composition further contains a surfactant.
7. The hydrophilic composition as described in the above 6, which is **characterized in that** the surfactant is an anionic surfactant.
8. The hydrophilic composition as described in any one of the above 1 to 7, which is **characterized in that** the additive having an antifungal property has a molecular weight of from 200 to 1,000.
9. The hydrophilic composition as described in the above 8, which is **characterized in that** the additive having an antifungal property has a molecular weight of from 300 to 700.
10. A hydrophilic member which is **characterized in that** it has a hydrophilic layer formed on a substrate composed of at least one member selected from among acrylic resins, polycarbonate based resins, polyester based resins, stainless steel, and aluminum by using the hydrophilic composition described in any one of the above 1 to 9.
11. A fin stock having an aluminum-made fin body and a hydrophilic layer provided on at least part of the surface of the fin body, which is **characterized in that** the hydrophilic layer is formed by coating the hydrophilic composition described in any one of the above 1 to 9.
12. A heat exchanger which is characterized by having the fin stock described in the above 11.
13. An air-conditioner which is characterized by having the heat exchanger described in the above 12.

### Advantage of the Invention

The hydrophilic composition of the present invention is a hydrophilic composition showing a contact angle to water that conventional composition never show and exhibiting a high hydrophilicity, and is also **characterized in that**, after being stored for a long period under an environment of high temperature and high humidity or after being dipped in water for a long period, it can maintain its high hydrophilicity and antifungal property, thus having excellent durability with respect to hydrophilicity and antifungal property.
This may be attributed to that hydrophilicity can be maintained at a high level by using a polymer having a hydrophilic structure represented by polyacrylamide and a compound having an alkoxysilyl group as a composition for imparting hydrophilicity and, in addition, that the cross-linked structure serves to prevent dissolution of the hydrophilic layer with water deposited on the hydrophilic surface, thus the composition showing excellent water resistance as well over a long period of time.
Also, the hydrophilic composition has the characteristic that the antifungal agents such as zinc pyrithione and silver zeolite are not dissolved out of the composition because the cross-linked structure traps them in its 3-dimensional network structure, thus the antifungal effect lasting for a long time.

### Best Mode for Carrying Out the Invention

The present invention will be described in detail below.
The hydrophilic composition of the invention is characterized by containing a hydrophilic polymer having at least the structural unit represented by the following general formula (I-a) and the structural unit represented by the following general formula (I-b) in a content of 50% by weight or more based on the weight of solid components and further containing an additive with antifungal action. Preferably, the hydrophilic composition further contains a metal element (C) selected from among Si, Ti, Zr, and Al or a curing catalyst (D). Still further, the composition may contain, as needed, other additive (E).
Also, the hydrophilic member of the invention comprises a substrate having provided thereon a hydrophilic layer, with the hydrophilic layer being formed by coating the hydrophilic composition on the substrate, and heating and drying the coated composition.
The hydrophilic layer in the invention means a layer having a surface which shows a droplet contact angle of 40° or less, preferably 30° or less, still more preferably 20° or less.

### [(A) Hydrophilic polymer]

The hydrophilic composition of the invention contains the hydrophilic polymer having at least the structural unit represented by the following general formula (I-a) and the structural unit represented by the following general formula (I-b) in a content of 50% by weight or more based on the weight of solid components
The hydrophilic composition of the invention preferably contains a hydrophilic polymer having the structure represented by the following general formula (II) in addition to the hydrophilic polymer having at least the structural unit represented by the following general formula (I-a) and the structural unit represented by the following general formula (I-b).

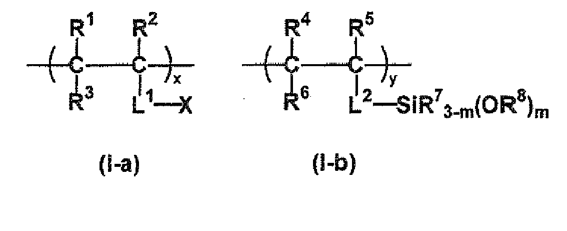

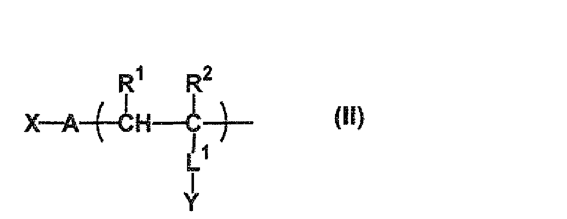

In the general formulae (I-a) and (I-b), R¹ to R⁸ each independently represents a hydrogen atom or a hydrocarbon group, L¹ represents a single bond or a multi-valent organic linking group, L² represents a single bond or a multi-valent organic linking group having one or more structures selected from the group consisting of -CONH-, - NHCONH-, -OCONH-, -SO₂NH-, and -SO₃-, m represents an integer of from 1 to 3, x and y each represents a copolymerization ratio, with x being 0<x<100 and y being 0<y<100, and represent numbers satifying x+y=100, X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, - OSO₃Rₑ, -SO₂R_{d}, -NHSO₂R_{d}, -SO₂N(Rₐ)(R_{b}), -N(Rₐ)(R_{b})(R_{c}), - N(Rₐ)(R_{b})(R_{c})(R_{g}), -RO₃(Rₑ)(R_{f}), -OPO₃(Rₑ)(R_{f}) or -PO₃(R_{d})(Rₑ) (wherein Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

As the hydrocarbon group in the case where R¹ to R⁸ each represents a hydrocarbon group, those containing from 1 to 8 carbon atoms are preferred, and there are illustrated an alkyl group and an aryl group, with a straight, branched or cyclic alkyl group containing from 1 to 8 carbon atoms being preferred. Specific examples include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, and a cyclopentyl group.
R¹ to R⁸ are each preferably a hydrogen atom, a methyl group, or an ethyl group from the standpoints of effect and easy availability.

These hydrocarbon groups may further have a substituent. When the alkyl group has a substituent, the substituted alkyl group is composed of a substituent and an alkylene group bonding together, in which the substituent may be a monovalent non-metal atomic group except hydrogen. Preferred examples thereof include a halogen atom (-F, -Br, -Cl or -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-aryluretdo group, an N'-alkyl-N-alkylureido group, an N'-alkyl-N-arylureido group, an N',N'-dialkyl-N-alkylureido group, an N',N,-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxy-carbonylamino group, a formyl group, an acyl group, a carboxyl group, an alkoxycarbonyl group,

an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, an arylsulfonyl group, a sulfo group (-SO₃H) or a conjugated base group thereof (hereinafter referred to as "sulfonato group"), an alkoxysulfonyl group, an aryloxysulfonyl group, a sulfinamoyl group, an N-alkylsulfinamoyl group, an N,N-dialkyl-sulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) or a conjugated base group thereof (hereinafter referred to as "phosphonato group"), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) or a conjugated base group thereof (hereinafter referred to as "alkylphosphonato group"), a monoarylphosphono group (-PO₃H(aryl))) or a conjugated base group thereof (hereinafter referred to as arylphosphonato group"), a phosphonoxy group (-OPO₃H₂) or a conjugated base group thereof (hereinafter referred to as "phosphonatoxy group"), a dialkylphosphonoxy group (-OPO₃(alkyl)₂), a diarylphosphonoxy group (-OPO₃(aryl)₂)_{,} an alkylarylphosphonoxy group (-OPO(alkyl)(aryl)), a monoalkylphosphonoxy group (-OPO₃H(alkyl)) or a conjugated base group thereof (hereinafter referred to as "alkylphosphonatoxy group"), a monoarylphosphonoxy group (-OPO₃H (aryl)) or a conjugated base group thereof (hereinafter referred to as "arylphosphonatoxy group"), a morpholino group, a cyano group, a nitro group, an aryl group, an alkenyl group, and an alkynyl group.

Specific examples of the alkyl group in these substituents include the same alkyl groups as those in R¹ to R⁸; and specific examples of the aryl group include a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carbxoyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, and a phosphonatophenyl group. Also, examples of the alkenyl group include a vinyl group, a 1-propenyl group, a 1-butenyl group, a cinnamyl group, and a 2-chloro-1-ethenyl group; and examples of the alkynyl group include an ethynyl group, a 1-propynyl group, a 1-butynyl group, and a trimethylsilylethynyl group. Examples of G¹ in an acyl group (G¹CO-) include hydrogen and the foregoing alkyl groups and aryl groups.

Of these substituents, a halogen atom (-F, -Br, -Cl or -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group, and an alkenyl group are more preferred.

On the other hand, as the alkylene group in the substituted alkyl group, an alkylene group obtained by eliminating any one of hydrogen atoms on each of the foregoing alkyl groups containing preferably from 1 to 20 carbon atoms to convert the resulting alkyl group into a divalent organic residue can be exemplified. More preferred examples thereof include a straight alkylene group having from 1 to 12 carbon atoms, a branched alkylene group having from 3 to 12 carbon atoms, and a cyclic alkylene group having from 5 to 10 carbon atoms, and still more preferred examples include a straight alkylene group having from 1 to 8 carbon atoms, a branched alkylene group having from 3 to 8 carbon atoms, and a cyclic alkylene group having from 5 to 8 carbon atoms. Specific examples of the preferred substituted alkyl group obtained by combining these substituent and alkylene group include a chloromethyl group, a bromomethyl group, a 2-chloroethyl group, a trifluoromethyl group, a hydroxymethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl- group, a 2-hydroxyethyl group, a 2-hydroxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropyl-carbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropyl-sulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propenyl group, a 2-butynyl group, and a 3-butynyl group.

L¹ represents a single bond or a polyvalent organic linking group. The term "single bond" as referred to herein means that the main chain of the polymer is connected directly to X without a linking chain. In the case where L¹ represents an organic linking group, L¹ represents a polyvalent linking group comprising non-metallic atoms of from 0 to 60 carbon atoms, from 0 to 10 nitrogen atoms, from 0 to 50 oxygen atoms, from 0 to 100 hydrogen atoms, and from 0 to 20 sulfur atoms. Specifically, a preferred one is selected from among -N<, an aliphatic group, an aromatic group, a heterocyclic group, and a combination thereof, and is preferably -O-, -S-, -CO-, -NH- or a divalent linking group comprising a combination containing -O-, -S-, -CO-, or -NH-.
As more specific linking groups, there can be illustrated those which are constituted by the following structural units or a combination thereof.

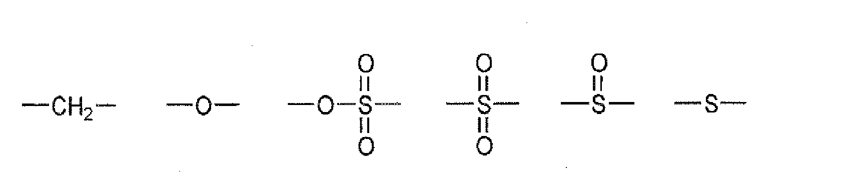

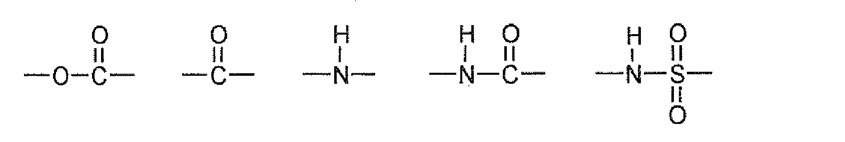

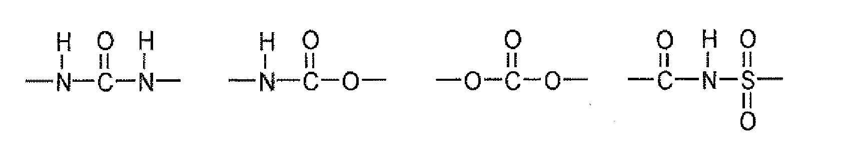

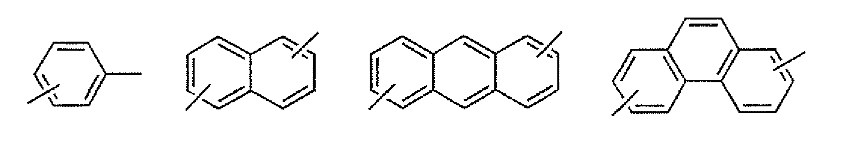

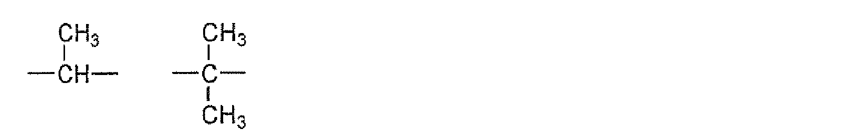

More preferably, L¹ represents -CH₂CH₂CH₂S-, -CH₂S-, -CONHCH(CH₃)CH₂-, -CONH-, -CO-, -CO₂-, or -CH₂-.
Also, L¹ may be formed of a polymer or an oligomer, and it is preferred that the polymer or oligomer includes polyacrylate, polymethacrylate, polyacrylonitrile, polyvinyl, polystyrene, or the like which comprises an unsaturated double bond-containing monomer. Other preferred examples include poly(oxyalkylene), polyurethane, polyurea, polyester, polyamide, polyimide, polycarbonate, polyaminoacid, and polysiloxane. Of these, polyacrylate, polymethacrylate, polyacrylonitrile, polyvinyl, and polystyrene are preferred, with polyacrylate and polymethacrylate being more preferred.
The structural unit which is used in such a polymer or oligomer may be used singly or in combination of two or more kinds thereof. In the case where L¹ is a polymer or an oligomer, the number of elements constituting the polymer or oligomer is not particularly limited, and its molecular weight is preferably from 1,000 to 1,000,000, more preferably from 1,000 to 500,000, and most preferably from 1,000 to 200,000.

L² represents a single bond or a polyvalent organic linking group having one or more structures selected from the group consisting of -CONH-, -NHCONH-, -OCONH-, -SO₂NH-, and -SO₃-. The term "single bond" as referred to herein means that the main chain of the polymer is connected directly to the Si atom without a linking group. Also, two or more of the foregoing structures may be present in L². In that case, the structures may be the same as or different from each other. So far as one or more of the foregoing structures are contained, other structure can have the same structure as that exemplified with respect to L¹.

X is a hydrophgilic group and represents -OH, -ORₐ, -CORₐ, -CO₂Rₑ, -CON(Rₐ)(R_{b}), -N(Rₐ)(R_{b}), -NHCOR_{d}-, -NRCO₂Rₐ, - OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(Rₐ)(Rₑ). Here, Rₐ, R_{b}, and R_{c} each independently represents a hydrogen atom or a straight (containing preferably from 1 to 8 carbon atoms), branched or cyclic alkyl group, R_{d} represents a straight (containing preferably from 1 to 8 carbon atoms), branched or cyclic alkyl group, Rₑ and R_{f} each independently represents a hydrogen atom, a straight (containing preferably from 1 to 8 carbon atoms), branched or cyclic alkyl group, an alkali metal, an alkaline earth metal or an onium, and R_{g} represents a halogen ion, an inorganic anion or an organic anion. Also, with -CON(Rₐ)(R_{b}), -N(Rₐ)(R_{b}), -OCON(Rₐ)(R_{b}), - NHCON(Rₐ)(R_{b}), -SO₂N(Rₐ)(R_{b}), -PO₃(Rₑ)(R_{f}), -OPO₃(Rₑ)(R_{f}), - PO₃(R_{d})(Rₑ), -N(Rₐ)(R_{b})(R_{c}) or -N(Rₐ)(R_{b})(R_{c})(R_{g}), Rₐ to R_{g} may be connected to each other to form a ring, and the formed ring may be a heterocyclic ring which contains a hetero atom such as oxygen atom, sulfur atom, nitrogen atom or the like. Rₐ to R_{g} may further have a substituent and, as the introducible substituent, there can similarly be illustrated those which have been illustrated hereinbefore as substituents introducible in the case where R¹ to R⁸ are alkyl groups.

Specifically, preferred examples of Rₐ, R_{b}, and R_{c} include a hydrogen atom, a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
Specifically, preferred examples of R_{d} include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
Specifically, examples of Rₑ and R_{f} include, in addition to the alkyl groups as exemplified with respect to Rₐ to R_{d}, a hydrogen atom, an alkali metal such as lithium, sodium, or potassium, an alkaline earth metal such as calcium or barium, and an onium such as ammonium, iodonium, or sulfonium.
As the halogen ion, there can be illustrated a fluorine ion, chlorine ion, and bromine ion. As the inorganic anion, there are preferably illustrated a nitrate anion, a sulfate anion, a tetrafluoroborate anion, and a hexafluorophosphate anion and, as the organic anion, there are preferably illustrated a methanesulfonate anion, a trifluoromethanesulfonate anion, a nonafluorobutanesulfonate anion, and a p-toluenesulfonate anion.
Also, as such X, -CO₂⁻Na⁺, -CONH₂, -SO₃⁻Na⁺, -SO₂NH₂, - PO₃H₂ and the like are preferred.

x and y each represents a copolymerization ratio (composition ratio) of the structural unit represented by the general formula (I-a) and the structural unit represented by the general formula (I-b) in the hydrophilic polymer (A). x represents a number of 0<x<100 and y represents a number of 0<y<100, with x+y being 100. The copolymerization ratio x:y is preferably in the range of from 50:50 to 90:10, more preferably in the range of from 70:30 to 90:10. When the content of the structural unit represented by the general formula (I-1) is 50% or more, there can be realized high hydrophilicity and, when the content of the structural unit represented by the general formula (I-b) is 50% or more, cross-linking can be strengthened.
Here, (I-a) and (I-b) which are each a structural unit for constituting the polymer chain may be all the same or may be one containing plural different structural units. In the latter case, it is preferred that the copolymerization ratio of the structural units corresponding to the formula (I-a) to the structural units corresponding to the formula (I-b) falls within the foregoing ranges.

Specific examples of the hydrophilic polymers represented by the general formulae (I-a) and (I-b) will be given below along with weight-average molecular weights (M.W.) thereof, but the invention is not limited thereto. Additionally, the following specifically exemplified polymers mean random copolymers wherein respective structural units are contained with the molar ratios described there.

| | |
|---|---|
| (I-1) | 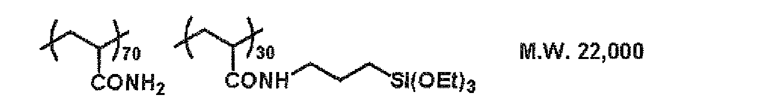 |
| (I-2) | 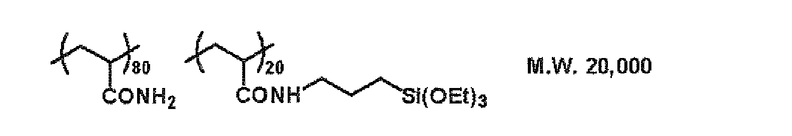 |
| (I-3) | 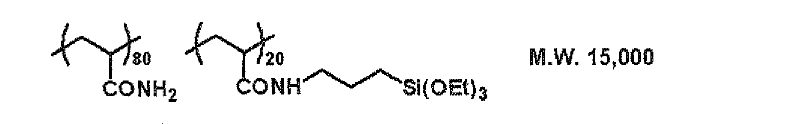 |
| (I-4) | 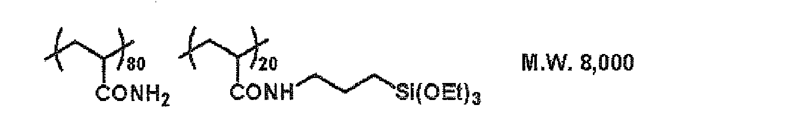 |
| (I-5) | 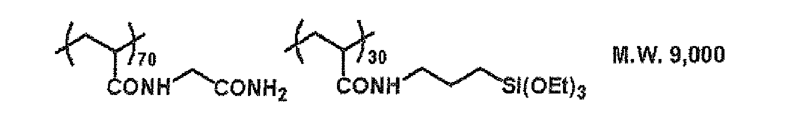 |
| (I-6) | 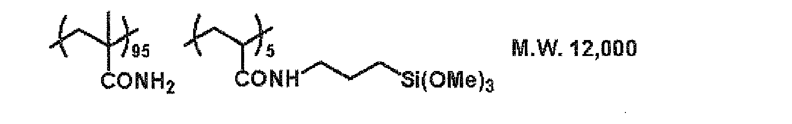 |
| (I-7) | 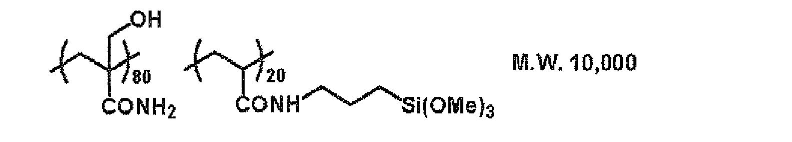 |
| (I-8) | 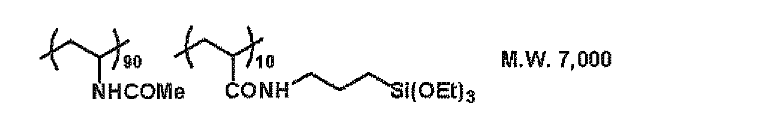 |
| (I-9) | 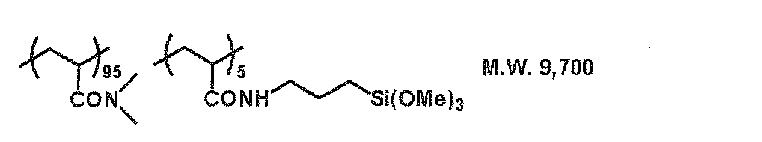 |
| (I-10) | 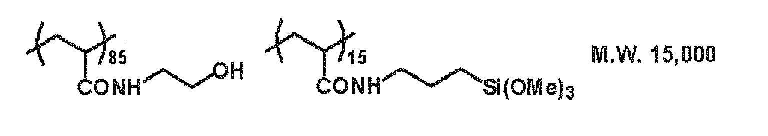 |

| | |
|---|---|
| (I-11) | 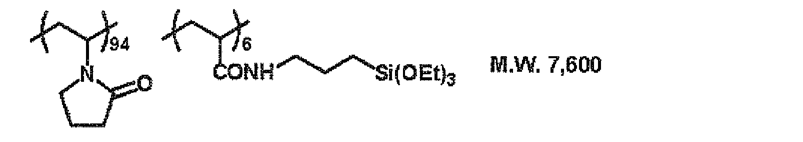 |
| (I-12) | 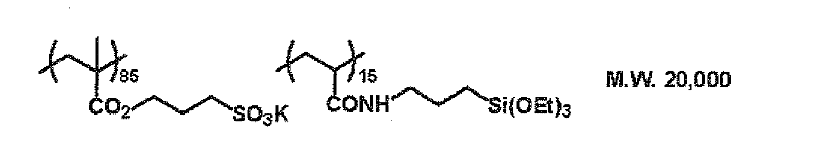 |
| (I-13) | 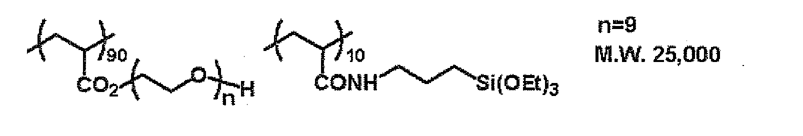 |
| (I-14) | 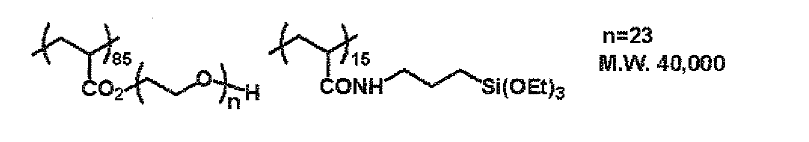 |
| (I-16) | 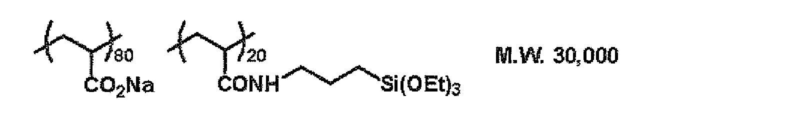 |
| (I-16) | 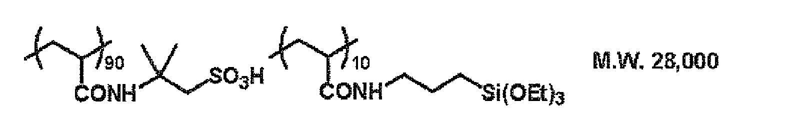 |
| (I-17) | 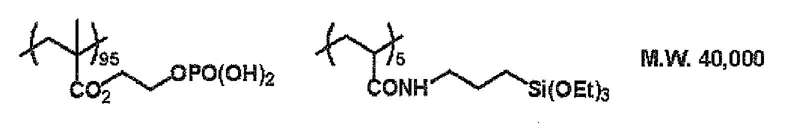 |
| (I-18) | 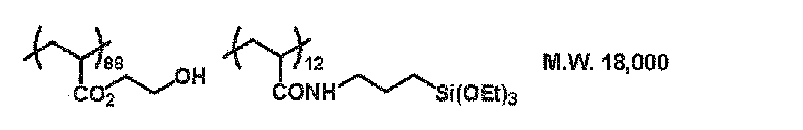 |
| (I-19) | 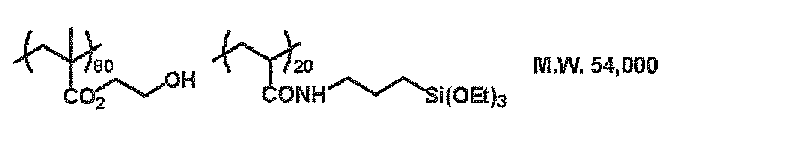 |
| (I-20) | 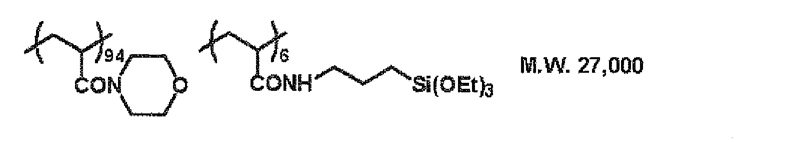 |

| | |
|---|---|
| (I-21) | 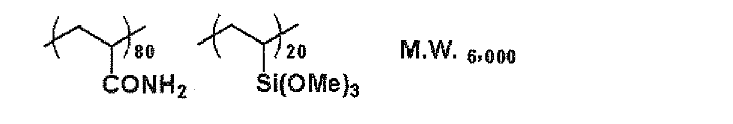 |
| (I-22) | 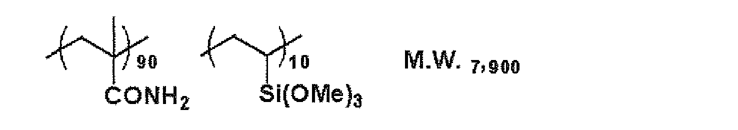 |
| (I-23) | 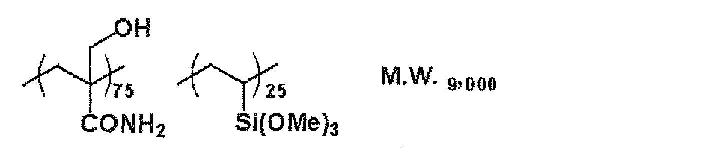 |
| (I-24) | 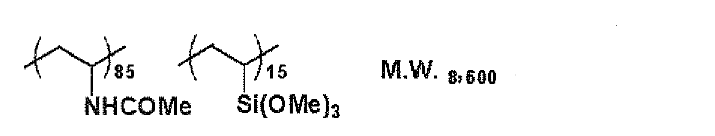 |
| (I-25) | 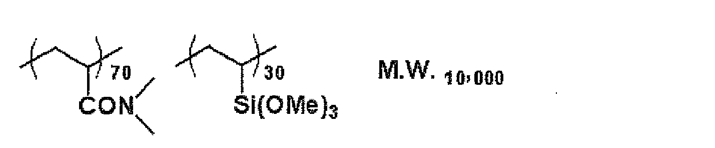 |
| (I-26) | 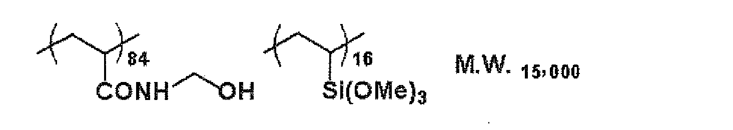 |
| (I-27) | 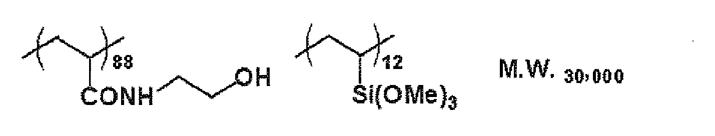 |
| (I-28) | 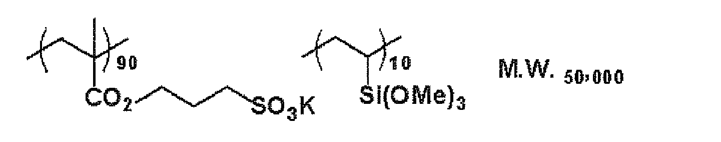 |
| (I-29) | 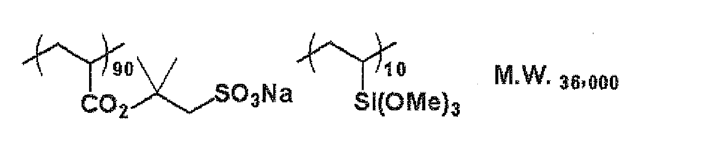 |
| (I-30) | 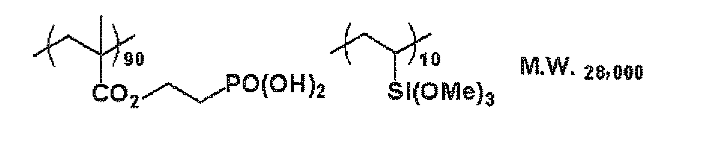 |

| | |
|---|---|
| (I-31) | 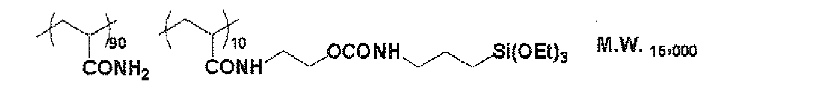 |
| (I-32) | 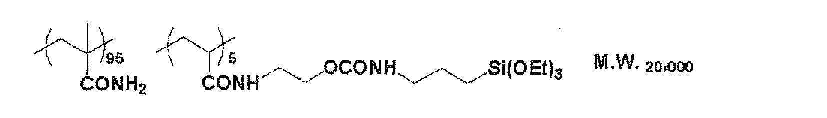 |
| (I-33) | 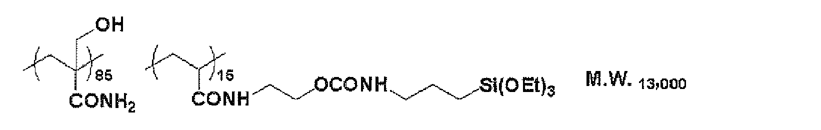 |
| (I-34) | 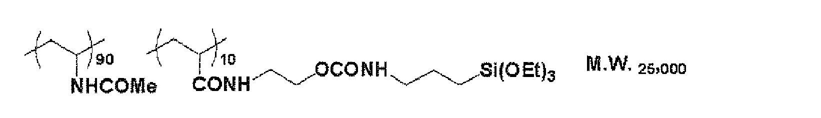 |
| (I-35) | 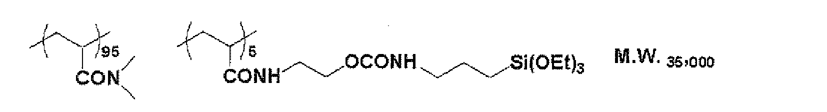 |
| (I-36) | 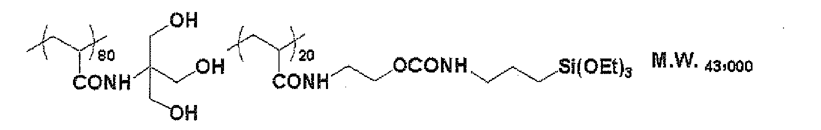 |
| (I-37) | 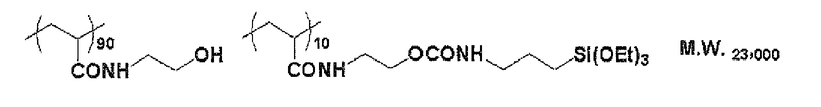 |
| (I-38) | 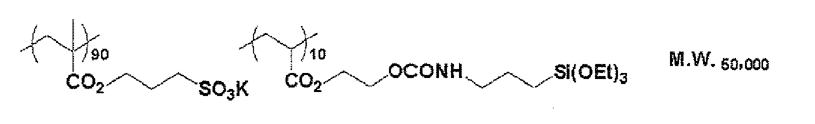 |
| (I-39) | 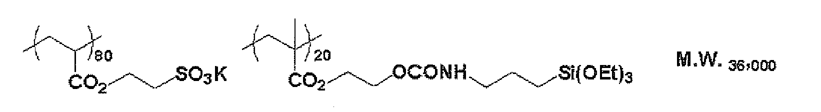 |
| (I-40) | 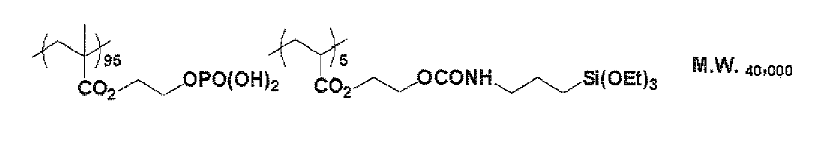 |

| | |
|---|---|
| (I-41) | 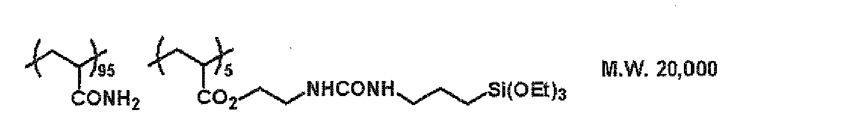 |
| (I-42) | 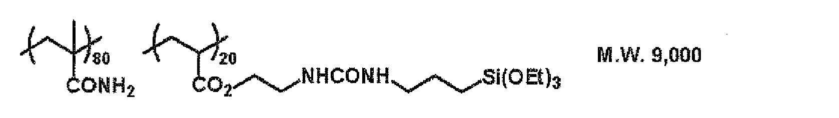 |
| (I-43) | 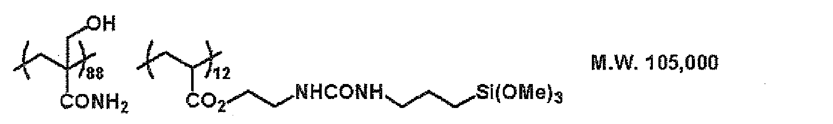 |
| (I-44) | 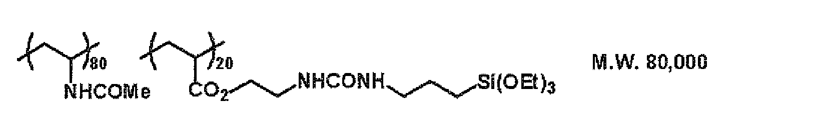 |
| (I-45) | 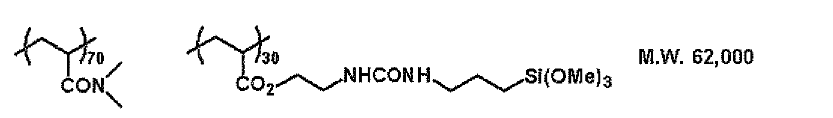 |
| (I-46) | 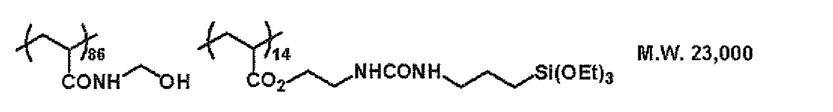 |
| (I-47) | 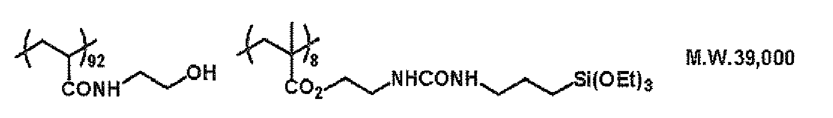 |
| (I-48) | 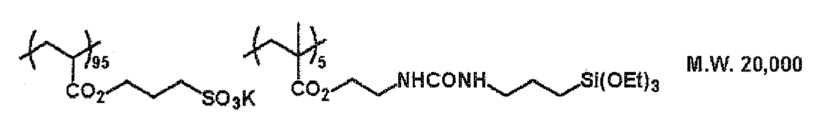 |
| (I-49) | 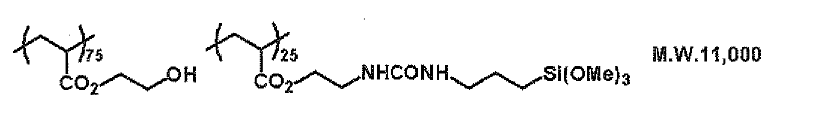 |
| (I-50) | 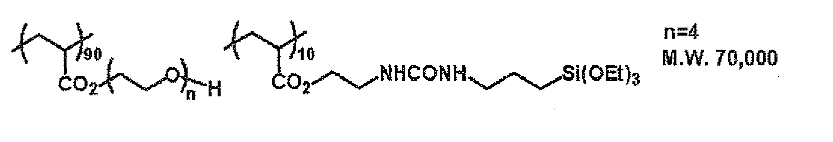 |

| | |
|---|---|
| (I-51) | 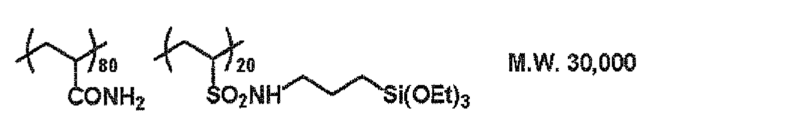 |
| (I-52) | 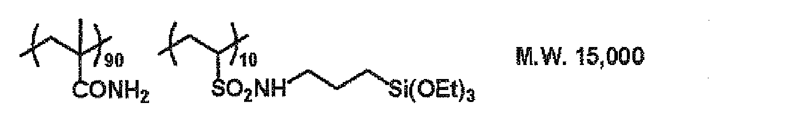 |
| (I-53) | 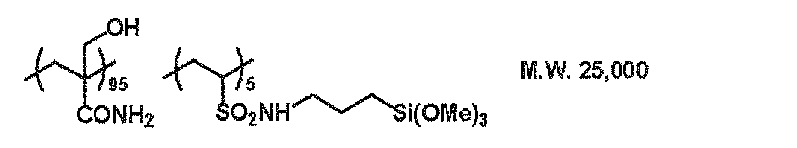 |
| (1-54) | 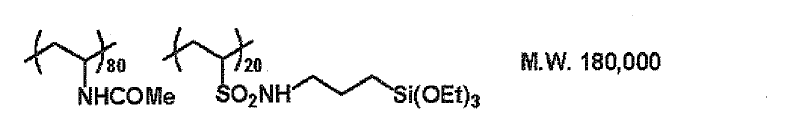 |
| (I-55) | 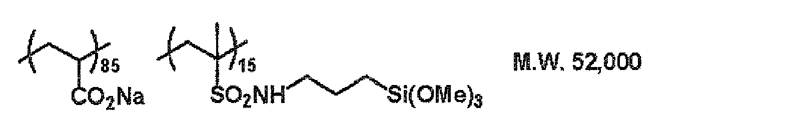 |
| (I-56) | 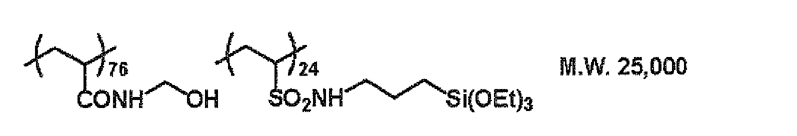 |
| (I-57) | 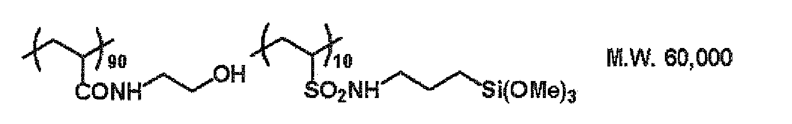 |
| (I-58) | 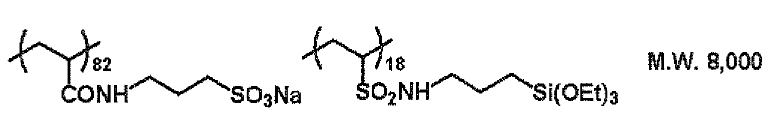 |
| (I-59) | 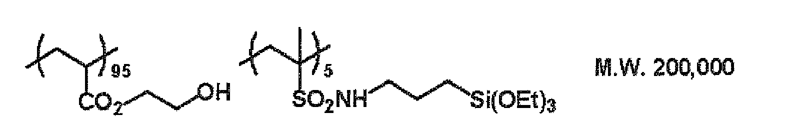 |
| (I-60) | 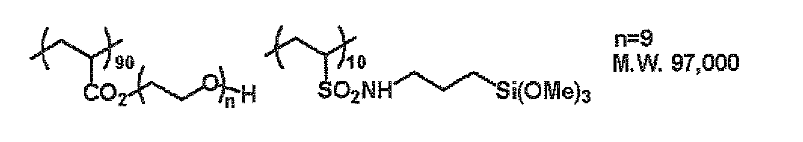 |

| | |
|---|---|
| (I-61) | 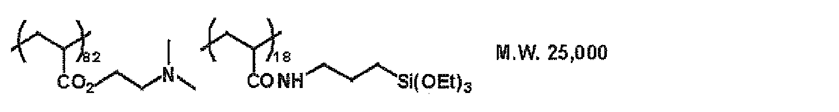 |
| (I-62) | 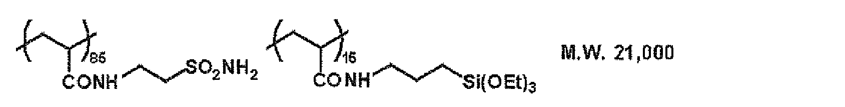 |
| (I-63) | 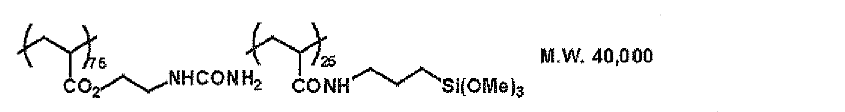 |
| (I-64) | 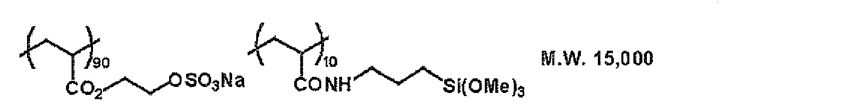 |
| (I-65) | 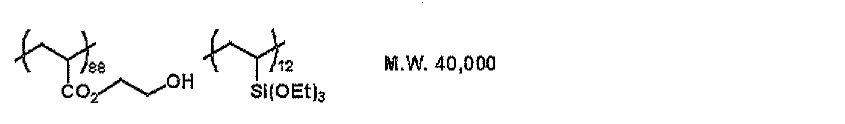 |
| (I-66) | 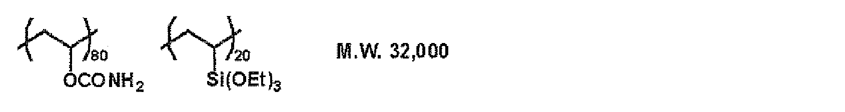 |
| (I-67) | 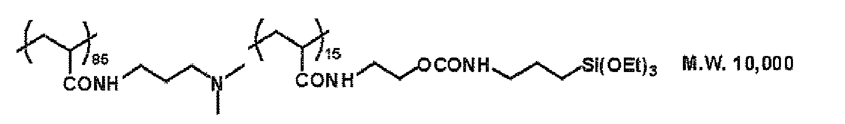 |
| (I-68) | 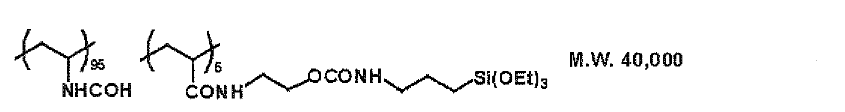 |
| (I-69) | 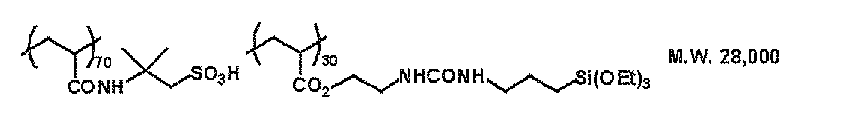 |
| (I-70) | 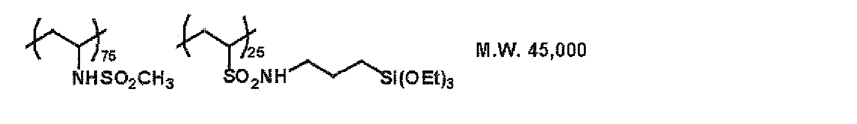 |

| | |
|---|---|
| (I-71) | 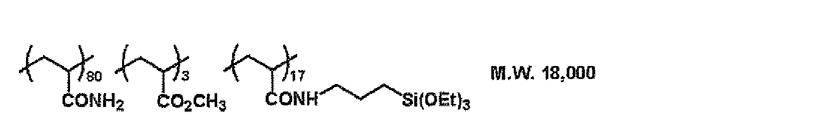 |
| (I-72) | 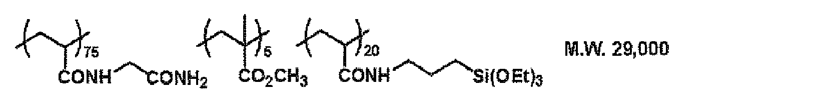 |
| (I-73) | 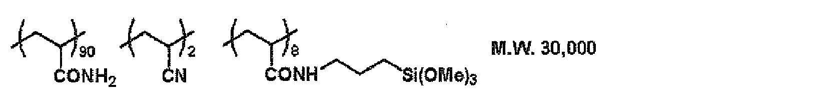 |
| (I-74) | 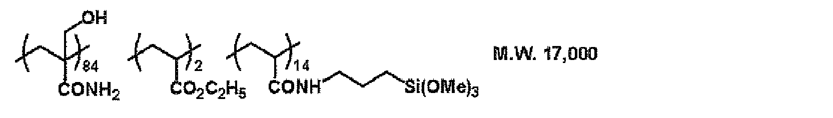 |
| (I-75) | 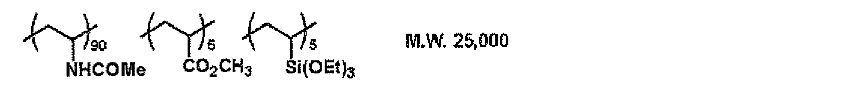 |
| (I-76) | 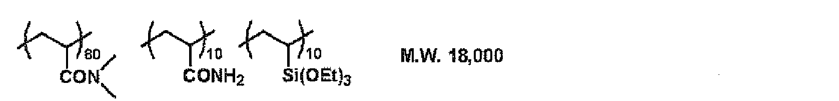 |
| (I-77) | 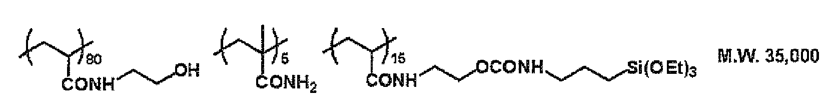 |
| (I-78) | 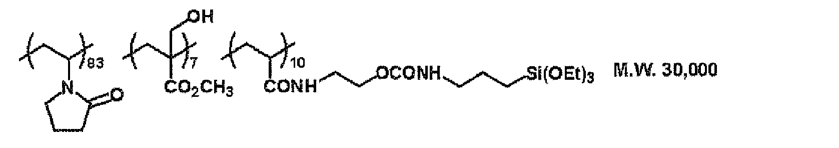 |
| (I-79) | 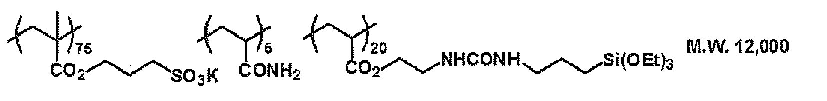 |
| (I-80) | 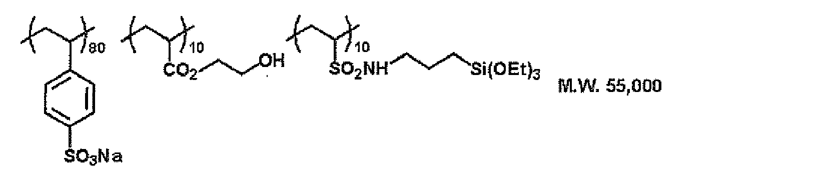 |

| | |
|---|---|
| (I-81) | 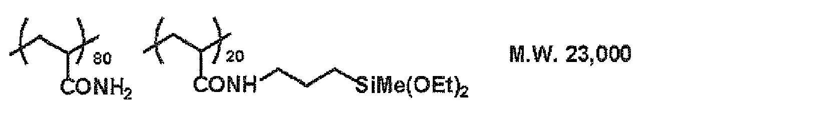 |
| (I-82) | 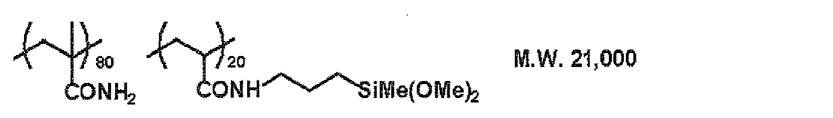 |
| (I-83) | 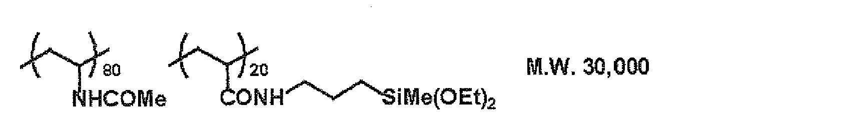 |
| (I-84) | 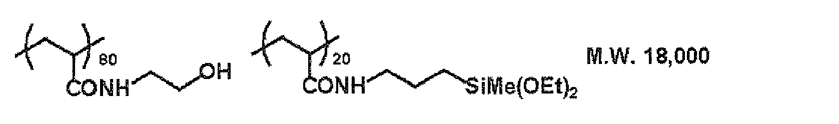 |
| (I-85) | 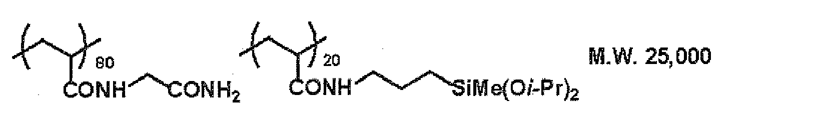 |
| (I-86) | 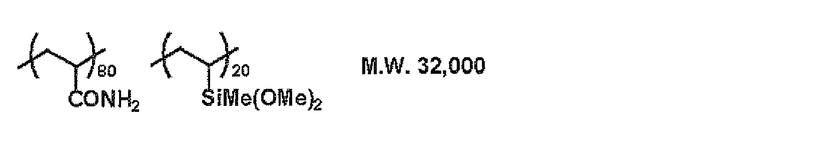 |
| (I-87) | 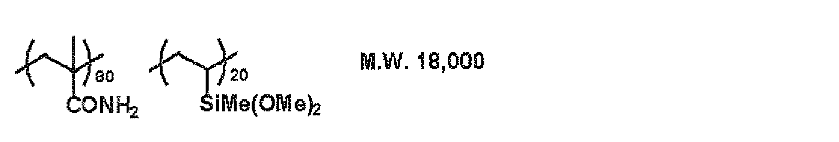 |
| (I-88) | 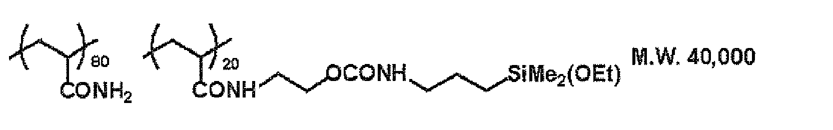 |
| (I-89) | 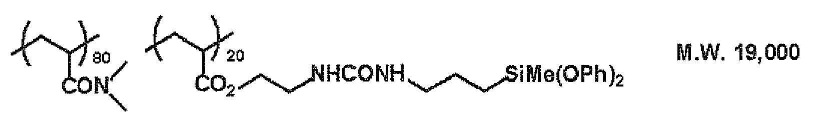 |
| (I-90) | 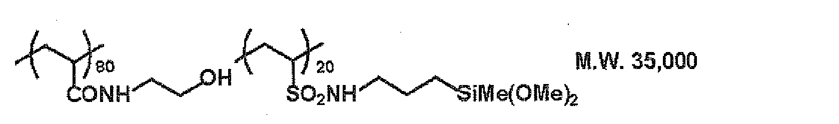 |
| (I-91) | 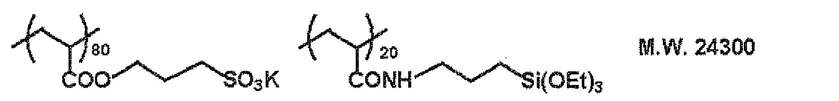 |

The following compounds A and B are particularly preferred.

**A:** 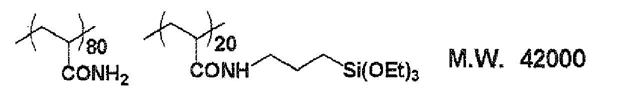
**B:**

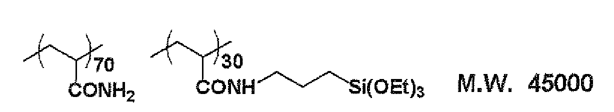

Respective compounds for synthesizing the hydrophilic polymer containing the structural unit represented by the general formula (I-a) and the structural unit represented by the general formula (I-b) are commercially available, and also can readily be synthesized.
As the radical polymerization method for synthesizing the hydrophilic polymer containing the structural unit represented by the general formula (I-a) and the structural unit represented by the general formula (I-b), any of conventionally known methods can be used.
Specifically, a general radical polymerization method is described in, for example, Shin Kobunshi Jikken-gaku (New Polymer Experimentology) 3: Synthesis and Reaction 1 of Polymer (edited by The Society of Polymer Science, Japan and published by Kyoritsu Shuppan Co., Ltd.); Shin Jikken Kagaku Koza (New Experimental Chemistry Course) 19: Polymer Chemistry (I) (edited by The Chemical Society of Japan and published by Maruzen Co., Ltd.); and Busshitsu Kogaku Koza (Material Engineering Course): Polymer Synthesis Chemistry (published by Tokyo Denki University Press). These can be applied.

Also, the hydrophilic polymers having the structural unit represented by the general formula (I-a) and the structural unit represented by the general formula (I-b) may be a copolymer with other monomer as described later. Examples of other monomer which can be used include known monomers, for example, acrylic esters, methacrylic esters, acrylamides, methacrylamides, vinyl esters, styrenes, acrylic acid, methacrylic acid, acrylonitrile, maleic anhydride, and maleic acid imide. By copolymerizing with such a monomer, various physical properties, for example, film-forming properties, film strength, hydrophilicity, hydrophobicity, solubility, reactivity, and stability can be improved.

Specific examples of the acrylic esters include methyl acrylate, ethyl acrylate, (n- or i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, and 2-(hydroxyphenyl-carbonyloxy)ethyl acrylate.

Specific examples of the methacrylic esters include methyl methacrylate, ethyl methacrylate, (n- or i-)propyl methacrylate, (n-, i-, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, and 2-(hydroxyphenyl-carbonyloxy)ethyl methacrylate.

Specific examples of the acrylamides include acrylamide, N-methylacrylamide, N-ethylacrylamide, N-propylacrylamide, N-butylacrylamide, N-benzylacrylamide, N-hydroxyethylacrylamide, N-phenylacrylamide, N-toltylacrylamide, N-(hydrnxyphenyl)acrylamide, N-(sulfamoylphenyl)acrylamide, N-(phenylsulfonyl)acrymaide, N-(tolylsulfonyl) acrylamide, N,N-dimethylacrylamide, N-methyl-N-phenylacrylamide, and N-hydroxyethyl-N-methylacrylamide.

Specific examples of the methacrylamides include methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-toltylmethacrylamide, N-(hydroxyphenyl)methacrylamide, N-(sulfamoylphenyl)methacrylamide, N-(phenylsulfonyl)methacrymaide, N-(tolylsulfonyl)methacrylamide, N,N-dimethylmethacrylamide, N-methyl-N-phenylmethacrylamide, and N-hydroxy-ethyl-N-methylmethacrylamide.

Specific examples of the vinyl ester include vinyl acetate, vinyl butyrate, and vinyl benzoate.
Specific examples of the styrenes include styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorostyrene, dichlorostyrene, bromostyrene, iodostyrene, fluorostyrene, and carboxystyrene.

With respect to the proportion of such other monomer to be used for the synthesis of a copolymer, a sufficient amount for improving various physical properties is necessary. However, in order that the function as the hydrophilic film may be sufficient and that advantages to be brought by adding the hydrophilic polymer (A) may be sufficiently obtained, it is preferred that the proportion is not excessively high. Accordingly, a total proportion of other monomers in the hydrophilic polymer (A) is preferably not more than 80% by weight, more preferably not more than 50% by weight.

The molecular weight of the hydrophilic polymer (A) is preferably from 1,000 to 1,000,000, more preferably from 1,000 to 500,000, most preferably from 1,000 to 200,000.

From the viewpoints of curing properties and hydrophilicity, the hydrophilic polymer (A) in accordance with the invention is preferably contained in an amount of 50% by weight or more, preferably 90% by weight or more, based on the weight of non-volatile components (solid components) of the hydrophilic composition of the invention. When the content of the hydrophilic polymer is 50% by weight or more, sufficient hydrophilicity and cross-linking properties can be ensured. The hydrophilic polymer (A) may be used singly or in combination of two or more kinds thereof.

The hydrophilic composition of the invention may further contain other hydrophilic polymer in addition to the hydrophilic polymers having at least the structural unit represented by the general formula (I-a) and the structural unit represented by the general formula (I-b). As the other hydrophilic polymer, those polymers are preferred which have a structure represented by the following general formula (II):

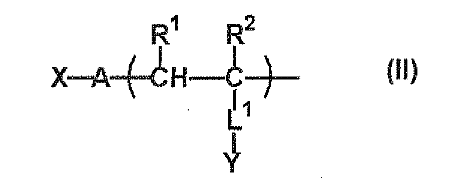

In the general formula (II), R¹ and R² each independently represents a hydrogen atom or a hydrocarbon group, X represents a reactive group, A and L¹ each independently represents a single bond or a linking group, Y represents -NHCOR⁹, -CONH₂, -CON(R⁹)₂, -COR⁹, -OH, -CO₂M, - SO₃M, -PO₃M, -OPO₃M or -N(R⁹)₃Z¹ (wherein R⁹ represents an alkyl group, an aryl group or an aralkyl group, M represents a hydrogen atom, an alkali metal, an alkaline earth metal or an onium, and Z¹ represents a halogen ion).

The term "reactive group" as referred to herein means a functional group capable of reacting with a hydrolysis and polycondensation product of the metal alkoxide compound to form a chemical bond. Also, reactive groups may form a chemical bond with each other. The hydrophilic polymer is preferably water-soluble, and it is preferred that the hydrophilic polymer becomes water-insoluble upon reaction with a hydrolysis and polycondensation product of the metal alkoxide compound.
Similar to the usual meanings, the chemical bond includes a covalent bond, an ionic bond, a coordination bond, and a hydrogen bond. The chemical bond is preferably a covalent bond.
In general, the reactive group is identical with a reactive group contained in a cross-linking agent of a polymer and is a compound capable of forming cross-linkage by heat or light. The cross-linking agent is described in Crosslinking Agent Handbook, written by Shinzo Yamashita and Tosuke Kaneko and published by Taiseisha Ltd. (1981).

Examples of the reactive group include carboxyl (HOOC-) or a salt thereof (MOOC-, wherein M represents a cation), an anhydrous carboxyl group (for example, a monovalent group derived from succinic anhydride, phthalic anhydride or maleic anhydride), amino (H₂N-), hydroxyl (HO), an epoxy group (for example, a glycidyl group), methylol (HO-CH₂-), mercapto (HS-), isocyanato (OCN-), a blocked isocyanato group, an alkoxysilyl group, an alkoxy titanate group, an alkoxy alminate group, an alkoxy zirconate group, an ethylenically unsaturated double bond, an ester bond, and a tetrazole group. The reactive group is most preferably an alkoxysilyl group. Two or more reactive groups may be present in one end thereof. The two or more reactive groups may be different from each other.

It is preferred that the linking groups A and L¹ are each independently a single bond or selected from among -O-, -S-, -CO-, -NH-, -N<, an aliphatic group, an aromatic group, a heterocyclic group, and a combination thereof. The linking group is preferably -O-, -S-, -CO-, -NH-, or a combination containing -O-, -S-, -CO- and -NH-.
The hydrophilic polymer having the structure represented by the general formula (II) is a hydrophilic polymer having a reactive group in one end thereof and can be synthesized by, for example, radical polymerization of a hydrophilic monomer (for example, acrylamide, acrylic acid, or a potassium salt of 3-sulfopropyl methacrylate) in the presence of a chain transfer agent (described in Kanji Kamachi and Tsuyoshi Endo, *Radical Polymerization Handbook*, NTS) or an iniferter (described in Macromolecules, 1986, 19, pages 287, et seq., Otsu). Examples of the chain transfer agent include 3-mercaptopropionic acid, 2-aminoethanethiol hydrochloride, 3-mercaptopropanol, 2-hydroxyethyl disulfide, and 3-mercaptopropyl trimethoxysilane. Also, a hydrophilic monomer (for example, acrylamide) may be subjected to radical polymerization by using a radical polymerization initiator having a reactive group (for example, carboxyl) without using a chain transfer agent.

The hydrophilic polymer having the structure represented by the general formula (II) has a weight-average molecular weight of from 8,000 to 100,000, more preferably from 10,000 to 40,000.

In the foregoing general formula (II), R¹ and R² each independently represents a hydrogen atom or a hydrocarbon group. As the hydrocarbon group, a hydrocarbon group containing from 1 to 8 carbon atoms is preferred, and examples thereof include an alkyl group and an aryl group, with a straight, branched or cyclic alkyl group being preferred. Specific examples thereof include a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group. R¹ and R² are each preferably a hydrogen atom, a methyl group or an ethyl group from the viewpoints of effects and easiness of availability.

These hydrocarbon groups may further have a substituent. When the alkyl group has a substituent, the substituted alkyl group is constituted by bonding between a substituent and an alkylene group. Here, a monovalent non-metal atomic group exclusive of hydrogen is used as the substituent. Preferred examples of the substituent include halogen atoms (-F, -Br, -Cl, and -I), alkoxy groups, aryloxy groups, alkylthio groups, arylthio groups, N-alkylamino groups, N,N-dialkylamino groups, acyloxy groups, N-alkylcarbamoyloxy groups, N-arylcarbamoyloxy groups, acylamino groups, formyl groups, acyl groups, carboxyl groups, alkoxycarbonyl groups, aryloxycarbonyl groups, carbamoyl groups, N-alkylcarbamoyl groups, N,N-dialkylcarbamoyl groups, N-arylcarbamoyl groups, N-alkyl-N-arylcarbamoyl groups, sulfo groups, sulfonato groups, sulfamoyl groups, N-alkylsulfamoyl groups, N,N-dialkylsulfamoyl groups, N-arylsulfamoyl groups, N-alkyl-N-arylsulfamoyl groups, phosphono groups, phosphonato groups, dialkylphosphono groups, diarylphosphono groups, monoalkyolphosphono groups, alkylphosphonato groups, monoarylphosphono groups, arylphosphonato groups, phosphonooxy groups, phosphonatooxy groups, aryl groups, and alkenyl groups.

On the other hand, the alkylene group of the substituted allyl group is preferably a divalent organic residue obtained by removing any one of hydrogen atoms on alkyl groups having from 1 to 20 carbon atoms, more preferably a linear alkylene group having from 1 to 12 carbon atoms, a branched alkylene group having from 3 to 12 carbon atoms, or a cyclic alkylene group having from 5 to 10 carbon atoms, further more preferably a linear alkylene group having from 1 to 8 carbon atoms, a branched alkylene group having from 3 to 8 carbon atoms, or a cyclic alkylene group having from 5 to 8 carbon atoms. Preferred specific examples of the substituted alkyl group available from combination of the substituent and the alkylene group include a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-oxyethyl group, a 2-oxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group.

A and L¹ each represents a single bond or an organic linking group. When A and L¹ represent an organic linking group, A and L¹ represent a polyvalent linking group made of non-metal atoms. Concretely, it may comprise from 0 to 60 carbon atoms, from 0 to 10 nitrogen atoms, from 0 to 50 oxygen atoms, from 0 to 100 hydrogen atoms, and from 0 to 20 sulfur atoms. More specific examples of the linking group are the following structural units and combinations thereof.

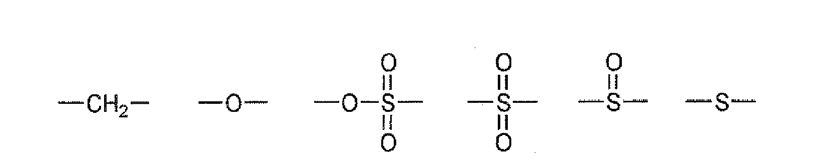

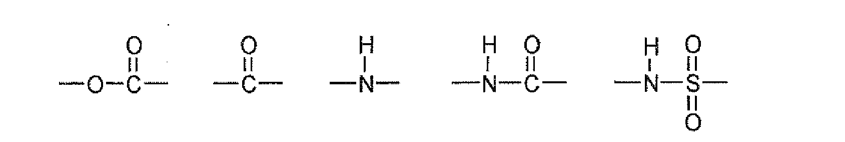

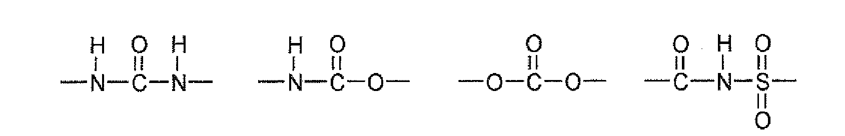

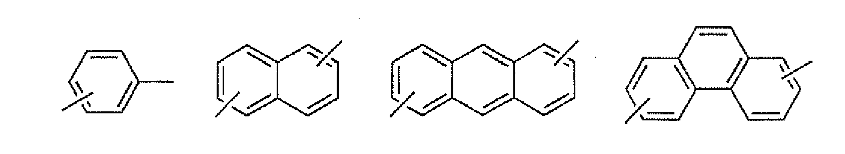

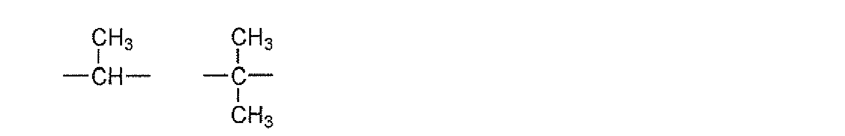

More preferably, A and L¹ each represents -CH₂CH₂CH₂S-, -CH₂S-, -CONHCH(CH₃)CH₂-, -CONH-, -CO-, -CO₂-, or -CH₂-.
Y represents -NHCOR⁹, -CONH₂, -CON(R⁹)₂, -COR⁹, -OM, - CO₂M, -SO₃M, -PO₃M, -OPO₃M, or -N(R⁹)₃Z¹, in which R⁹ represents a linear, branched or cyclic alkyl group, an aryl group, or an aralkyl group, M represents a hydrogen atom, an alkali metal, an alkaline earth metal, or an onium; and Z¹ represents a halogen ion. When Y has a plurality of R⁹ such as -CON(R⁹)₂, R⁹ may be coupled to form a ring and the ring thus formed may be a heterocycle containing a hetero atom such as oxygen atom, sulfur atom or nitrogen atom. R⁹ may have a substituent further and the substituent introducible into them may be the same as those mentioned hereinabove for the alkyl group for R¹ and R².

Preferred specific examples of R⁹ include a methyl group, an ethyl group, a propyl group, a butyl group, a pentyl group, a hexyl group, a heptyl group, an octyl group, an isopropyl group, an isobutyl group, an s-butyl group, a t-butyl group, an isopentyl group, a neopentyl group, a 1-methylbutyl group, an isohexyl group, a 2-ethylhexyl group, a 2-methylhexyl group, and a cyclopentyl group. Examples of M include a hydrogen atom, alkali metals such as lithium, sodium, and potassium, alkaline earth metals such as calcium and barium, and oniums such as ammonium, iodonium, and sulfonium. Preferred specific examples of Y include - NHCOCH₃, -CONH₂, -COOH, -SO₃⁻NMe₄⁺, and a morpholyl group.

Specific preferred examples of the hydrophilic polymer which can favorably be used in the invention and which has a structure represented by the general formula (II) will be shown below. However, the invention is not limited only to them.

| | |
|---|---|
| (II-1) | 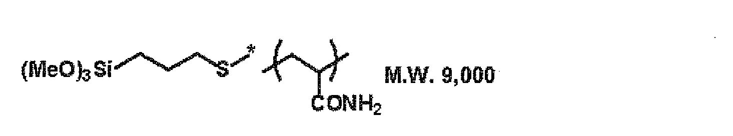 |
| (II-2) | 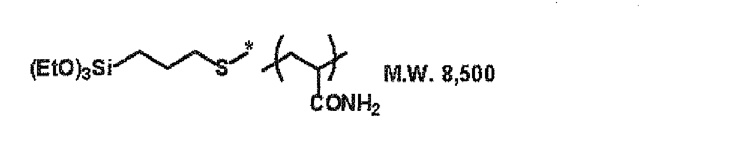 |
| (II-3) | 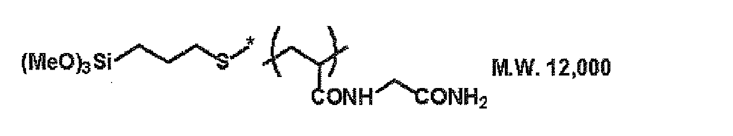 |
| (II-4) | 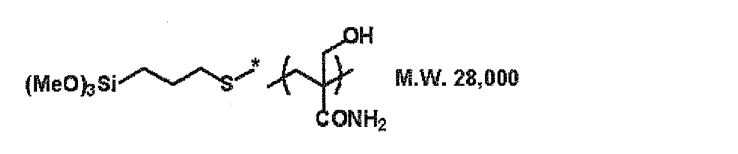 |
| (II-5) | 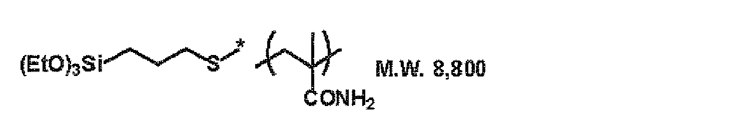 |
| (II-6) | 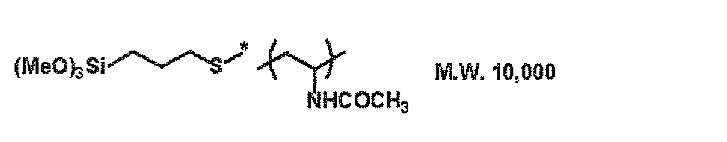 |
| (II-7) | 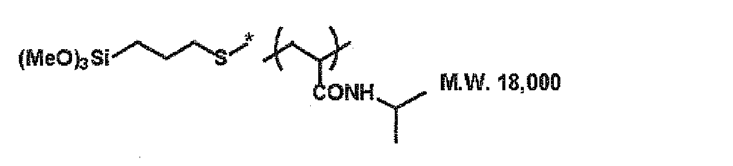 |
| (II-8) | 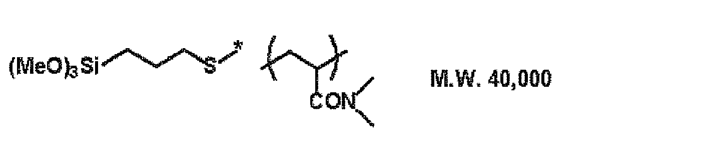 |
| (II-9) | 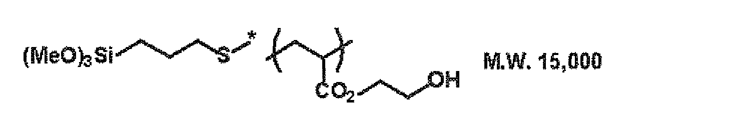 |
| (II-10) | 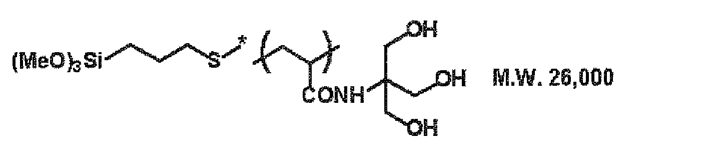 |

| | |
|---|---|
| (II-11) | 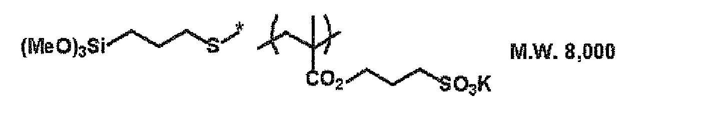 |
| (II-12) | 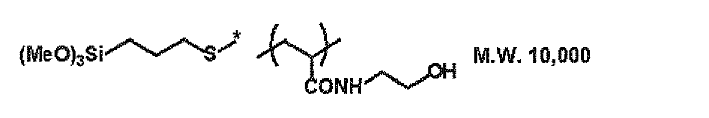 |
| (II-13) | 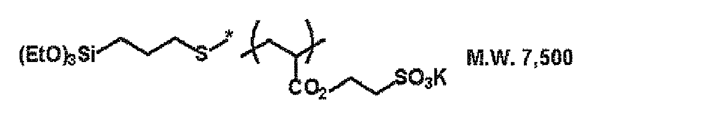 |
| (II-14) | 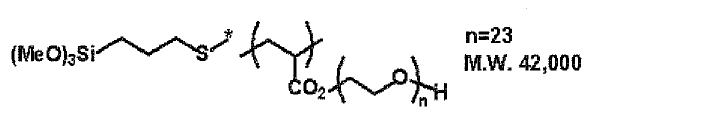 |
| (II-15) | 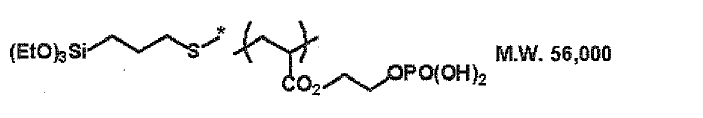 |
| (II-16) | 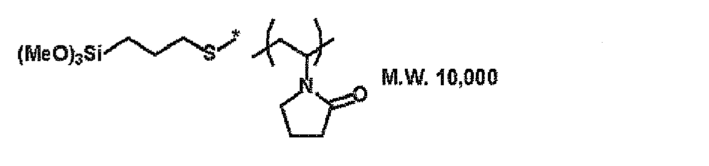 |
| (II-17) | 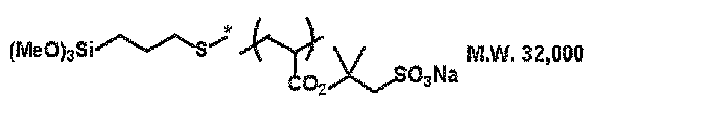 |
| (II-18) | 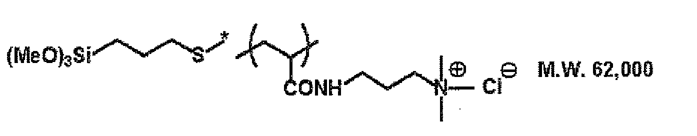 |
| (II-19) | 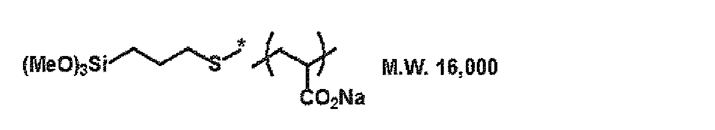 |
| (II-20) | 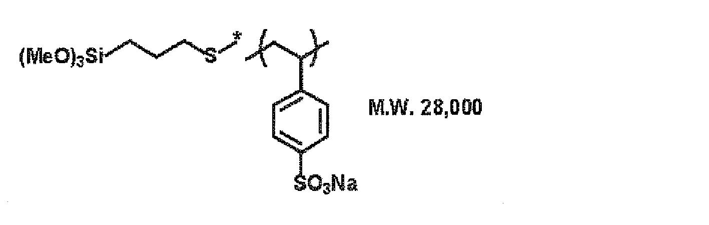 |

| | |
|---|---|
| (II-21) | 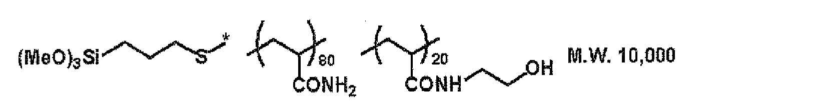 |
| (II-22) | 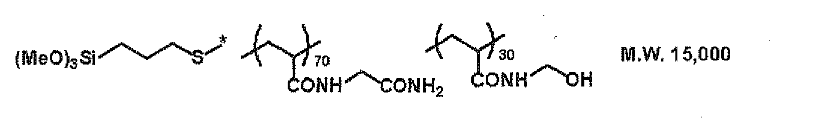 |
| (II-23) | 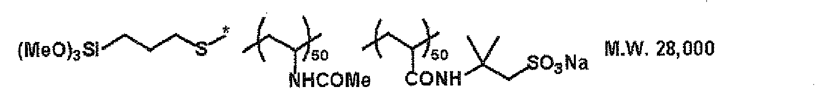 |
| (II-24) | 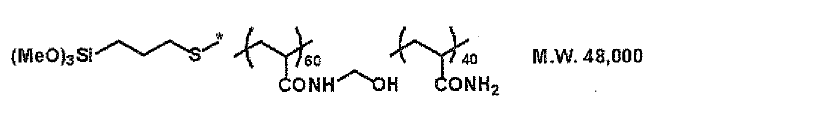 |
| (II-25) | 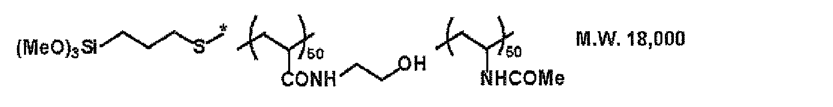 |
| (II-26) | 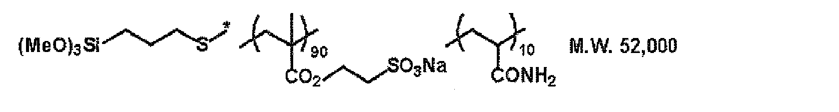 |
| (II-27) | 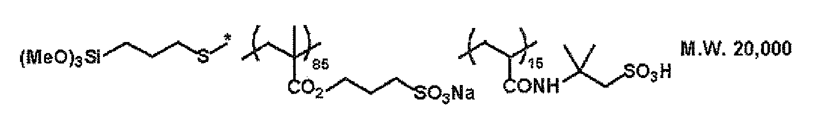 |
| (II-28) | 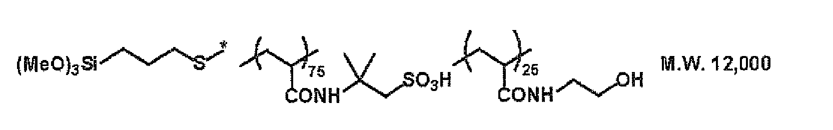 |
| (II-29) | 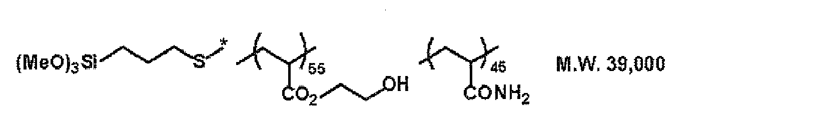 |
| (II-30) | 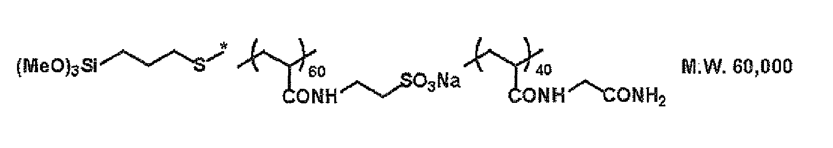 |

| | |
|---|---|
| (II-31) | 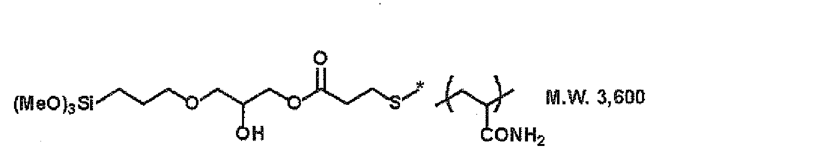 |
| (II-32) | 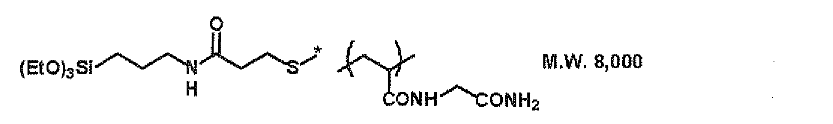 |
| (II-33) | 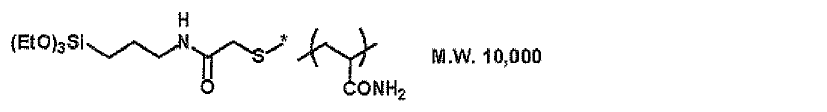 |
| (II-34) | 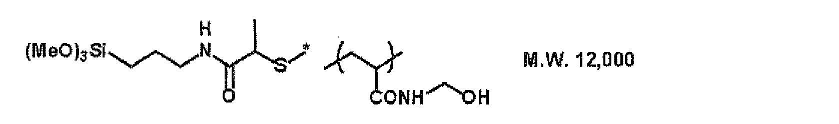 |
| (II-35) | 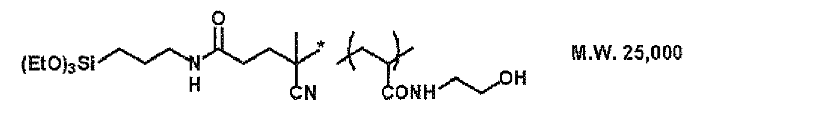 |
| (II-36) | 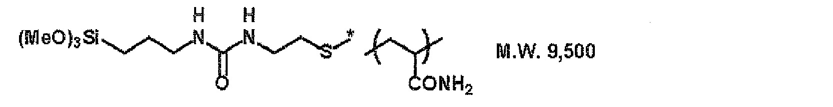 |
| (II-37) | 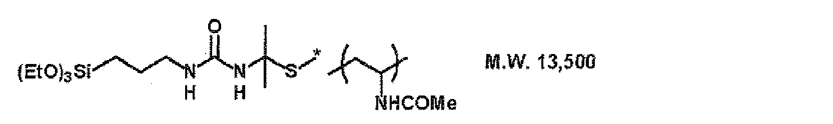 |
| (II-38) | 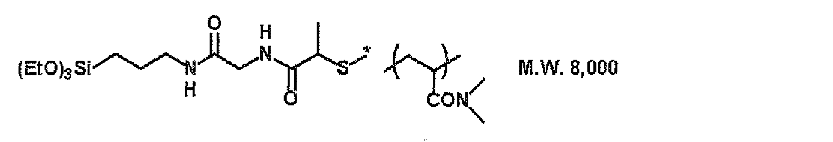 |
| (II-39) | 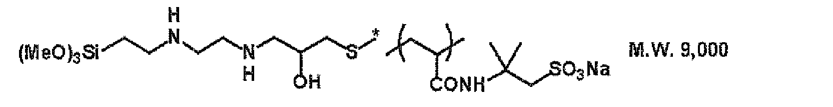 |
| (II-40) | 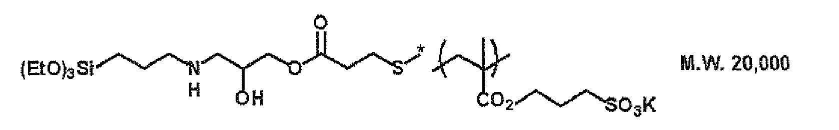 |

| | |
|---|---|
| (II-41) | 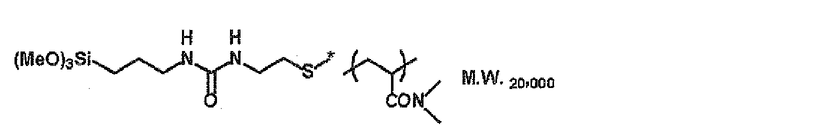 |
| (II-42) | 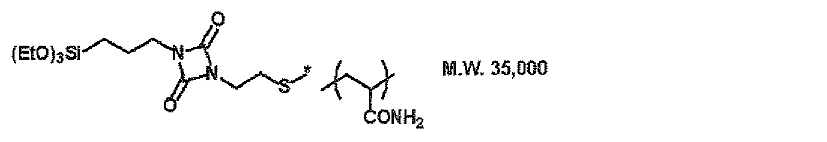 |
| (II-43) | 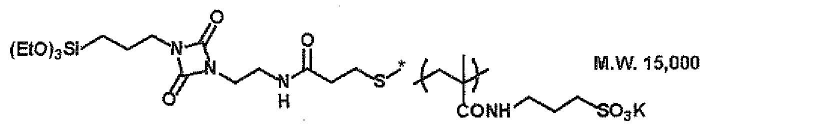 |
| (II-44) | 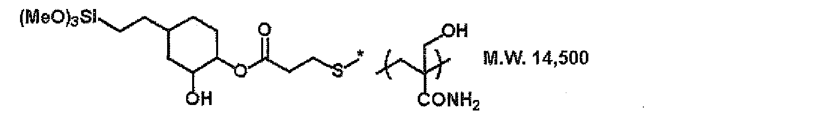 |
| (II-45) | 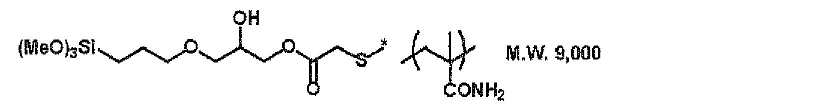 |
| (II-46) | 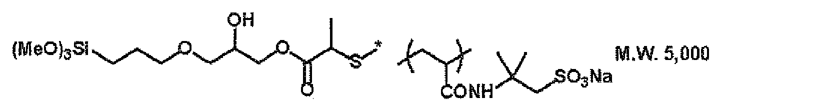 |
| (II-47) | 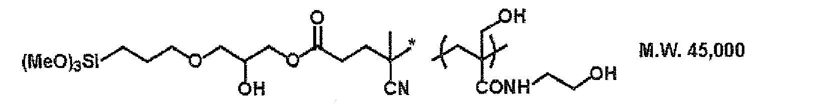 |
| (II-48) | 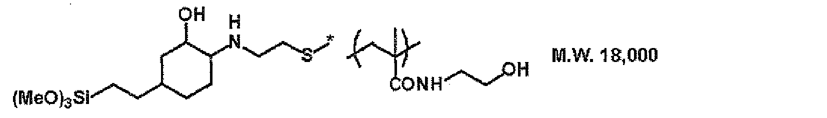 |
| (II-49) | 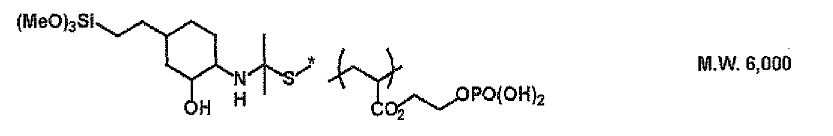 |
| (II-50) | 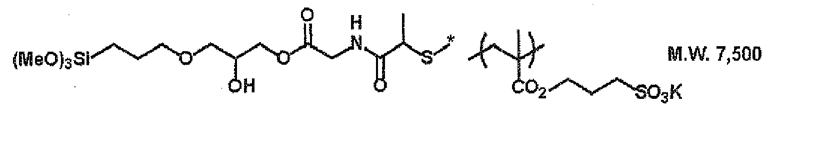 |

| | |
|---|---|
| (II-51) | 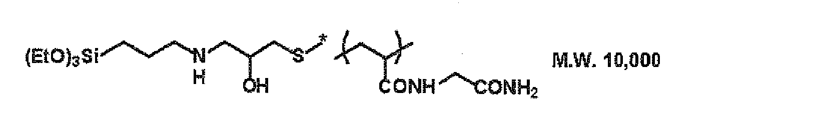 |
| (II-52) | 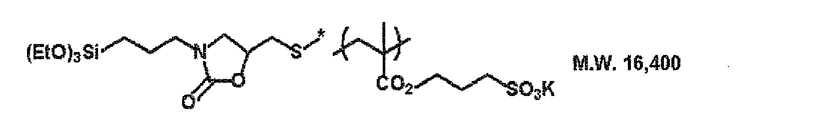 |
| (II-63) | 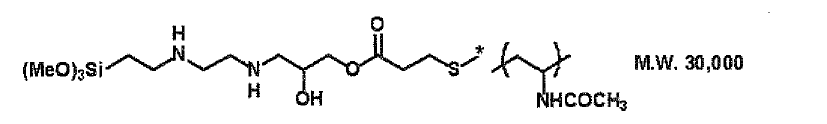 |
| (II-54) | 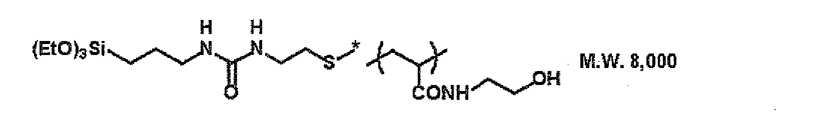 |
| (II-55) | 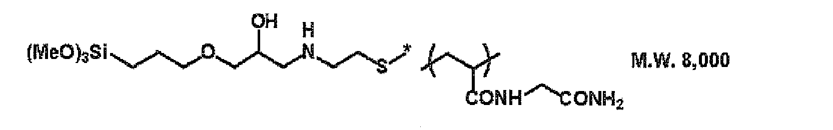 |
| (II-56) | 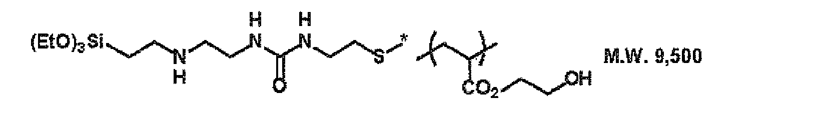 |
| (II-57) | 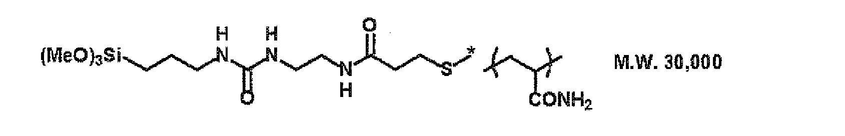 |
| (II-58) | 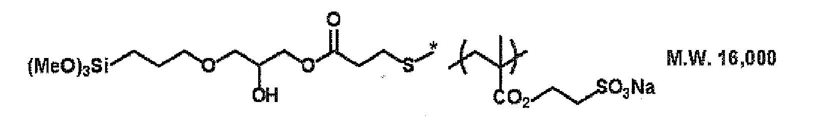 |
| (II-59) | 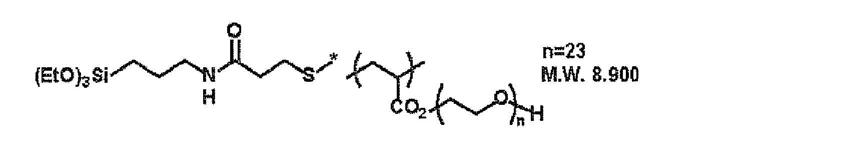 |
| (II-60) | 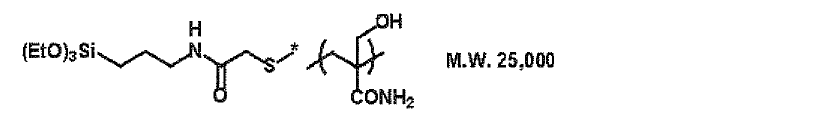 |

| | |
|---|---|
| (II-61) | 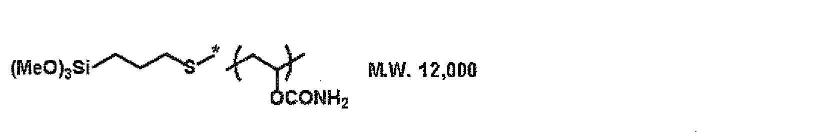 |
| (II-62) | 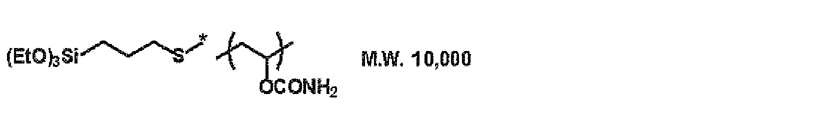 |
| (II-63) | 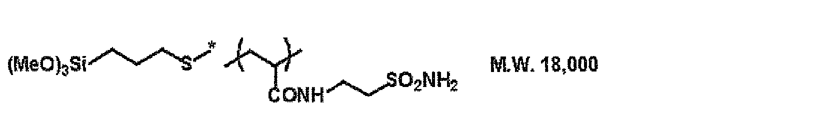 |
| (II-64) | 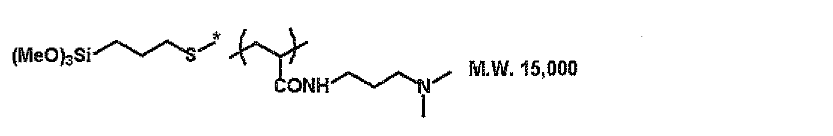 |
| (II-65) | 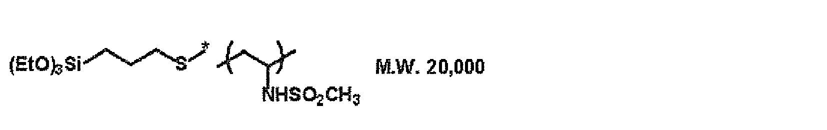 |
| (II-66) | 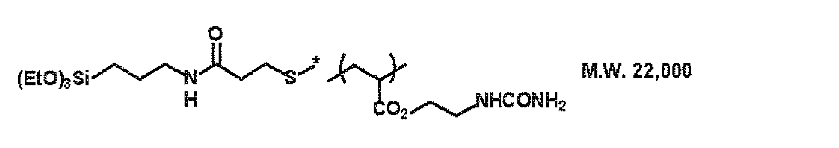 |
| (II-67) | 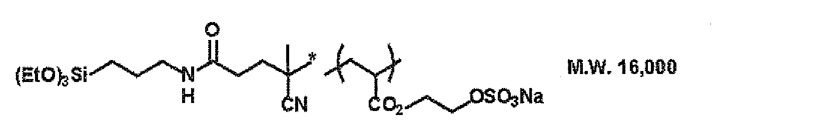 |
| (II-68) | 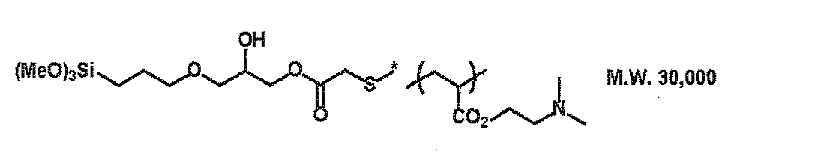 |
| (II-69) | 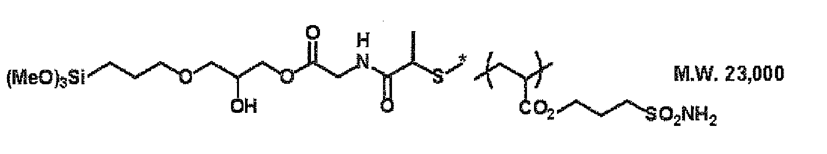 |
| (II-70) | 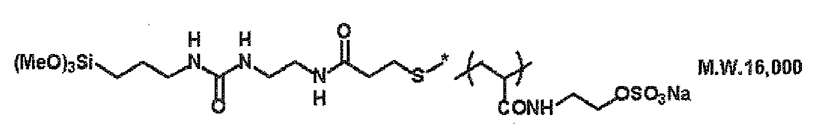 |

| | |
|---|---|
| (II-71) | 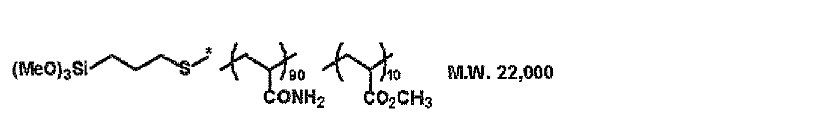 |
| (II-72) | 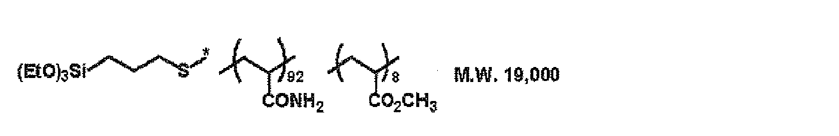 |
| (II-73) | 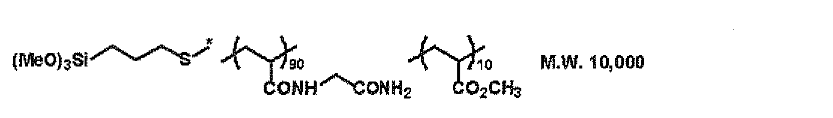 |
| (II-74) | 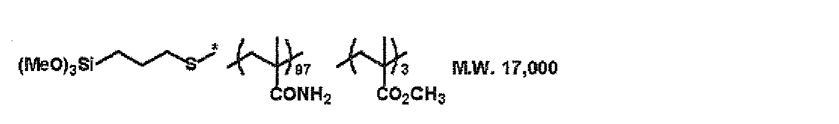 |
| (II-75) | 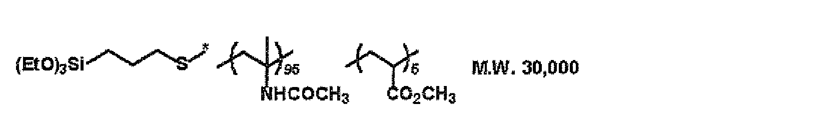 |
| (II-76) | 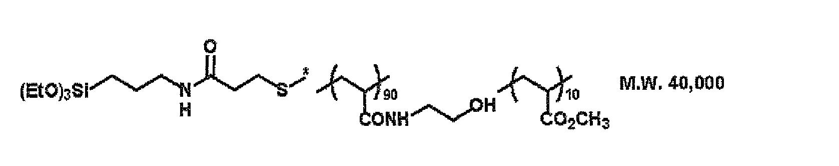 |
| (II-77) | 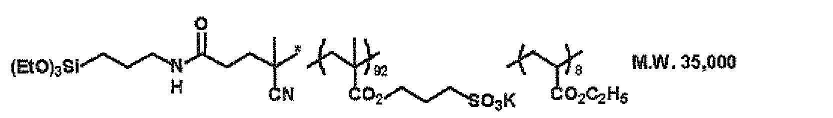 |
| (II-78) | 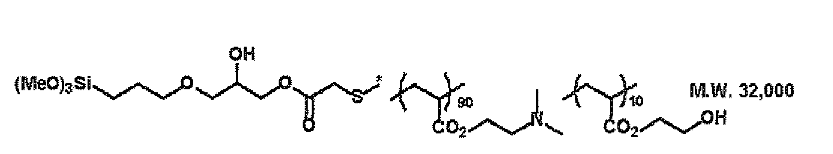 |
| (II-79) | 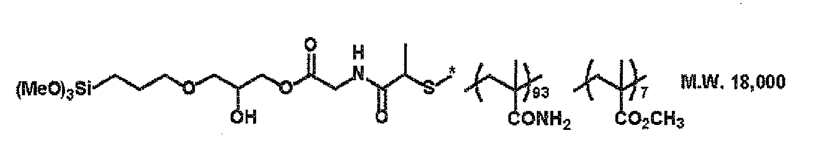 |
| (II-80) | 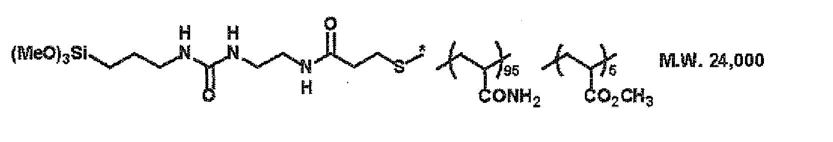 |

| | |
|---|---|
| (II-81) | 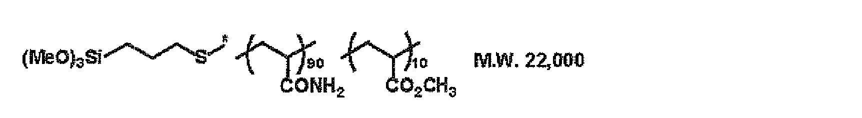 |
| (II-82) | 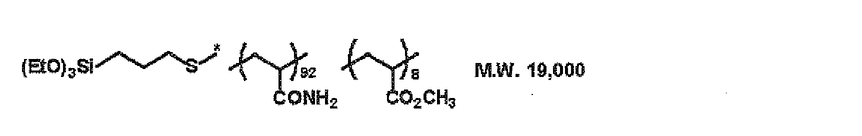 |
| (II-83) | 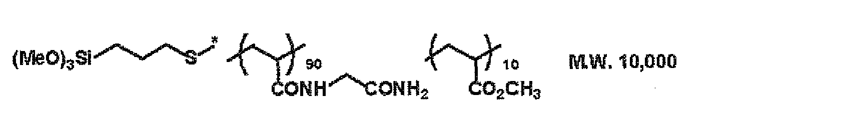 |
| (II-84) | 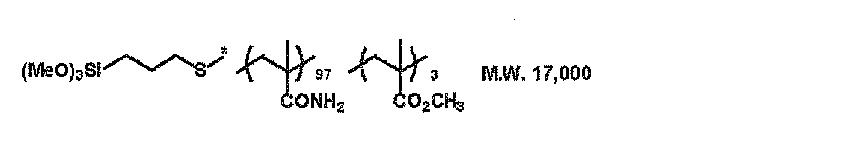 |
| (II-85) | 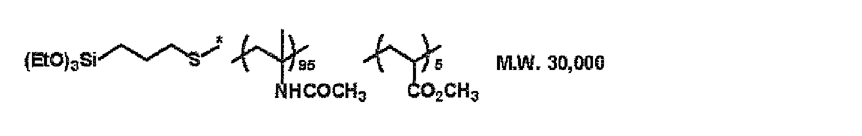 |
| (II-86) | 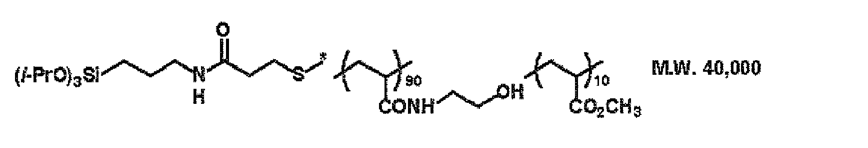 |
| (II-87) | 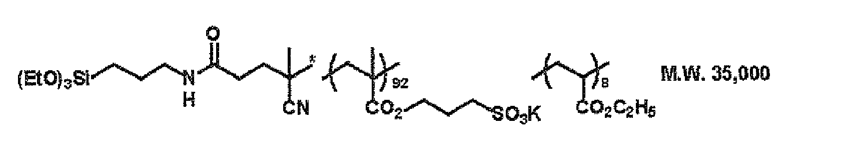 |
| (II-88) | 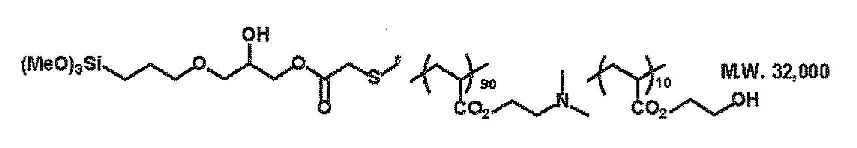 |
| (II-89) | 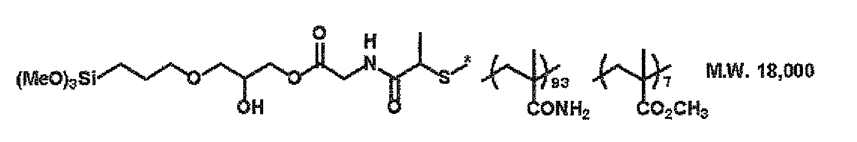 |
| (II-90) | 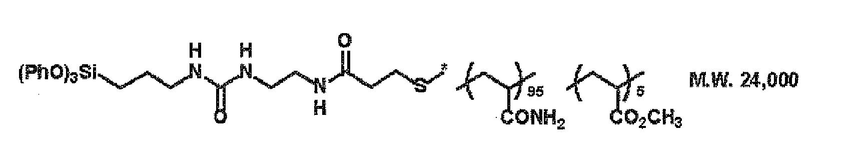 |

| | |
|---|---|
| (II-91) | 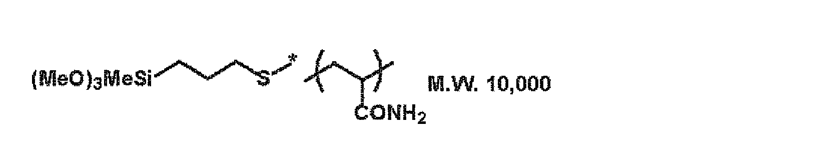 |
| (II-92) | 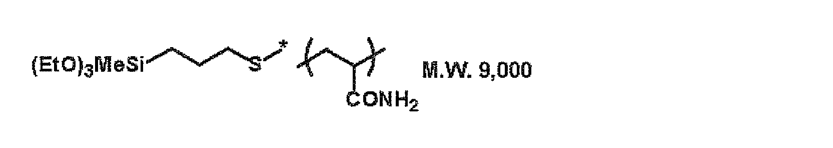 |
| (II-93) | 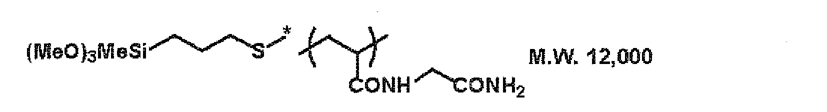 |
| (II-94) | 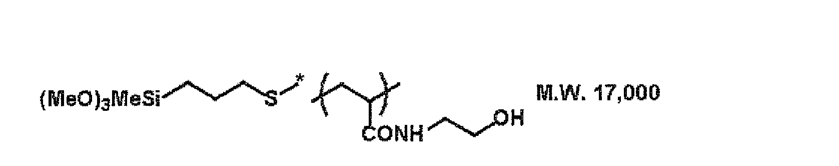 |
| (II-96) | 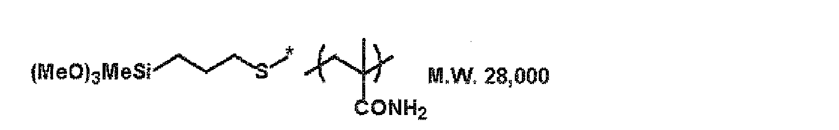 |
| (II-96) | 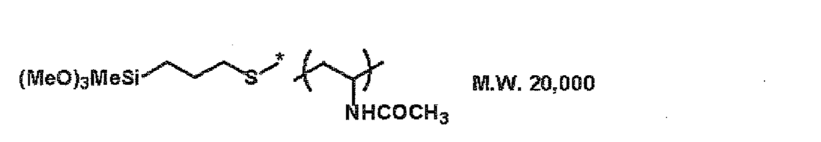 |
| (II-97) | 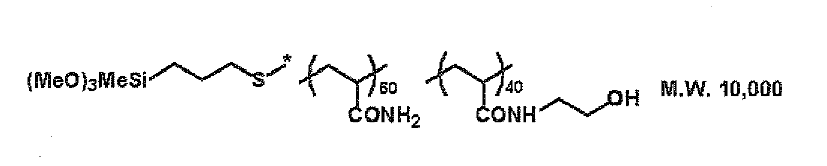 |
| (II-98) | 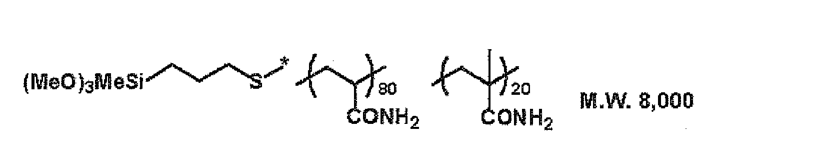 |
| (II-99) | 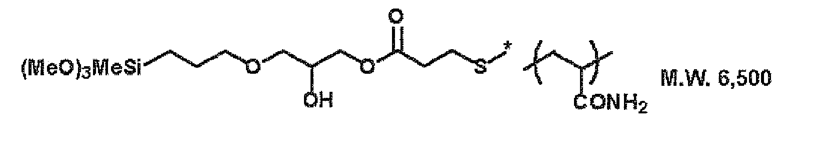 |
| (II-100) | 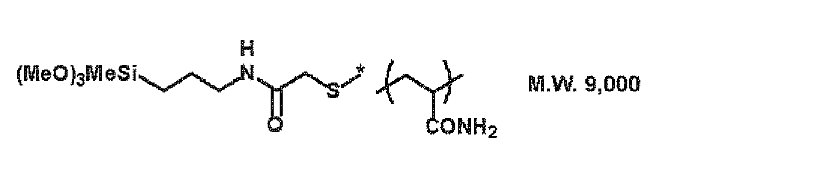 |

| | | weight-average molecular weight |
|---|---|---|
| (II-101) | 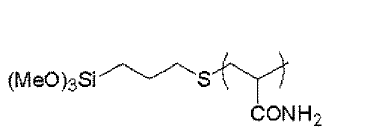 | 5,000 |
| (II-102) | 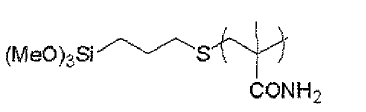 | 6,000 |
| (II-103) | 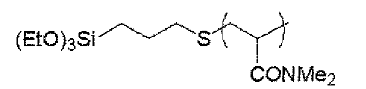 | 10,000 |
| (II-104) | 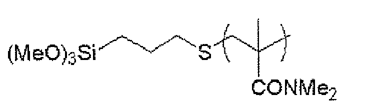 | 8,000 |
| (II-105) | 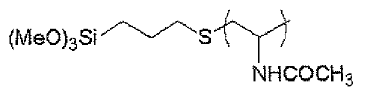 | 15,000 |
| (II-106) | 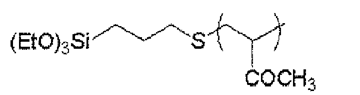 | 10,000 |
| (II-107) | 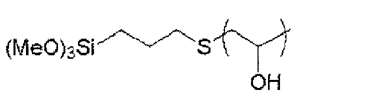 | 30,000 |
| (II-108) | 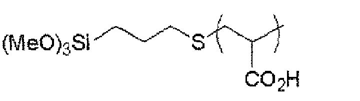 | 5,000 |
| (II-109) | 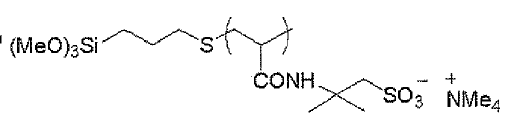 | 10,000 |
| (II-110) | 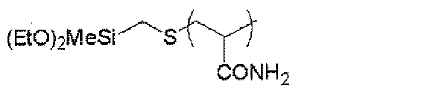 | 20,000 |
| (II-111) | 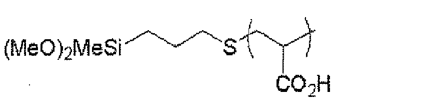 | 7,000 |
| (II-112) | 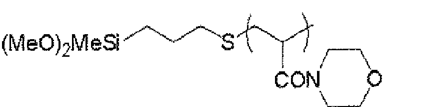 | 15,000 |
| (II-113) | 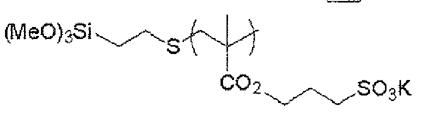 | 5,000 |

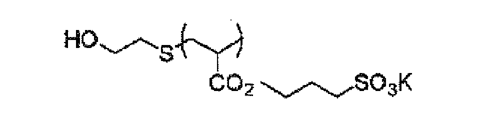

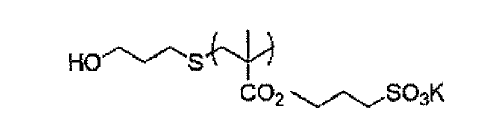

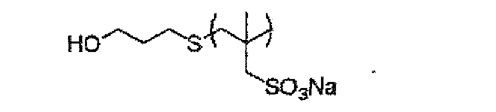

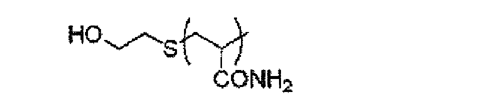

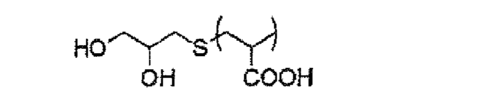

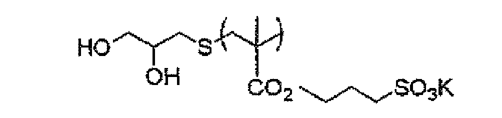

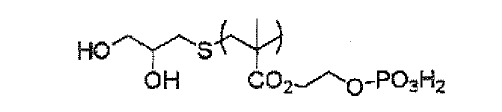

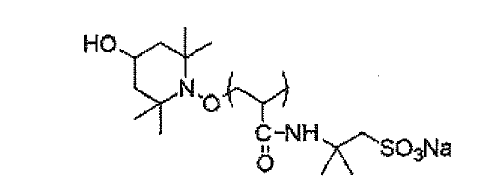

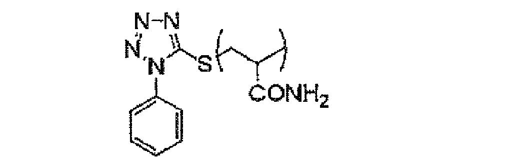

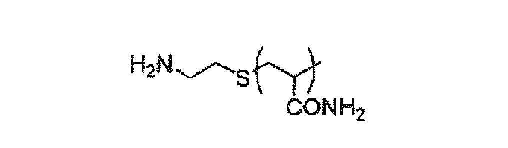

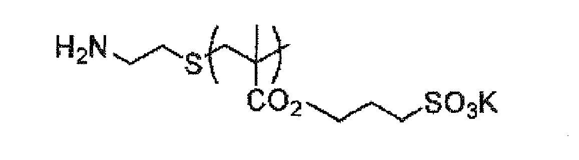

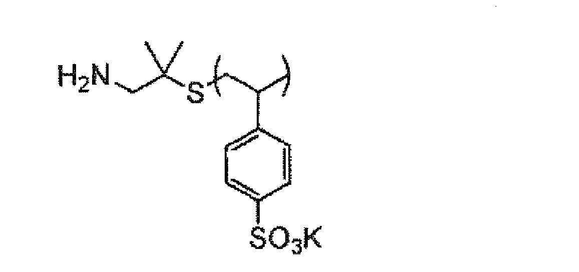

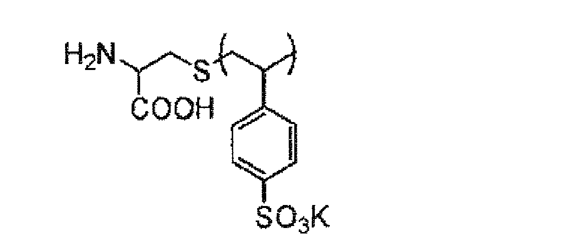

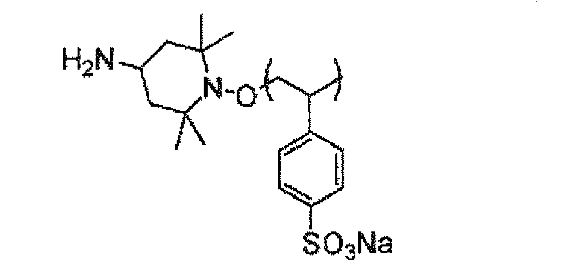

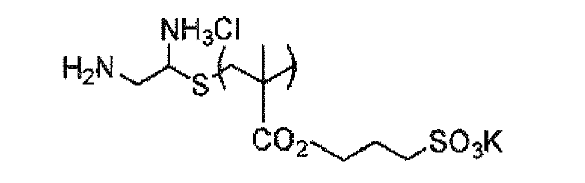

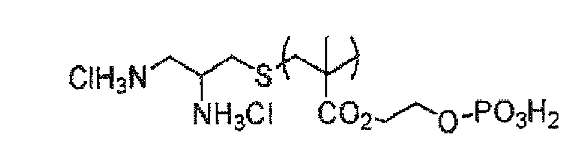

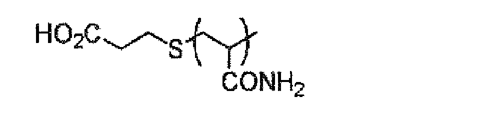

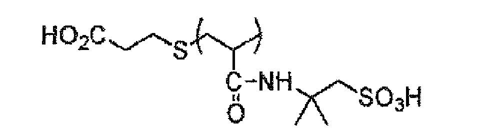

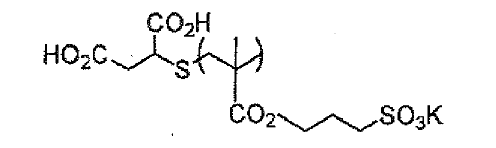

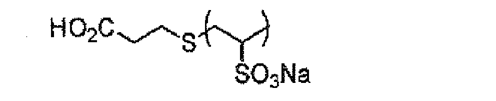

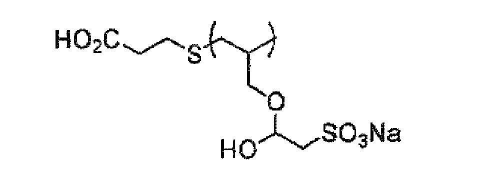

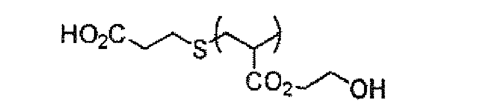

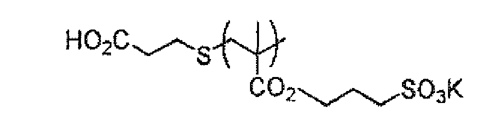

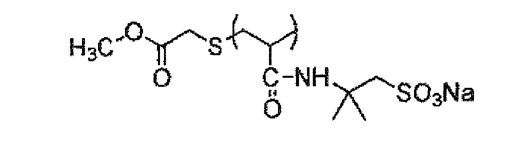

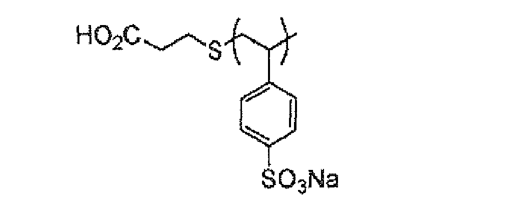

The above-exemplified hydrophilic polymers can be synthesized by, for example, radical polymerization of a radical polymerizable monomer represented by the following general formula (i) using a silane coupling agent having chain transfer ability in radical polymerization and being represented by the following general formula (ii). Since the silane coupling agent (ii) has chain transfer ability, a polymer in which a silane coupling group is introduced into an end of the polymer main chain in the radical polymerization can be synthesized.

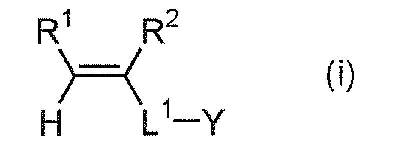

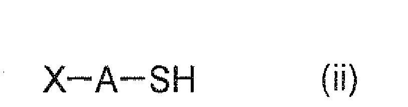

In the foregoing formulae (i) and (ii), A, R¹ to R², L¹, Y, and X are the same as defined with those in the foregoing general formula (II). These compounds are commercially available or can be easily synthesized.

The proportion of the hydrophilic polymer having at least the structural unit represented by the general formula (I-a) and the structural unit represented by the general formula (I-b) (hydrophilic polymer I) to the hydrophilic polymer having the structure represented by the foregoing general formula (II) (hydrophilic polymer II) (hydrophilic polymer I/hydrophilic polymer II) is preferably from 50/50 to 95/5 by weight.
In case when the content of the hydrophilic polymer having at least the structural unit represented by the general formula (I-a) and the structural unit represented by the general formula (I-b) is too small, i.e., the content of the hydrophilic polymer having the structure represented by the general formula II is too large, there results insufficient water resistance. Additionally, the term "non-volatile components" as used herein means components excluding volatile solvents.

### [(B) Additives having antifungal action]

As to kinds of fungi, penicillium, Aspergillus niger, yellow fungi, Rhizopus stolonifer, powdery fungi, and Altenaria are generally known and, as additives for controlling fungal growth, there are the following ones which can be used in the invention. For example, there can be illustrated organic, inorganic, and natural antibacterial agents (also referred to as antifungal agents), and known ones can be used without any limitation. Some of them are described below. It is preferred to use those compounds which do not reduce hydrophilicity of the hydrophilic member, and those compounds which comprise at least one compound selected from among water-soluble organic compounds and silver based inorganic compounds.
For example, as antifungal agents usable in the invention, those compounds which are described in the antibacterial/antifungal technologies published by Toray Research Center Inc. can be used.
The following examples are illustrated.

### (Organic antibacterial agent)

Examples of the organic antimicrobial agent include phenol ether derivatives, imidazole derivatives, sulfone derivatives, N-haloalkylthio compounds, anilide derivatives, pyrrole derivatives, quaternary ammonium salts, pyridine based compounds, triazine based compounds, benzisothiazoline based compounds, and isothiazoline based compounds.
Specific examples thereof include 2-(4-thiocyanomethyl)benzimidazole, 1,2-benzothiazolone, 1,2-benzisothiazolin-3-one, N-fluorodichloromethylthiophthalimide, 2,3,5,6-tetra-chloroisophthalonitrile, N-trichloromethylthio-4-cyclohexene-1,2-dicarboxyimide, copper 8-quinolinate, bis(tributyltin) oxide, 2-(4-thiazolyl)benzimidazole (hereinafter referred to as "TBZ"), methyl 2-benzimidazole carbamate (hereinafter referred to as "BCM"), 10,10'-oxybisphenoxy arsine (hereinafter referred to as "OBPA"), 2,3,5,6-tetrachloro-4-(methylsulfone)pyridine, bis(2-pyridylthio-1-oxide)zinc (hereinafter referred to as "ZPT"), N,N-dimethyl-N'-(fluorodichloromethylthio)-N'-phenylsulfamide(dichlorofluanide), poly(hexa-methylenebiguanide) hydrochloride, dithio-2,2'-bis(benzmethylamide), 2-methyl-4,5-trimethylene-4-isothiazolin-3-one, 2-bormo-2-nitro-1,3-propanediol, hexahydro-1,3-tris(2-hydroxyethyl)-s-triazine, p-chloro-m-xylenol, 1,2-benzisothiazolin-3-one, and methylphenol.
These organic antibacterial agents can be properly chosen and used while taking into consideration hydrophilicity, water resistance, sublimation properties, safety, etc. Of the organic antibacterial agents, 2-(4-thiocyanomethyl)benzimidazole, 1,2-benzothiazolone, methylphenol, TBZ, BCM, OBPA, and ZPT are preferred in view of hydrophilicity, anti-bacterial effect, and cost.

### (Inorganic antibacterial agent)

Mercury, silver, copper, zinc, iron, lead, and bismuth can be exemplified in the order of a high sterilization effect. Examples thereof include antibacterial agents obtained by supporting a metal (for example, silver, copper, zinc, or nickel) or a metal ion thereof on a silicate based carrier, a phosphate based carrier, an oxide, glass, potassium titanate, an amino acid, etc. Examples thereof include zeolite based antibacterial agents, calcium silicate based antibacterial agents, zirconium phosphate based antibacterial agents, calcium phosphate based antibacterial agents, zinc oxide based antibacterial agents, soluble glass based antibacterial agents, silica gel based antimicrobial agents, active carbon based antibacterial agents, titanium oxide based antibacterial agents, titania based antimicrobial agents, organometallic antibacterial agents, ion exchanger ceramic based antibacterial agents, stratiform phosphate-quaternary ammonium based antibacterial agents, and antibacterial stainless steel. Silver based antibacterial agents and water-soluble organic antibacterial agents are most preferred. In particular, silver silicate zeolite wherein silver is supported on a silicate based carrier of zeolite, and silver supported on silica gel are preferred.

### (Natural antibacterial agent)

Examples of natural antibacterial agents include chitosan which is a basic polysaccharide obtained by hydrolysis of chitin contained in crustaceans such as crabs and shrimps. A trade name "HOLON KILLER BEADS CELLER" of Nikko Co., which is composed of an amino metal having a metal bonded to both sides of an amino acid, is preferred.

Of the foregoing organic, inorganic, and natural antibacterial agents, at least one selected from among methylphenol, TBZ, BCM, OBPA, ZPT, and silver silicate zeolite is particularly preferred, with at least one selected from among TBZ, BCM, OBPA, ZPT, and silver silicate zeolite being most preferred.
These have a high compatibility with the hydrophilic composition of the invention and can be uniformly dispersed in a hydrophilic coated film, and hence the antifungal agents do not dissolve into water in a water resistance test, thus showing excellent antifungal property even after the water resistance test.
Also, by using an antibacterial agent which is generally a low-molecular compound in combination with a surfactant to be described hereinafter, both the antibacterial agent and the surfactant are allowed to migrate together, which is considered to impart effective antibacterial effect to the surface without seriously decreasing hydrophilicity. The molecular weight of the antibacterial agent is preferably from 200 to 1,000, more preferably from 300 to 700. When the molecular weight of the antibacterial agent is 200 or more, the agent does not bleed out upon drying of the film, thus being preferred. Also, when the molecular weight is 1,000 or less, the antibacterial agent uniformly disperses in the film to exhibit large effect, thus being preferred.

The content of the additive having the antifungal property is generally from 0.001 to 10% by weight, more preferably from 0.005 to 5% by weight, still more preferably from 0.01 to 3% by weight, particularly preferably from 0.02 to 1.5% by weight, most preferably from 0.05 to 1% by weight, based on to the weight of the whole solids in the hydrophilic composition. When the content of the antibacterial agent is 0.001% by weight or more, excellent antibacterial effect can be obtained. Also, when the content of the antibacterial agent is 10% by weight or less, the hydrophilicity is not reduced, and sufficient antifungal function is exhibited. Also, the additives having the antifungal property to be contained in the hydrophilic composition may be used alone or in combination of two or more thereof.
As a method for evaluating antifungal effect using such antifungal agent, the antifungal test according to JIS-Z2911 may be employed as well as the visual judgement described in Examples of this specification.

### [(C) Metal element selected from among Si, Ti, Zr, and A1]

It is preferred that the metal element (C) selected from among Si, Ti, Zr, and Al, which is preferably used in the invention, is used by adding an alkoxide compound of a metal element selected from among Si, Ti, Zr, and Al (hereinafter also referred to as "metal alkoxide compound (C)" or "alkoxide compound (C)") to the hydrophilic composition.
The metal alkoxide compound is a hydrolyzable, polymerizable compound having a polymerizable functional group in the structure thereof and functioning as a cross-linking agent and, when polycondensed with the hydrophilic polymer (A), it forms a firm film having a cross-linked structure.
Also, the cross-linked structure in which the metal alkoxide compound is hydrolyzed and polycondensed forms a film which is a cured film having high cross-linkage density and which is excellent in strength and satisfactory in durability. For that reason, it is possible to always provide a normal hydrophilic layer surface without causing a problem that the hydrophilic surface provided on a substrate such as a glass substrate or a plastic substrate generates a fault such as cracking upon bending during handling in the manufacture or the like.

The metal alkoxide compound (C) that can be used in the invention is a hydrolyzable and polymerizable compound having, in its structure, a functional group capable of hydrolysis and polycondensation to perform the function as a cross-linking agent. The metal alkoxide molecules per se are polycondensed with each other to form a tough cross-linked film having a cross-linked structure while forming chemical bonds with the hydrophilic polymer. The metal alkoxide can be represented by formula (I-1) or (1-2), wherein R¹⁰ represents a hydrogen atom, an alkyl group or an aryl group, R¹¹ represents an alkyl group or an aryl group, Z represents Si, Ti or Zr, and m represents an integer of from 0 to 2. When R¹⁰ and R¹¹ each represents an alkyl group, the carbon atom number of the alkyl group is preferably from 1 to 4. The alkyl group and the aryl group may each have a substituent, and examples of the substituent which can be introduced include a halogen atom, an amino group, and a mercapto group. This compound is preferably a low-molecular weight compound having a molecular weight of not more than 2,000.

(R¹⁰)ₘ-Z-(OR¹¹)4-ₘ (I-1)

Al-(OR¹¹)₃ (I-2)

Specific examples of the hydrolyzable compounds represented by the general formulae (I-1) and (1-2) will be given below, but the invention is not limited thereto.
In the case where Z represents Si, that is, silicon is contained in the hydrolyzable compound, examples thereof include trimethoxysilane, tetramethoxysilane, tetraethoxysilane, tetrapropoxysilane, methyltrimethoxysilane, dimethyldimethoxysilane, γ-chloropropyltriethoxysilane, γ-mercaptopropyltrimethoxysilane, γ-aminopropyltriethoxysilane, phenyltrimethoxysilane, and diphenyldiethoxysilane. Of these, trimethoxysilane, tetramethoxysilane, tetraethoxysilane, methyltrimethoxysilane, dimethyldimethoxysilane, and phenyltrimethoxysilane are particularly preferred.

In the case where Z represents Ti, that is, titanium is contained in the hydrolyzable compound, examples thereof include trimethoxy titanate, tetramethoxy titanate, triethoxy titanate, tetraethoxy titanate, tetrapropoxy titanate, chlorotrimethoxy titanate, chlorotriethoxy titanate, ethyltrimethoxy titanate, methyltriethoxy titanate, ethyltriethoxy titanate, diethyldiethoxy titanate, phenyltrimethoxy titanate, and phenyltriethoxy titanate. In the case where Z represents Zr, namely zirconium is contained in the hydrolyzable compound, examples thereof include zirconates corresponding to the above-exemplified titanium-containing compounds.
Also, in the case where the center metal is Al, that is, aluminum is contained in the hydrolyzable compound, examples thereof include trimethoxy aluminate, triethoxy aluminate, tripropoxy aluminate, and triisopropoxy aluminate.
Of the metal alkoxides, alkoxides of Si are preferred from the viewpoint of reactivity, easiness of availability, and film properties. Specifically, compounds which can be used as silane coupling agents can preferably be used.

The metal alkoxide compound (C) in accordance with the invention may be used singly or in combination of two or more kinds thereof.
The metal alkoxide compound (C) is preferably used in an amount in the range of 50% by weight or less, preferably 20% by weight or less, based on the weight of solid components in the hydrophilic composition.
The metal alkoxide compound is readily available as a commercial product and is also obtainable by a known synthesis method, for example, a reaction between each metal chloride and an alcohol.

### [(D) Curing catalyst]

In the hydrophilic composition of the invention, by dissolving the hydrophilic polymer (A), the additive (B) having antifungal action and, preferably further, a cross-linking component such as the metal alkoxide compound (C) in a solvent and well stirring the solution, these components are hydrolyzed and polycondensed to form an organic/inorganic hybrid sol liquid, and a hydrophilic film having high hydrophilicity and high film strength is formed by this sol liquid. In preparing the organic/inorganic hybrid sol liquid, it is preferred to use a catalyst (D) in order to accelerate the hydrolysis and polycondensation reaction. Use of the catalyst allows to set up the drying temperature for forming the hydrophilic layer film at a low level, which serves to suppress thermal change of the antibacterial agent or thermal deformation on the substrate.
As the catalyst (D) which can be used in the invention, a catalyst capable of hydrolyzing and polycondensing the foregoing alkoxide compound (C) and accelerating a reaction for forming a linkage with the hydrophilic polymer (A) is chosen. As the catalyst (C), an acidic or basic compound is used as it is; or an acidic or basic compound is used in a state that it is dissolved in a solvent such as water and alcohols (these catalysts will be hereinafter also referred to inclusively as "acidic catalyst" and "basic catalyst", respectively). In dissolving the acidic or basic compound in a solvent, its concentration is not particularly limited and may be properly chosen depending upon characteristics of the acidic or basic compound to be used, a desired content of the catalyst, etc. Here, in the case where the concentration of the acidic or basic compound which constitutes the catalyst is high, the rate of hydrolysis and polycondensation tends to become fast. However, when a basic catalyst of a high concentration is used, there may be a possibility that a precipitate is formed in the sol solution. Therefore, when the basic catalyst is used, its concentration is desirably not more than 1 N as calculated in terms of a concentration in the aqueous solution.

The kind of the acidic catalyst or basic catalyst is not particularly limited. When it is required to use a catalyst having a high concentration, a catalyst constituted of an element which does not substantially remain in the coating film after drying is desirable. Specifically, examples of the acidic catalyst include hydrogen halides (such as hydrochloric acid), nitric acid, sulfuric acid, sulfurous acid, hydrogen sulfide, perchloric acid, hydrogen peroxide, carbonic acid, carboxylic acids (such as formic acid and acetic acid), substituted carboxylic acids represented by the structural formula of RCOOH wherein R is substituted with other element or a substituent, and sulfonic acids (such as benzenesulfonic acid); and examples of the basic compound include ammoniacal bases (such as aqueous ammonia) and amines (such as ethylamine and aniline).

Also, in addition to the foregoing catalysts, a Lewis acid catalyst composed of a metal complex can be preferably used. Metal complexes composed of a metal element selected from Groups 2A, 3B, 4A and 5A of the periodic table, and an oxo or hydroxy oxygen-containing compound selected from β-diketones, ketoesters, hydroxycarboxylic acids and their esters, amino alcohols and enolic active hydrogen compounds are especially preferred metal complex catalysts.
Of the constituent metal elements, preferred are elements of Group 2A such as Mg, Ca, Sr, and Ba; elements of Group 3B such as Al and Ga; elements of Group 4A such as Ti and Zr; and elements of Group 5A such as V, Nb, and Ta. They may form complexes having an excellent catalytic effect. Of those, complexes with any of Zr, Al and Ti are excellent and therefore preferred.

Examples of the oxo or hydroxy oxygen-containing compound constituting the ligand of the above metal complex usable in the invention include β-diketones such as acetylacetone (2,4-pentanedione) and 2,4-heptanedione, ketoesters such as methyl acetoacetate, ethyl acetoacetate, and butyl acetoacetate, hydroxycarboxylic acids and esters thereof such as lactic acid, methyl lactate, salicylic acid, ethyl salicylate, phenyl salicylate, malic acid, tartaric acid and methyl tartrate, ketoalcohols such as 4-hydroxy-4-methyl-2-pentanone, 4-hydroxy-2-pentanone, 4-hydroxy-4-methyl-2-heptanone, and 4-hydroxy-2-heptanone, amino alcohols such as monoethanolamine, N,N-dimethylethanolamine, N-methyl-monoethanolamine, diethanolamine, and triethanolamine, enolic active compounds such as methylolmelamine, methylolurea, methylolacrylamide, and diethyl malonate, and compounds derived from acetylacetone (2,4-pentanedione) by introducing a substituent into the methyl group, the methylene group, or the carbonyl carbon thereof.

Acetylacetone or acetylacetone derivatives are preferred for the ligand. In the present invention, the term "acetylacetone derivatives" mean compounds derived from acetylacetone by introducing a substituent into the methyl group, the methylene group, or the carbonyl carbon thereof. Examples of the substituent for the methyl group of acetylacetone include linear or branched alkyl groups, acyl groups, hydroxyalkyl groups, carboxyalkyl groups, alkoxy groups, and alkoxyalkyl groups each having from 1 to 3 carbon atoms. Examples of the substituent for the methylene group of acetylacetone include carboxyl groups, and linear or branched carboxyalkyl groups and hydroxyalkyl groups, each having from 1 to 3 carbon atoms. Examples of the substituent for the carbonyl carbon of acetylacetone include alkyl groups having from 1 to 3 carbon atoms, and in this case, a hydrogen atom may be attached to the carbonyl oxygen to form a hydroxyl group.

Preferred specific examples of the acetylacetone derivative include ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol.

Of those, acetylacetone and diacetylacetone are especially preferred. The complex of the above acetylacetone derivative and the above metal element is a mononuclear complex having from 1 to 4 molecular ligands of the acetylacetone derivative per one metal element therein. In case where the number of the coordinable chemical bonds of the metal element is greater than the total number of the coordinable chemical bonds of the acetylacetone derivative, any ordinary ligand generally used in ordinary complexes, such as water molecule, halide ion, nitro group or ammonio group, may be coordinated in the complex.

Preferred examples of the metal complex include tris(acetylacetonato)aluminum complex, di(acetylacetonato)aluminum/aquo complex, mono(acetylacetonato)aluminum/chloro complex, di(diacetylacetonato)aluminum complex, ethylacetoacetate aluminum diisopropylate, aluminum tris(ethylacetoacetate), cyclic aluminum oxide isopropylate, tris(acetylacetonato)barium complex, di(acetylacetonato)titanium complex, tris(acetylacetonato)titanium complex, di-i-propoxy/bis(acetylacetonato)titanium complex, zirconium tris(ethylacetoacetate), and zirconium tris(benzoate) complex. They are excellent in stability in water-based coating liquids and gelation promoting effect in sol-gel reaction upon heating and drying. Of those, ethylacetoacetate aluminum diisopropylate, aluminum tris(ethylacetoacetate), di(acetylacetonato)titanium complex, and zirconium tris(ethylacetoacetate) are especially preferred.

Description of the counter salt of the above-mentioned metal complex is omitted in this specification. Regarding its kind, the counter salt may be any water-soluble salt capable of keeping the charge of the complex compound neutral. For example, nitrates, hydrohalides, sulfates, phosphates and the like capable of securing stoichiometric neutrality of the complex can be used. The behavior of the metal complex in a silica sol-gel reaction is described in detail in J. Sol-Gel, Sci. and Tec., 16, 209 (1999). For its reaction mechanism, the following scheme may be presumed. Specifically, in a coating liquid, the metal complex has a coordination structure and is therefore stable. In the dehydration condensation reaction that starts in the heating and drying step after coating, the metal complex is presumed to promote crosslinking by utilizing its mechanism like that of an acid catalyst. Anyway, use of the metal complex can satisfy all of the improvement in long-term stability of the coating liquid and the film surface quality, and high hydrophilicity and high durability.

The catalyst (D) is used in an amount in the range of preferably from 0 to 50% by weight, more preferably from 5 to 25% by weight, in terms of a non-volatile component in the hydrophilic composition of the invention. The catalyst (D) may be used alone or in combination of two or more kinds thereof.

The hydrophilic composition to be used in the invention contains the hydrophilic polymer (A) and the antifungal agent (B) and preferably further contains the metal alkoxide (C) and the catalyst (D). Furthermore, various compounds can be used jointly depending upon the purpose so far as the effects of the invention are not spoiled. The components which can be used jointly (other additives (E)) will be described below.

### [(E) Additives]

### (Surfactant)

In the invention, in order to enhance film surface properties of the foregoing hydrophilic composition, it is preferred to use a surfactant. Examples of the surfactant include nonionic surfactants, anionic surfactants, cationic surfactants, amphotelic surfactants, and fluorine-containing surfactants.

The nonionic surfactant to be used in the invention is not particularly limited, and conventionally known nonionic surfactants can be used. Examples thereof include polyoxyethylene alkyl ethers, polyoxyethylene alkylphenyl ethers, polyoxyethylene polystyrylphenyl ethers, polyoxyethylene polyoxypropylene alkyl ethers, glycerin fatty acid partial esters, sorbitan fatty acid partial esters, pentaerythritol fatty acid partial esters, propylene glycol mono-fatty acid esters, sucrose fatty acid partial esters, polyoxyethylene sorbitan fatty acid partial esters, polyoxyethylene sorbitol fatty acid partial esters, polyethylene glycol fatty acid esters, polyglycerin fatty acid partial esters, polyoxyethylenated castor oils, polyoxyethylene glycerin fatty acid partial esters, fatty acid diethanolamides, N,N-bis-2-hydroxyalkylamines, polyoxyethylene alkylamines, triethanolamine fatty acid esters, trialkylamine oxides, polyethylene glycol, and a copolymer of polyethylene glycol and polypropylene glycol.

The anionic surfactant to be used in the invention is not particularly limited, and conventionally known anionic surfactants can be used. Examples thereof include fatty acid salts, abietic acid salts, hydroxyalkanesulfonic acid salts, alkanesulfonic acid salts, straight-chain alkylbenzenesulfonic acid salts, branched alkylbenzenesulfonic acid salts, alkylnaphthalenesulfonic acid salts, alkylphenoxypolyoxyethylene propylsulfonic acid salts, polyoxyethylene alkylsulfophenyl ether salts, N-methyl-N-oleyltaurin sodium salt, N-alkylsulfosuccinic acid monoamide disodium salts, petroleum sulfonic acid salts, sulfated beef tallow oil, sulfuric ester salts of a fatty acid alkyl ester, alkylsulfuric ester salts, polyoxyethylene alkyl ether sulfuric ester salts, fatty acid monoglyceride sulfuric ester salts, polyoxyethylene alkylphenyl ether sulfuric ester salts, polyoxyethylene styrylphenyl ether sulfuric ester salts, alkylphosphoric ester salts, polyoxyethylene alkyl ether phosphoric ester salts, polyoxyethylene alkylphenyl ether phosphoric ester salts, a partially saponified product of a styrene/maleic anhydride copolymer, a partially saponified product of an olefin/maleic anhydride copolymer, and naphthalenesulfonic acid salt formalin condensates.

The cationic surfactant to be used in the invention is not particularly limited, and conventionally known cationic surfactants can be used. Examples thereof include alkylamine salts, quaternary ammonium salts, polyoxyethylene alkylamine salts, and polyethylene polyamine derivatives.
The amphoteric surfactant to be used in the invention is not particularly limited, and conventionally known ampholytic surfactants can be used. Examples thereof include carboxybetaines, aminocarboxylic acids, sulfobetaines, aminosulfuric esters, and imidazolines.
Additionally, in the foregoing surfactants, the term "polyoxyethylene" can also be given a different reading as "polyoxyalkylene", for example, polyoxymethylene, polyoxypropylene, and polyoxybutylene. In the invention, those surfactants can also be used.

Examples of the fluorine-containing surfactant to be used in the invention include fluorine-containing surfactants containing a perfluoroalkyl group in the molecule thereof. Examples of such a fluorine-containing surfactant include anionic types such as perfluoroalkylcarboxylic acid salts, perfluoroalkylsulfonic acid salts, and perfluoraalkylphosphoric esters; amphoteric types such as perfluoroalkylbetaines; cationic types such as perfluoroalkyltrimethylammonium salts; and nonionic types such as perfluoroalkylamine oxides, perfluoroalkyl ethylene oxide adducts, oligomers containing a perfluoroalkyl group and a hydrophilic group, oligomers containing a perfluoroalkyl group and a lipophilic group, oligomers containing a perfluoroalkyl group, a hydrophilic group and a lipophilic group, and urethanes containing a perfluoroalkyl group and a lipophilic group. Also, fluorine-containing surfactants described in JP-A-62-170950, JP-A-62-226143, and JP-A-60-168144 can be preferably exemplified.
The surfactant is more preferably an anionic surfactant.
The surfactant is preferably used in an amount in the range of from 0.001 to 10% by weight, more preferably from 0.01 to 5% by weight in terms of a non-volatile component in the hydrophilic composition of the invention. Also, the surfactants can be used alone or in combination of two or more kinds thereof.

Specific examples of preferred surfactants will be shown below. However, the invention is not limited only to them.

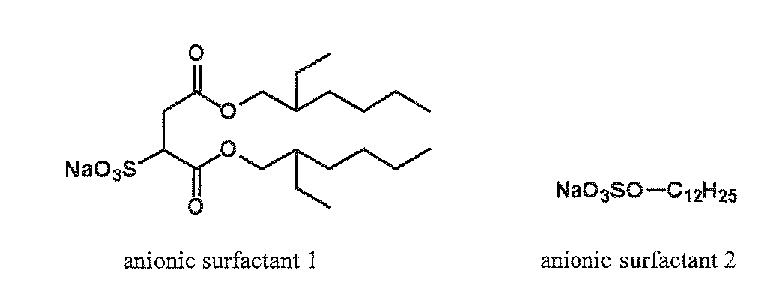

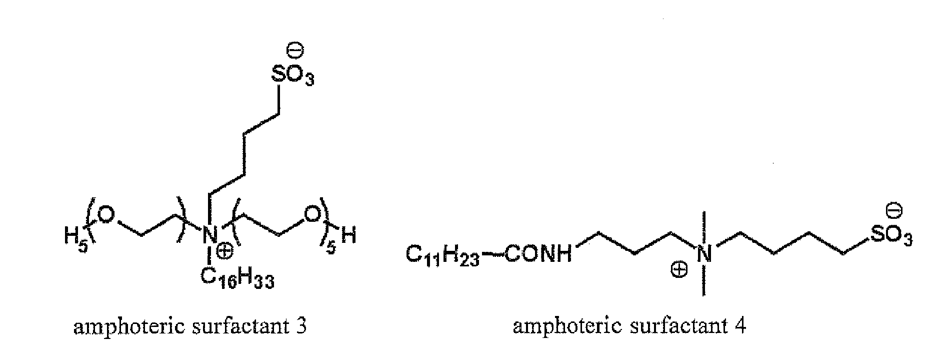

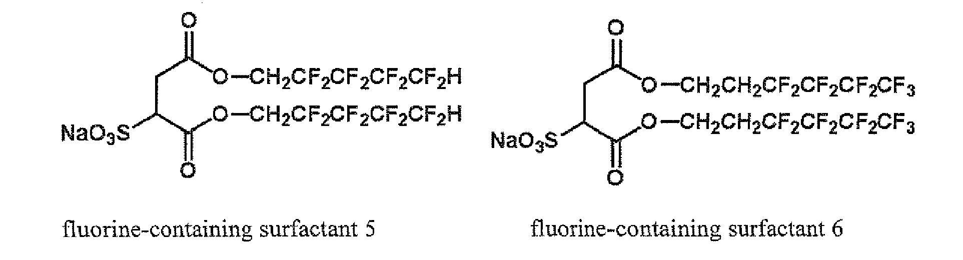

A more hydrophilic surface can be formed by using in combination the surfactant and the hydrophilic polymer having at least the structural unit represented by the foregoing general formula (I-a) and the structural unit represented by the foregoing general formula (I-b). Although its mechanism has not been sufficiently clarified, it is presumed that, as the surfactant which is a low-molecular weight compound migrates into the coated film surface layer in the course of drying of the coated film, the hydrophilic segment in the polymer segment is attracted to the hydrophilic moiety of the surfactant, thus high hydrophilicity being obtained.

### [Inorganic fine particles]

The hydrophilic composition of the invention may contain inorganic fine particles for the purposes of enhancing the cured film strength and hydrophilicity of the hydrophilic film to be formed. Preferred examples of the inorganic fine particles include silica, alumina, magnesium oxide, titanium oxide, magnesium carbonate, calcium alginate, and mixtures thereof.
The inorganic fine particles preferably have an average particle size of from 5 nm to 10 µm, more preferably from 0.5 to 3 µm. When the particle size of the inorganic fine particles falls within the foregoing range, it is possible to form a film with excellent hydrophilicity in which the inorganic fine particles are stably dispersed in the hydrophilic layer and the film strength of the hydrophilic layer is sufficiently kept. The foregoing inorganic fine particles are readily available as a commercial product such as a colloidal silica dispersion.

The inorganic fine particles in accordance with the invention is preferably used in an amount in the range of 20% by weight or less, more preferably 10% by weight or less in terms of a non-volatile component in the hydrophilic composition of the invention. Also, the inorganic fine particles can be used alone or in combination of two or more kinds thereof.

### [Antioxidant]

For the purpose of improving the stability of the hydrophilic member of the invention, an antioxidant can be added to the coating solution for forming the hydrophilic layer. Examples of the antioxidant include those described in EP-A-223739, EP-A-309401, EP-A-309402, EP-A-310551, EP-A-310552, EP-A-459416, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and U.S. Pat. Nos. 4,814,262 and 4,980,275.
The addition amount of the antioxidant is properly chosen depending upon the purpose and is preferably from 0.1 to 8% by weight in terms of a non-volatile component.

### (High-molecular compound)

Various high-molecular compounds may be added to the coating solution for forming the hydrophilic layer of the hydrophilic member of the present invention in order to control the physical properties of the hydrophilic layer without impairing the hydrophilicity of the layer.
Examples of the high-molecular compounds include acrylic polymers, polyvinyl alcohol resins, polyvinyl butyral resins, polyurethane resins, polyamide resins, polyester resins, epoxy resins, phenolic resins, polycarbonate resins, polyvinyl formal resins, shellac, vinyl resins, acrylic resins, rubber resins, waxes, and other natural resins.
Two or more of these compounds may be used in combination. Of those, vinyl copolymers available through copolymerization of acrylic monomers are preferred. As a copolymerization composition of a high molecular binder, copolymers having, as a structural unit thereof, a "carboxyl-containing monomer", "allyl methacrylate" or "alkyl acrylate" are preferred.

In addition, if desired, the composition may also contain, for example, a leveling additive, a mat agent, a wax for controlling the physical properties of the film, and a tackifier for improving the adhesion properties of the film to a substrate within a range not impairing the hydrophilicity of the film.
Specific examples of the tackifier include high-molecular-weight adhesive polymers described in JP-A-2001-49200, pp. 5-6 (e.g., copolymers composed of an ester of (meth)acrylic acid and an alcohol having an alkyl group with from 1 to 20 carbon atoms, an ester of (meth)acrylic acid and an alicyclic alcohol having from 3 to 14 carbon atoms, and an ester of (meth)acryllc acid and an aromatic alcohol having from 6 to 14 carbon atoms); and low-molecular-weight tackifying resins having a polymerizable unsaturated bond.

### [Preparation of hydrophilic composition]

Preparation of the hydrophilic composition can be carried out by dissolving the hydrophilic polymer (A), the additive (B) having an antifungal action and, preferably, the metal alkoxide compound (C) and the catalyst (D) and, properly, the additive (E) in a solvent and stirring the resulting solution. The catalyst (D) is preferably mixed immediately before coating on the substrate. Specifically, it is preferred that the hydrophilic composition is coated immediately after mixing the catalyst (D) or within a time of up to one hour after mixing the catalyst (D).
In case when the hydrophilic composition is coated after mixing the catalyst (D) and allowing it to stand for a long period of time, the viscosity of the hydrophilic composition increases, whereby a defect such as coating unevenness may possibly be generated.
It is also preferred that other components are mixed immediately before coating the hydrophilic composition. In that case, however, the hydrophilic composition may be stored for a long period of time after mixing these other components.
In the preparation, the reaction temperature is preferably from room temperature to 80°C, and the reaction time, namely a time of continuing stirring, is preferably in the range of from 1 to 72 hours. This stirring allows the hydrolysis and polycondensation of the hydrophilic polymer (A) and the metal alkoxide compound (C) to provide an organic-inorganic hybrid sol liquid.

The solvent which is used in preparing the foregoing hydrophilic composition is not particularly limited so far as it is able to uniformly dissolve and disperse these components therein. The solvent is preferably an aqueous solvent, for example, methanol, ethanol, and water.

As described previously, the preparation of the organic-inorganic hybrid sol liquid (hydrophilic composition) for forming a hydrophilic film from the hydrophilic composition utilizes a so-gel method. The sol-gel method is described in detail in books such as Sumio Sakuhana, Sol-Gel-Ho No Kagaku (Science of Sol-Gel Process), published by Agune Shofu Sha (1988); and Ken Hirashima, Saishin Sol Gel Ho Niyoru Kinosei Hakumaku Sakusei Gijutsu (Functional Thin Film Formation Technology according to Newest Sol-Gel Method), published by General Technology Center (1992). In the invention, the methods described in these documents can be applied to the preparation of the hydrophilic composition.
The hydrophilic member of the invention can be obtained by coating a solution containing such a hydrophilic composition on an adequate substrate and drying the hydrophilic composition. That is, the hydrophilic member of the invention has a hydrophilic film formed by coating the foregoing hydrophilic composition of the invention on a substrate and heating and drying the hydrophilic composition.
In the formation of the hydrophilic film, with respect to the heating and drying condition after coating the solution containing the hydrophilic composition, drying is performed at a temperature in the range of preferably from 10 to 150°C, more preferably from 25 to 100°C from the viewpoint of efficiently of forming a high-density cross-linked structure. In case when the drying temperature is too low, cross-linking reaction does not proceed sufficiently, leading to low coated film strength whereas, in case when the drying temperature is too high, cracks are liable to be formed in the coated film, leading to partially insufficient antifogging properties. The drying time is preferably from 5 minutes to 1 hour, more preferably from 10 minutes to 30 minutes. In case when the drying time is too short, there can result reduced coated film strength due to insufficient drying. In case when the drying time is prolonged more than is necessary, the substrate can be deteriorated.

The hydrophilic member of the invention can be prepared by a known coating method without particular limitations. Examples of the coating method which can be applied include a spray coating method, a dip coating method, a flow coating method, a spin coating method, a roll coating method, a film applicator method, a screen printing method, a bar coater method, painting with a brush, and painting with a sponge.

The thickness of the hydrophilic layer is preferably from 0.01 µm to 100 µm, more preferably from 0.1 µm to 10 µm, more preferably from 0.5 µm to 2 µm. When the film thickness is 0.1 µm or more, sufficient hydrophilicity and durability are obtainable, and therefore, such is preferred whereas, when the film thickness is 10 µm or less, a problem with film properties such as uneven drying is not caused, and therefore, such is preferred.

The center line average roughness, Ra, of the surface of the hydrophilic layer is preferably from 10 nm to 100 nm.
Also, Tg of the hydrophilic layer is preferably from 40°C to 150°C from the viewpoint of coated film strength. Also, the modulus of elasticity of the hydrophilic layer is preferably from 1 GPa to 7 GPa.
Additionally, surface properties of the above-described hydrophilic layer can be controlled by adjusting particle size and content of the inorganic particles to be used, surface roughness of the substrate itself, viscosity of the coating solution composition for forming the hydrophilic layer, heating temperature and heating rate of the hydrophilic coated film, and the like, but the invention is not limited only to these factors.

An interlayer may be provided, as needed, between the supporting substrate and the hydrophilic layer for the purpose of improving adhesion or the like.
For example, in the case where the substrate is an aluminum plate, an interlayer may be provided between the aluminum plate and the hydrophilic layer for the purpose of improving, for example, corrosion resistance and adhesion to the substrate. The interlayer is not particularly limited. A hydrophilic layer with a different formulation may be provided, or a known corrosion-resistant layer represented by chromate based layer may be imparted.

### [Surface free energy]

The degree of hydrophilicity of the hydrophilic layer surface is in general measured in terms of a water droplet contact angle. However, with respect to a surface with very high hydrophilicity as in the invention, there is a possibility that the water droplet contact angle is not more than 10°, and even not more than 5°. Thus, in mutually comparing the degree of hydrophilicity, there is a limit. On the other hand, as a method for evaluating the degree of hydrophilicity on a solid surface in detail, there is a method of measuring surface free energy. There have been proposed various methods. In the invention, however, the surface free energy was measured by employing the Zisman plot method as one example. Specifically, the Zisman plot method is a measurement method in which, by utilizing the properties that, in an aqueous solution of an inorganic electrolyte such as magnesium chloride, its surface tension becomes large with an increase of the concentration thereof, a contact angle is measured in air under a room temperature condition using the aqueous solution; a surface tension of the aqueous solution is taken on the abscissa, whereas a value obtained by reducing the contact angle into cosθ is taken on the ordinate; points of the aqueous solution of various concentrations are plotted to obtain a linear relationship; and the surface tension at cosθ=1, namely at a contact angle of 0° is defined as surface free energy of the solid. The surface tension of water is 72 mN/m, and it may be said that, the larger the value of surface free energy, the higher the hydrophilicity is.
The hydrophilic layer in which the surface free energy as measured in such a method is in the range of from 70 mN/m to 95 mN/m, preferably from 72 mN/m to 93 mN/m, more preferably from 75 mN/m to 90 mN/m, is excellent in hydrophilicity and exhibits a satisfactory performance.

The hydrophilic layer formed by using the hydrophilic composition of the invention shows excellent hydrophilicity and antifungal property even after being stored for a long time under the circumstance of high temperature and high humidity. That is, the hydrophilic layer shows excellent preservative properties under high temperature and high humidity.

### [Substrate]

The substrate for use in the invention is not particularly limited, and any of glass, plastics, metals, ceramics, wood, stones, cement, concrete, fibers, fabrics, paper, leathers, tiles, rubbers, latexes, and their combinations and laminates can favorably be used. Particularly preferred are flexible substrates such as plastic substrates and metal substrates. Use of such flexible substrates allows to transform articles, which serves to increase degree of freedom with respect to mounting work and mounting site and to enhance durability.
The plastic substrate to be used in the invention is not particularly limited. For example, as a substrate to be used for optical members, an appropriate one is selected in consideration of the optical properties thereof such as the transparency, the refractivity, and the dispersibility thereof and, therefore, the substrate of the type is selected in consideration of various properties thereof, for example, the physical properties such as strength, e.g., impact resistance and flexibility thereof, and also the heat resistance, the weather resistance, and the durability thereof, depending upon its use. As the plastic substrate, there can be illustrated films or sheets of polyester, polyethylene, polypropylene, cellophane, triacetyl cellulose, diacetyl cellulose, acetyl cellulose butyrate, polyvinyl chloride, polyvinylidene chloride, polyvinyl alcohol, polyethylene-vinyl alcohol, polystyrene, polycarbonate, polymethylpentene, polysulfone, polyether ketone, acrylic resin, nylon, fluorine-containing resin, polyimide, polyetherimide, and polyether sulfone. More preferred is at least one selected from among acrylic resin, polycarbonate, and polyester. Depending on their use, these may be used alone or as combined in the form of their mixtures, copolymers or laminates. The thickness of the plastic substrate varies depending upon various cases, for example, purpose of use, environment for use, and kind of the layer to be laminated thereon. For example, in a part having many curved profiles, thinner substrates are preferred, and substrates having a thickness of from about 6 to about 50 µm are used. Also, in a flat part, or in a part that must have high strength, substrates having a thickness of from 50 to 400 µm are used.

For the purpose of increasing the adhesion between the substrate and the layer to be formed thereon, if desired, one or both surfaces of the substrate may be treated for imparting hydrophilicity to the surface through oxidation or surface roughening. As the oxidation treatment, there are illustrated, for example, corona discharge treatment, glow discharge treatment, chromic acid treatment (wet treatment), flame treatment, hot air treatment, and ozone/UV irradiation treatment. As to the surface-roughening treatment, mechanical surface-roughening treatment may be conducted by sand blasting or brushing.

The plastic substrate for use herein may comprise an inorganic compound layer such as that mentioned hereinafter for glass sheets, formed on a plastic sheet. In this case, the inorganic compound layer may serve as an antireflection layer. The inorganic compound layer may be formed on a plastic sheet in the same manner as that mentioned hereinabove for inorganic substrates.

In the case where an inorganic compound layer is formed on a transparent plastic substrate, a hard coat layer may be formed between the two layers. The hard coat layer may improve the surface hardness of the substrate having it, and may smooth the substrate surface, and, therefore, the adhesion between the transparent plastic substrate and the inorganic compound layer may be improved, the scratch resistance of the substrate may be improved, and the inorganic compound layer may be prevented from being cracked when the substrate is bent. Use of the substrate of the type improves the mechanical strength of the hydrophilic member. Materials for forming the hard coat layer are not particularly limited, and any material having transparency and suitable strength, and mechanical strength may be used. For example, a resin curable through irradiation with ionizing radiations or UV rays, or a thermosetting resin may be used and, in particular, UV-curable acrylic resins, organo-silicon resins, and thermosetting polysiloxane resins are preferred. More preferably, the refractive index of the resin is on the same level as or is near to the refractive index of the transparent plastic substrate.

Methods for forming the hard coat layer are not particularly limited, and any method that can permit uniform coating may be employed. The thickness of the hard coat layer may be 3 µm for its sufficient strength, but is preferably within a range of from 5 to 7 µm in view of the transparency, the coating accuracy, and the handlability thereof. Further, inorganic or organic particles having an average particle size of from 0.01 to 3 µm may be mixed and dispersed in the hard coat layer for light diffusion treatment of the layer generally referred to as antiglare treatment. The material of the particles is not particularly limited and may be any transparent one, but is preferably one having a low refractive index. Particularly preferred are silicon oxide and magnesium fluoride in view of their stability and heat resistance. The light diffusion treatment may also be attained by roughening the surface of the hard coat layer.

### As the metal thin sheet, an aluminum sheet is particularly preferred.

The aluminum sheet is a pure aluminum sheet, an alloy sheet mainly composed of aluminum and containing trace amounts of foreign elements, or a sheet wherein a plastic film is laminated on a thin film of aluminum or aluminum alloy. The foreign elements contained in the aluminum alloys include silicon, iron, manganese, copper, magnesium, chromium, zinc, bismuth, nickel, and titanium. The amount of the foreign elements contained in the alloys is 10% by weight or less than that. Of these, a pure aluminum sheet is preferred in the invention. However, it is difficult to produce pure aluminum in terms of refining technology, so that aluminum containing the foreign elements in trace amounts is also allowed. The aluminum sheets are not particularly limited as to their composition, and aluminum sheets made of previously known and used materials can be appropriately utilized. [0139] The thickness of the substrate is preferably from 0.05 to 0.6 mm, more preferably from 0.08 to 0.2 mm.

Prior to use, the aluminum sheet is preferably subjected to a surface treatment such as a surface-roughening treatment or an anode oxidation treatment. Prior to the surface-roughening treatment of the aluminum sheet, degreasing treatment may be conducted, as needed, with a surfactant, an organic solvent or with an alkaline aqueous solution for removing rolling oil remaining on the surface of the sheet. The methods for treating the aluminum substrate may be conducted in a known manner.

As the substrate to be used in the invention, a substrate having been subjected to the surface treatment as described above and having an anodic oxide film may be used as such but, in order to more improve adhesion to the upper layer, the substrate may be subjected to another treatment as need, for example, the treatment for expanding or sealing the micropores in the anodic oxide film described in JP-A-2001-253181 and JP-A-2001-322365 or a surface hydrophilizing treatment of immersing it in an aqueous solution containing a hydrophilic compound. The expanding and sealing treatments are not limited to the methods described above, and any one of conventionally known methods may be used.
For example, as the micropore sealing treatment, treatment with fluorozirconic acid alone, treatment with sodium fluoride, and treatment with lithium chloride-containing steam may be employable as well as treatment with steam.

### <Micropore sealing treatment>

The micropore sealing treatment to be used in the invention is not particularly limited, and any of conventionally known treatments may be used. Among them, micropore sealing treatment in an aqueous solution containing an inorganic fluorine compound, micropore sealing treatment with water vapor, and micropora sealing treatment with hot water are preferred. The treatments are respectively described below.

### <Micropore Sealing treatment in an aqueous solution containing an inorganic fluorine compound>

The inorganic fluorine compound to be used in micropore sealing treatment in an aqueous solution containing an inorganic fluorine compound is preferably a metal fluoride.
Specifically, there are illustrated, for example, sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid, and ammonium fluorophosphate. Of these, sodium fluorozirconate, sodium fluorotitanate, fluorozirconic acid, and fluorotitanic acid are preferred.

The concentration of the inorganic fluorine compound in the aqueous solution is 0.01% by weight or more, more preferably 0.05% by weight or more, to sufficiently seal the micropores on the anodic oxide film, and preferably 1% by weight or less, more preferably 0.5% by weight or less, from the viewpoint of stain resistance.

Preferably, the aqueous solution containing an inorganic fluorine compound further contains a phosphate compound. Preferred examples of the phosphate compound include metal phosphates such as alkali metal phosphates and alkaline metal phosphates.
Specific examples thereof include zinc phosphate, aluminum phosphate, ammonium phosphate, diammonium hydrogen phosphate, ammonium dihydrogen phosphate, monoammonium phosphate, monopotassium phosphate, monosodium phosphate, potassium dihydrogen phosphate, dipotassium hydrogen phosphate, calcium phosphate, ammonium sodium hydrogen phosphate, magnesium hydrogen phosphate, magnesium phosphate, ferrous phosphate, ferric phosphate, sodium dihydrogen phosphate, sodium phosphate, disodium hydrogen phosphate, lead phosphate, diammonium phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate, and sodium pyrophosphate. Of these, sodium dihydrogen phosphate, disodium hydrogen phosphate, potassium dihydrogen phosphate, and dipotassium hydrogen phosphate are preferred.
Combination of the inorganic fluorine compound and the phosphate compound is not particularly limited, but it is preferred that the aqueous solution contains at least sodium fluorozirconate as the inorganic fluorine compound and at least sodium dihydrogen phosphate as the phosphate compound.

The concentration of the phosphate compound in the aqueous solution is preferably 0.01% by weight or more, more preferably 0.1% by weight or more, from the viewpoint of stain resistance, and is preferably 20% by weight or less, more preferably 5% by weight or less, from the viewpoint of solubility.

The proportion between the compounds in the aqueous solution is not particularly limited, but the weight ratio between the inorganic fluorine compound and the phosphate compound is preferably from 1/200 to 10/1, more preferably from 1/30 to 2/1.
Also, the temperature of the aqueous solution is preferably 20°C or more, more preferably 40°C or more, and is preferably 100°C or less, more preferably 80°C or less.
The pH of the aqueous solution is preferably 1 or more, more preferably 2 or more, and is preferably 11 or less, more preferably 5 or less.
The method for the micropore sealing treatment in an aqueous solution containing an inorganic fluorine compound is not particularly limited, and examples thereof include an immersion method and a spray method. Operations in these methods may be performed once or more than once individually, or those methods may be used in combination.
Among the methods, the immersion method is preferred. In the case where the immersion method is used for the treatment, the treatment period is preferably 1 second or more, more preferably 3 seconds or more, and is preferably 100 seconds or less, more preferably 20 seconds or less.

### <Micropore Sealing treatment in steam>

The micropore sealing treatment in steam can be performed, for example, by bringing steam under elevated or normal pressure into contact with the anodic oxide film continuously or non-continuously.
The temperature of the steam is preferably 80°C or higher, more preferably 95°C or higher, and is preferably 105°C or lower.
The pressure of the steam is preferably in the range of (atmospheric pressure - 50 mmAq) to (atmospheric pressure + 300 mmAq), or (1.00×10⁵ to 1.043×10⁵ Pa).
The contact time of the steam is preferably 1 second or more, more preferably 3 seconds or more, and is preferably 100 seconds or less, more preferably 20 seconds or less.

### <Micropore Sealing treatment in hot water>

The micropore sealing treatment in steam is performed, for example, by immersing an aluminum sheet having formed thereon an anodic oxide film in hot water. The hot water may contain an inorganic salt (e.g., phosphate salt) or an organic salt.
The temperature of the hot water is preferably 80°C or higher, more preferably 95°C or higher, and is preferably 100°C or lower. The period of immersion in hot water is preferably 1 second or more, more preferably 3 seconds or more, and is preferably 100 seconds or less, more preferably 20 seconds or less.

### <Hydrophilizing treatment>

As the hydrophilizing treatment, there is illustrated the alkali metal silicate methods described in US Patent Nos. 2,714,066, 3,181,461, 3,280,734, and 3,902,734. In this treatment, the support is immersed or electrolyzed, for example, in an aqueous solution of sodium silicate or the like. Also included are the method of treating the support with potassium fluorozirconate described in JP-B-36-22063 and the method of treating it with polyvinylphosphonic acid described in US Patent Nos. 3,276,868, 4,153,461, and 4,689,272.

The support preferably has an average center-line roughness of from 0.10 to 1.2 µm. In this range, it is possible to obtain desirable adhesion to the undercoat layer and good staining resistance.

As a glass plate to be used in the invention, there can be illustrated glass plates with inorganic compound layers formed from metallic oxides such as silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, and ITO (Indium Tin Oxide); and metal halides such as magnesium fluoride, calcium fluoride, lanthanum fluoride, cerium fluoride, lithium fluoride, and thorium fluoride. Also, float sheet glass, figured sheet glass, ground sheet glass, wire glass, crosswire glass, tempered glass, laminated glass, multilayered glass, vacuum glass, security glass and high-heat insulating Low-E multi-layered glass can be used depending upon the purpose. Though the hydrophilic layer or the like can be provided by coating on a raw sheet glass as it is, for the purpose of enhancing the adhesion, one surface or both surfaces of the sheet glass can be subjected to a surface hydrophilization treatment such as an oxidation method and a roughing method as the need arises. Examples of the foregoing oxidation method include a corona discharge treatment, a glow discharge treatment, a chromic acid treatment (wet type), a flame treatment, a hot blast treatment, and an ozone or ultraviolet ray irradiation treatment. As the roughing method, mechanical roughing by sand blast, brush polishing, etc. can be applied.

Such inorganic compound layers each can be configured to have a single-layer or multilayer structure. Depending on the thickness, each inorganic compound layer allows retention of transmittance to light in some instances, or allows action as an antireflection layer in other instances. To the formation of inorganic compound layers are applicable known methods including coating methods such as a dip coating method, a spin coating method, a flow coating method, a spray coating method, a roll coating method, and a gravure coating method; and vapor-phase methods, notably a physical vapor deposition (PVD) method and a chemical vapor deposition (CVD) method, such as a vacuum evaporation method, a reactive evaporation method, an ion-beam assist method, a sputtering method, and an ion plating method.

One or more undercoat layers may be formed between the substrate and the hydrophilic layer.
As the raw material of the undercoat layer, for example, hydrophilic resins and water dispersible latexes can be used.
Examples of the hydrophilic resin include polyvinyl alcohol (PVA), cellulose resins [e.g., methyl cellulose (MC), hydroxyethyl cellulose (HEC), and carboxymethyl cellulose (CMC)], chitins, chitosans, starch, ether bond-having resins [e.g., polyethylene oxide (PEO), polyethylene glycol (PEG), and polyvinyl ether (PVE)], carbamoyl-containing resins [e.g., polyacrylamide (PAAM) and polyvinylpyrrolidone (PVP)]. They also include carboxyl-containing polyacrylates, maleic acid resins, alginates, and gelatins.
Of the above, least one selected from polyvinyl alcohol resins, cellulose resins, ether-bond-having resins, carbamoyl-containing resins, carboxyl-containing resins and gelatins is preferred, with polyvinyl alcohol (PVA) resins and gelatins being especially preferred.

Examples of the water dispersible latexes include acrylic latexes, polyester latexes, NBR resins, polyurethane latexes, polyvinyl acetate latexes, SBR resins, and polyamide latexes. Of these, acrylic latexes are preferred.
The hydrophilic resins or the water dispersible latexes may be used either singly or in combination of two or more thereof. Alternatively, the hydrophilic resin and the water dispersible latex may be used in combination.
A crosslinking agent capable of crosslinking the hydrophilic resin or the water dispersible latex may be used.
As the crosslinking agent usable in the present invention, known crosslinking agents capable of forming a crosslink by heat can be used. Typical thermal crosslinking agents are described in "Handbook of Crosslinking Agents" by Shinzo Yamashita and Tohsuke Kaneko, published by Taisei-sha (1981). No particular limitation is imposed on the crosslinking agent usable in the present invention insofar as it has at least two functional groups and is capable of effectively crosslinking the hydrophilic resin or the water dispersible latex. Specific examples of the thermal crosslinking agent include polycarboxylic acids such as polyacrylic acid; amine compounds such as polyethyleneimine; polyepoxy compounds such as ethylene or propylene glycol diglycidyl ether, tetraethylene glycol diglycidyl ether, nonaethylenethylene glycol diglycidyl ether, polyethylene or polypropylene glycol glycidyl ether, neopentyl glycol diglycidyl ether 1,6-bexanediol diglycidyl ether, trimethylolpropane triglycidyl ether, and sorbitol polyglycidyl ether; polyaldehyde compounds such as glyoxal and terephthalaldehyde; polyisocyanate compounds such as tolylene diisocyanate, hexamethylene diisocyanate, diphenylmethane isocyanate, xylylene diisocyanate, polymethylene polyphenyl isocyanate, cyclohexyl diisocyanate, cyclohexanephenylene diisocyanate, naphthalene-1,5-diisocyanate, isopropylbenzene-2,4-diisocyanate, polypropylene glycol/tolylene diisocyanate adducts; block polyisocyanate compounds; silane coupling agents such as tetraalkoxysilanes; metal crosslinking agents such as aluminum, copper or iron(III) acetylacetonate; and polymethylol compounds such as trimethylolmelamine and pentaerythritol. Of these thermal crosslinking agents, water-soluble ones are preferred from the standpoint of easy preparation of coating solutions and prevention of the deterioration of hydrophilicity of the resulting hydrophilic layer.
The total amount of the hydrophilic resin and/or the water-dispersible latex in the undercoat layer is preferably from 0.01 to 20 g/m², more preferably from 0.1 to 10 g/m².

### [Layer constitution upon using the hydrophilic member]

When the hydrophilic member of the present invention is used, another layer may be added thereto as needed, depending on its object, shape and service site. The layer constitution to be added as needed will hereinafter be described.

### 1) Adhesive layer:

When the hydrophilic member of the present invention is used after attached to another substrate, an adhesive which is a pressure-sensitive adhesive is preferably used as an adhesive layer on the backside of the substrate. As the adhesive, those ordinarily used for adhesive sheets such as rubber adhesive, acrylic adhesive, silicone adhesive, vinyl ether adhesive and styrene adhesive can be used.
When an optically transparent adhesive is required, an adhesive for optical use is selected. When a colored, semitransparent or matted pattern is needed, a pattern may be drawn on the substrate, or a dye or organic or inorganic particles may be added to adhesives to produce such an effect.
When a tackifier is needed, one or more tackifying resins such as rosin resins, terpene resins, petroleum resins, and styrene resins, and hydrogenated products thereof may be used either singly or as a mixture.
The adhesive to be used in the present invention has an adhesive powder as strong as 200 g/25 mm or greater, preferably 300 g/25 mm or greater, more preferably 400 g/25 mm or greater. The adhesive power as referred to herein is determined according to the 180° peel test in accordance with JISZ0237.

### 2) Release layer

When the hydrophilic member of the present invention has the above adhesive layer, it may further have a release layer. The release layer preferably contains a release agent for having release properties. Examples of the release agent include silicone release agents made of polyorganosiloxane, fluorine-containing compounds, long chain alkyl-modified polyvinyl alcohols, and long chain alkyl-modified polyethyleneimines. Additional examples include, as well as various release agents such as hot-melt release agents and monomer release agents capable of curing releasable monomers through radical polymerization, cationic polymerization, polycondensation, or the like, copolymer resins such as acrylic-silicone copolymer resins, acrylic-fluorine copolymer resins, and urethane-silicone-fluorine copolymer resins and resin blends such as silicone resin/acrylic resin blend, fluororesin/acrylic resin blend. Alternatively, the release layer may be a hard-coat release layer available by curing a curable composition containing a fluorine atom and/or a silicon atom and a compound containing an active-energy-ray polymerizable-group.

### 3) Other layers

A protective layer may be formed on the hydrophilic layer. The protective layer has a function of preventing the hydrophilic surface from being scratched during handling, transportation or storage or a function of preventing deterioration of the hydrophilicity of the layer which will otherwise occur due to adhesion of a dirt thereto. As the protective layer, the hydrophilic polymer layer used for the above release layer is usable. The protective layer may be peeled off after the hydrophilic member has been adhered to a suitable substrate.

### [Form of hydrophilic member]

The hydrophilic member of the present invention may be provided in the form of a sheet, a roll or a ribbon, or may be provided after cut for the purpose of attaching it to a suitable substrate.

When the hydrophilic member is used for windowpanes (used for windowpanes or adhered thereto), its transparency is important for securing view through it. The hydrophilic layer of the invention has excellent transparency, and even though it is thick, its transparency is not impaired. Accordingly, the hydrophilic layer of the present invention may satisfy both transparency and durability.
The thickness of the hydrophilic layer of the present invention is preferably from 0.01 to 100 µm, more preferably from 0.05 to 50 µm, most preferably from 0.1 to 20 µm. The thicknesses of 0.01 µm or greater are preferred because they provide sufficient hydrophilicity and durability. The thicknesses not greater than 100 µm are also preferred because the problems in film forming property such as cracking do not occur.
The above-described thickness can be attained by adjusting the dry coated amount of the hydrophilic layer of the invention to preferably from 0.01 g/m² to 100 g/m², more preferably from 0.02 g/m² to 80 g/m², particularly preferably from 0.05 g/m² to 50 g/m².
Also, the thickness of the undercoat layer is preferably from 0.01 µm to 100 µm, more preferably from 0.02 µm to 80 µm, still more preferably from 0.05 µm to 50 µm.
The above-described thickness can be attained by adjusting the dry coated amount of the undercoat layer composition of the invention to preferably from 0.01 g/m² to 100 g/m², more preferably from 0.02 g/m² to 80 g/m², particularly preferably from 0.05 g/m² to 50 g/m².
Transparency is evaluated by measuring light transmission of a visible light range (400 nm to 800 nm) with a spectrophotometer. The light transmission is preferably from 100% to 70%, more preferably from 95% to 75%, most preferably from 95% to 80% of range. Within this range, the hydrophilic member can be applied to a various application without interrupting a filed of view.

A hydrophilic layer of the hydrophilic member of the present invention, as described above, can be obtained by applying the hydrophilic composition to a proper substrate, followed by heating and drying.
As a coating method for the composition for the undercoat layer and the hydrophilic composition, known application methods can be adopted, and for example, a spray coating method, a dip coating method, a flow coating method, a spin coating method, a roll coating method, a film applicator method, a screen printing method, a bar coater method, a brush coating method, or a sponge coating method can be used.

The hydrophilic member of the present invention can be used for, when an antifogging effect is expected, transparent materials, for example, transparent glass substrates or transparent plastic substrates, lenses, prisms, mirrors, and the like.
As glass, any of soda glass, lead glass, borosilicate glass, and the like may be used. Depending on their use, float sheet glass, figured glass, frosted sheet glass, meshed glass, wired glass, reinforced glass, laminate glass, pair glass, vacuum glass, security glass, and high thermal-insulation low-E pair glass can be used.
Members having an antifogging effect can be applied to mirrors such as rearview mirrors for vehicles, mirrors in bathrooms, mirrors in washrooms, mirrors for dental use, and road mirrors; lenses such as eyeglass lenses, optical lenses, camera lenses, endoscope lenses, lenses for illumination, lenses for semiconductors, and lenses for duplicators; prisms; windowpanes for buildings or control towers; glass for other building materials; windowpanes for various vehicles, such as cars, railroad carriages, airplanes, ships, midget submarines, snowmobiles, ropeway gondolas, and gondolas in amusement parks; windshield glass for various vehicles, such as cars, railroad carriages, airplanes, ships, midget submarines, snowmobiles, motorcycles, ropeway gondolas, and gondolas in amusement parks; protector goggles, sports goggles, protector mask shields, sports mask shields, helmet shields, and glass cases for frozen food display; cover glass for metering instruments; and films to be attached to the surface of the above articles. The most preferred application is glass for cars and building materials.

When the surface hydrophilic member of the invention is expected to exhibit an antifouling effect, any of metals, ceramics, woods, stones, cements, concretes, fibers, textiles, and papers, and combinations and laminations thereof as well as glasses and plastics can be used as the substrate.
Examples of applications to which the member having an antifouling effect can be applied include building materials, building exterior materials such as siding walls and roofs, building interiors, window frames, windowpanes, structural members, exteriors and paints of vehicles such as cars, railroad carriages, airplanes, ships, bicycles, and motorcycles, exteriors of machinery and articles, dustproof covers and paints, traffic signs, various display devices, advertising towers, road noise barriers, railroad noise barriers, bridges, exteriors and paints of guardrails, interiors and paints of tunnels, insulators, solar cell covers, heat collector covers for solar water heaters, PVC greenhouses, covers for vehicle lights, housing equipment, toilets, bathtubs, washstands, lighting instruments, lighting instrument covers, kitchen utensils, dishes, dish washers, dish driers, sinks, cooking ovens, kitchen hoods, ventilation fans, and films to be attached to the surface of the above articles.
They further include signboards, traffic signs, noise barriers, PVC greenhouses, insulators, covers for vehicles, tent materials, reflectors, sliding doors, screen doors, solar cell covers, heat collector covers for solar water heaters, street lamps, pavements, outdoor lightings, stone materials/tiles for artificial waterfalls/artificial fountains, bridges, greenhouses, external wall materials, sealers between walls or glasses, guardrails, balconies, vending machines, outdoor units of air conditioners, outdoor benches, various display devices, shutters, tollbooths, rate boxes, roof gutters, protecting covers for vehicle lamp, dustproof covers and paints, paints of machinery and articles, exteriors and paints of advertising towers, structural members, housing equipment, toilets, bathtubs, washstands, lighting instruments, kitchen utensils, dishes, dish driers, sinks, cooking ovens, kitchen hoods, ventilation fans, window rails, window frames, tunnel interior walls, tunnel interior lightings, window sashes, heat radiation fins for heat exchangers, pavements, mirrors for bathrooms and washrooms, ceilings for PVC greenhouses, washing stands, car bodies, and films and emblems which can be attached to these articles.
The member is also applicable to roof materials, antenna and power transmission lines in snowy districts. When it is applied to them, it may exhibit an excellent snow-accretion preventing effect.

Also, in the case where the surface-hydrophilic member of the invention is expected to show quick water-drying properties, examples of the substrate include metal, ceramic, wood, stone, cement, concrete, fiber, fabric, paper and combinations or laminates of these materials can preferably be utilized as a substrate beside the glasses and plastics. Examples of uses to which the member showing quick water-drying properties is applicable include building materials; exteriors of buildings such as exterior walls and roofs; interiors of buildings, window frames, window panes, and structural members; exteriors and coatings of vehicles such as automobiles, rail cars, aircraft, boats and ships, bicycles, and motorbikes; exteriors, dust-resistant covers and coatings of mechanical devices and articles; exteriors and coatings of traffic signs, various display devices, advertising towers, road sound abatement shields, railroad soundproof walls, bridges, and guardrails; interiors and coatings of tunnels; insulators, solar cell covers, heat collecting covers of solar water heaters, vinyl houses, panel light covers of cars, home accommodations, toilets, bathtubs, washstands, lighting fixtures, illumination covers, kitchen utensils, dishes, dish washers, dish driers, sinks, kitchen ranges, kitchen hoods, ventilating fans, and films for sticking to the surface of the above-described articles.
Also included are signboards, traffic signs, soundproof walls, vinyl houses, insulators, covers for vehicles, tent materials, anti-reflection plates, shutters, screen doors, solar cell covers, covers for heat collectors of solar water heaters, streetlights, paved roads, outdoor illumination, stones for artificial fall and artificial fountain, tiles, bridges, greenhouses, outside wall members, sealers between walls or glasses, guardrails, verandas, vending machines, outdoor machines for air conditioners, outdoor benches, various display devices, shutters, tollgates, fee boxes, gutters for roofs, covers for protecting vehicle lamps, dust-resistant covers and coatings, coatings of mechanical apparatuses and articles, exteriors and coatings of advertising towers, structural members, home accommodations, toilets, bathtubs, washstands, lighting fixtures, kitchen utensils, dishes, dish driers, sinks, kitchen ranges, kitchen hoods, ventilating fans, window rails, window frames, inside walls of tunnels, illumination inside tunnels, window sashes, fin stocks of heat exchangers, road mirrors, mirrors for use in bathrooms, washstand mirrors, ceilings for vinyl houses, washing and dressing tables, automobile bodies, members for medical analyzers, catheters for medical use, displays for personal computers or TV sets, containers for cosmetics, filters, aluminum wheels for automobiles, finders for cameras, cover glass for CCD, members of printing apparatuses, and films for sticking to the surface of the above-described articles. Also, in the case where a drying step is provided in the process of producing products for use in these applications, it is expected that drying period can be shortened, which serves to improve productivity.

Of the uses described above, application of the hydrophilic member in accordance with the invention to fin stocks is preferred, particularly preferably to a fin stock made from aluminum. That is, the fin stock of the invention is preferably a fin stock comprising a fin body (preferably an aluminum fin body) and a hydrophilic layer provided on at least part of the surface of the fin body, with the hydrophilic layer being formed by coating the hydrophilic composition in accordance with the invention.
An aluminum fin stock used in a heat exchanger for a room air conditioner or a car air conditioner (aluminum-made fin body itself) causes degradation in cooling capabilities during the cooling operation, because aggregated water produced during the cooling grows into water drops and stays between fins to result in formation of water bridges. In addition, dust gets deposited between fins, and thereby degradation in cooling capabilities is also caused. With these problems in view, fin stocks having excellent hydrophilic and antifouling properties and long persistence of these properties are obtained by applying the hydrophilic members of the invention to fin stocks wherein the composition of the invention for forming a hydrophilic film is coated on a fin body.
It is preferred that the fin stocks in accordance with the invention have water contact angles of 40° or below after they are subjected to 5 cycles of treatment including exposure to palmitic acid gas for 1 hour, washing with water for 30 minutes, and drying for 30 minutes.

Examples of the aluminum to be used for the fin body of the fin stock include that having a degreased surface and aluminum plates subjected to chemical conversion treatment if necessary. The fin bodies made of aluminum and having a surface subjected to chemical conversion treatment are preferred from the standpoint of adhesion properties and corrosion resistance of a hydrophilized film. An example of the chemical conversion treatment is chromate treatment. Typical examples of chromate treatment include alkali salt-chromate methods (such as B.V. method, M.B.V. method, E.W. method, Alrock method, and Pylumin method), a chromic acid method, a chromate method and a phosphoric acid-chromic acid method, and non-washing coat-type treatment with a composition composed mainly of chromium chromate.

Examples of a thin aluminum plate usable for the fin body of the fin stock of a heat exchanger include pure aluminum plates compliant with JIS, such as 1100, 1050, 1200 and 1N30, Al-Cu alloy plates compliant with JIS, such as 2017 and 2014, Al-Mn alloy plates compliant with JIS, such as 3003 and 3004, Al-Mg alloy plates compliant with JIS, such as 5052 and 5083, and Al-Mg-Si alloy plates compliant with JIS, such as 6061. And these thin plates may have either sheeted or coiled shape.

Also, fin stocks in accordance with the invention are preferably used in heat exchangers. The heat exchangers using fin stocks in accordance with the invention can prevent water drops and dust from depositing between fins because the fin stocks have excellent hydrophilic and antifouling properties and long persistence of these properties. As the heat exchangers, there are illustrated heat exchangers for use in a room cooler or room-air conditioner, an oil cooler for construction equipment, a car radiator, a capacitor, and so on.
Also, it is preferred that the heat exchangers with fin stocks in accordance with the invention be used in air conditioners. The fin stocks in accordance with the invention have excellent hydrophilic and antifouling properties and long persistence of these properties, and hence they can provide air conditioners less suffering the problem of degradation in cooling capabilities as described hereinbefore. These air conditioners may be any of room-air conditioners, packaged air conditioners, and car air-conditioners.
In addition, known techniques (as disclosed in JP-A-2002-106882 and JP-A-2002-156135) can be applied to the heat exchangers and air conditioners according to the invention, and the invention is not particularly limited by them.

### EXAMPLES

The present invention will hereinafter be described in detail by examples but the present invention is not limited thereby. The phrase "parts" used hereafter means "parts by weight".

### [Example 1]

400 parts of distilled water, 70 parts of ethanol, and 10 parts of a 5% by weight aqueous solution of the anionic surfactant of the following structure were added to a total weight of 100 parts of the solid components composed of the hydrophilic polymer, the antifungal agent, and other components the kinds and the amounts of which components are shown in the following Table 1, followed by stirring at 25°C for 30 minutes to obtain a hydrophilic composition. Additionally, in Table 1, the content of each component is represented in terms of % by weight based on the weight of all of the solid components.
Subsequently, a substrate described in Table 1 was immersed for 5 minutes in an alkaline washing solution (prepared by diluting Semi Clean A-1 manufactured by Yokohama Oils and Fats Industry Co., Ltd. to 3%), and washed with water to conduct degreasing treatment. The hydrophilic composition was coated on the degreased substrate in a dry thickness of 1 µm, followed by heating and drying at 100°C for 10 minutes. The thus-obtained hydrophilic member was evaluated in the following manner.

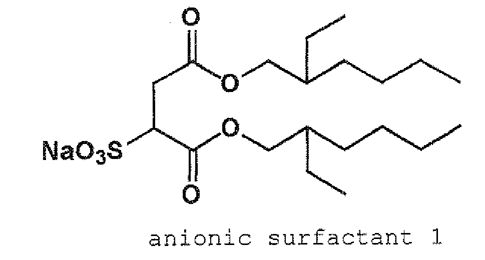

A method for synthesizing compounds E and B used in Example are shown below. Other hydrophilic polymers can also be synthesized in the similar manner.

### Compound E

100 parts of acrylamide, 10 parts of 3-mercaptopropyltrimethoxysilane, and 200 parts of dimethylacetamide were placed in a three-neck flask and, in a stream of nitrogen, the mixture was heated and mixed at 80°C. Subsequently, 0.1 part of 2,2'-azobis(2,4-dimethylvaleronitrile) was added thereto, and reaction was conducted for 5 hours. The thus-obtained reaction solution was dropwise added to 3L of methanol to precipitate a solid product. The solid product was collected by filtration, and dried at 60°C for 12 hours to obtain compound E. The molecular weight of the obtained compound E was measured by GPC and determined in terms of standard polyethylene.

### Compound B

100 parts of acrylamide, 20 parts of acrylamido-propyltriethoxysilane, and 500 parts of dimethylformamide were placed in a three-neck flask and, in a stream of nitrogen, the mixture was mixed at 80°C. Subsequently, 0.1 part of 2,2'-azobis(2,4-dimethylvaleronitrile) was added thereto, and reaction was conducted for 5 hours. The thus-obtained reaction solution was dropwise added to 3L of n-hexane to precipitate a solid product. The solid product was collected by filtration, and dried at 60°C for 12 hours to obtain compound B. The molecular weight of the obtained compound B was measured by GPC and determined in terms of standard polyethylene.

### <Method of evaluating hydrophilic member>

### (Water resistance)

The hydrophiloic member was immersed in city water controlled at 60°C for 500 hours, and then dried at 90°C for 5 minutes. Thereafter, the surface of the hydrophilic member was visually observed and evaluated according to the following ranks. The evaluation results are shown in Table 1.
Excellent: No changes were observed on the surface of the coated film.
Good: The coated film was transparent, though trace of dissolution and run-off of the coated film was observed. Bad: Trace of dissolution and run-off of the coated film was observed, and the coated film became white turbid.

### (Contact angle to water)

A droplet contact angle of the surface of the hydrophilic member was determined using DropMaster 500 manufactured by Kyowa Kaimenkagaku K.K. The evaluation results are shown in Table 1.

### (Preservaive properties at high temperature and high humidity)

The obtained hydrophilic member was exposed to an environment of 60°C and 90%RH for 5 hours, and then to an environment of 60°C and drying (20%RH) for 1 hour.
The above-described exposure test was repeated 100 times, and the contact angle was evaluated according to the above-described method, and the coated film surface was visually observed to evaluate growth of fungi. The evaluation results are shown in Table 1.
Growth of fungi was evaluated according to the following ranks.
Excellent: No growth of fungi was observed.
Good: Growth of fungi was observed, but the degree was less than 5% of the surface area of the coated film.
Bad: The degree of growth of fungi was 5% or more of the surface area of the coated film.

### [Examples 2 to 22, Comparative Examples 1 to 15]

Hydrophilic members were prepared in the same manner as in Example 1 except for employing the hydrophilic polymer, antifungal agent, other component, and substrate described in Table 1.
Results of evaluation of these hydrophilic members conducted in the same manner as in Example 1 are also shown in Table 1.

**[Table 1]**

| | Hydrophilic Polymer | | Hydrophilic Polymer | | Antifungal Agent | |
|---|---|---|---|---|---|---|
| | Kind | wt% | Kind | wt% | Kind | wt% |
| Example 1 | Compound A | 50.0 | - | - | ZPT | 10.0 |
| Example 2 | Compound B | 50.0 | - | - | ZPT | 10.0 |
| Example 3 | Compound A | 90.0 | - | - | ZPT | 10.0 |
| Example 4 | Compound A | 90.0 | - | - | TBZ | 10.0 |
| Example 5 | Compound A | 90.0 | - | - | BCM | 10.0 |
| Example 6 | Compound A | 90.0 | - | - | OBPA | 10.0 |
| Example 7 | Compound A | 90.0 | - | - | AGZ | 10.0 |
| Example 8 | Compound A | 90.0 | - | - | TCMTB | 10.0 |
| Example 9 | Compound A | 90.0 | - | - | BIT | 10.0 |
| Example 10 | Compound A | 90.0 | - | - | cresol | 10.0 |
| Example 11 | Compound A | 99.0 | - | - | ZPT | 1.0 |
| Example 12 | Compound A | 99.9 | - | - | ZPT | 0.1 |
| Example 13 | Compound A | 90.0 | - | - | ZPT | 10.0 |
| Example 14 | Compound A | 90.0 | - | - | ZPT | 10.0 |
| Example 15 | Compound A | 90.0 | - | - | ZPT | 10.0 |
| Example 16 | Compound A | 90.0 | - | - | ZPT | 10.0 |
| Example 17 | Compound A | 90.0 | Compound E | 9.9 | ZPT | 0.1 |
| Example 18 | Compound A | 50.0 | Compound E | 9.9 | ZPT | 0.1 |
| Example 19 | Compound A | 50.0 | Compound E | 49.9 | ZPT | 0.1 |
| Example 20 | Compound A | 94.9 | Compound E | 5.0 | ZPT | 0.1 |
| Example 21 | Compound F | 50.0 | - | - | ZPT | 10.0 |
| Example 22 | Compound F | 50.0 | Compound G | 49.9 | ZPT | 0.1 |
| Comparative Example 1 | Compound A | 100.0 | - | - | - | - |
| Comparative Example 2 | Compound A | 100.0 | - | - | - | - |
| Comparative Example 3 | Compound A | 100.0 | - | - | - | - |
| Comparative Example 4 | Compound A | 100.0 | - | - | - | - |
| Comparative Example 5 | Compound A | 100.0 | - | - | - | - |
| Comparative Example 6 | Compound A | 30.0 | - | - | ZPT | 3.0 |
| Comparative Example 7 | Compound B | 30.0 | - | - | ZPT | 3.0 |
| Comparative Example 8 | Compound C | 30.0 | - | - | ZPT | 10.0 |
| Comparative Example 9 | Compound C | 90.0 | - | - | AGZ | 10.0 |
| Comparative Example 10 | Compound C | 90.0 | - | - | AGZ | 10.0 |
| Comparative Example 11 | Compound C | 90.0 | - | - | AGZ | 10.0 |
| Comparative Example 12 | Compound C | 90.0 | - | - | AGZ | 10.0 |
| Comparative Example 13 | Compound C | 90.0 | - | - | AGZ | 10.0 |
| Comparative Example 14 | Compound D | 90.0 | - | - | AGZ | 10.0 |
| Comparative Example 15 | Compound E | 90.0 | - | - | ZPT | 10.0 |

| | Other Component | | Substrate | Initial Contact Angle | Preservative Properties at High Temperature and High Humidity | | Water Resistance |
|---|---|---|---|---|---|---|---|
| | Kind | wt% | | | Contact Angle | Antifungal property | |
| Example 1 | TMOS | 40.0 | aluminum | 5° | 8° | excellent | excellent |
| Example 2 | TMOS | 40.0 | aluminum | 10° | 15° | excellent | excellent |
| Example 3 | - | - | aluminum | 6° | 8° | excellent | excellent |
| Example 4 | - | - | aluminum | 7° | 7° | excellent | Excellent |
| Example 5 | - | - | aluminum | 6° | 8° | excellent | excellent |
| Example 6 | - | - | aluminum | 8° | 10° | excellent | excellent |
| Example 7 | - | - | aluminum | 7° | 21° | excellent | excellent |
| Example 8 | - | - | aluminum | 10° | 15° | excellent | good |
| Example 9 | - | - | aluminum | 12° | 16° | excellent | good |
| Example 10 | - | - | aluminum | 13° | 17° | excellent | good |
| Example 11 | - | - | aluminum | 5° | 7° | excellent | excellent |
| Example 12 | - | - | aluminum | 5° | 7° | excellent | excellent |
| Example 13 | - | - | PC | 10° | 13° | excellent | excellent |
| Example 14 | - | - | AC | 9° | 15° | excellent | excellent |
| Example 15 | - | - | SUS | 6° | 8° | excellent | excellent |
| Example 16 | - | - | PET | 5° | 9° | excellent | Excellent |
| Example 17 | - | - | aluminum | 10° | 12° | excellent | excellent |
| Example 18 | TMOS | 40.0 | aluminum | 11° | 14° | excellent | excellent |
| Example 19 | - | - | aluminum | 6° | 8° | excellent | excellent |
| Example 20 | - | - | aluminum | 7° | 8° | excellent | excellent |
| Example 21 | TMOS | 40.0 | aluminum | 5° | 7° | excellent | excellent |
| Example 22 | - | - | aluminum | 10° | 13° | excellent | excellent |
| Comparative Example 1 | - | - | aluminum | 5° | 7° | bad | excellent |
| Comparative Example 2 | - | - | PC | 15° | 15° | bad | excellent |
| Comparative Example 3 | - | - | AC | 9° | 10° | bad | excellent |
| Comparative Example 4 | - | - | SUS | 5° | 9° | bad | excellent |
| Comparative Example 5 | - | - | PET | 5° | 12° | bad | Excellent |
| Comparative Example 6 | TMOS | 67.0 | aluminum | 5° | 10° | bad | excellent |
| Comparative Example 7 | TMOS | 67.0 | aluminum | 5° | 10° | bad | excellent |
| Comparative Example 8 | - | - | aluminum | 5° | 25° | good | bad |
| Comparative Example 9 | - | - | aluminum | 6° | 18° | good | bad |
| Comparative Example 10 | - | - | PC | 9° | 35° | good | bad |
| Comparative Example 11 | - | - | AC | 5° | 31° | good | bad |
| Comparative Example 12 | - | - | SUS | 5° | 28° | good | bad |
| Comparative Example 13 | - | - | PET | 5° | 43° | good | bad |
| Comparative Example 14 | - | - | aluminum | 7° | 25° | good | bad |
| Comparatie Example 15 | - | - | aluminum | 15° | 19° | good | Bad |

Hydrophilic polymers in Table 1 are as follows.
Compound A: copolymerization ratio of component a/component b = 80/20 molar ratio (Mw 42,000)
Compound B: copolymerization ratio of component a/component b = 70/30 molar ratio (Mw 45,000)
Compound C: polyvinyl alcohol (Mw 40,000)
Compound D: polyacrylic acid (Mw 45,000)

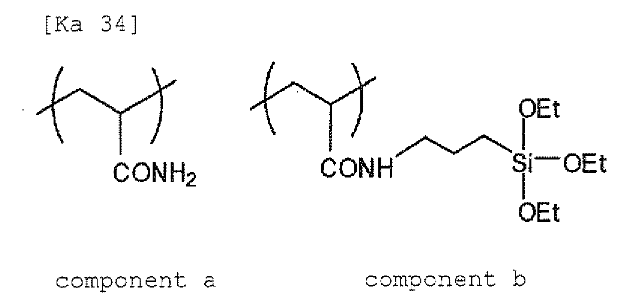

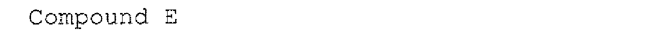

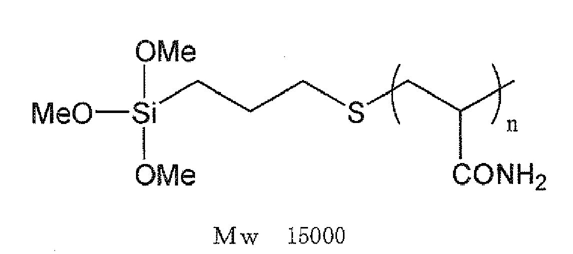

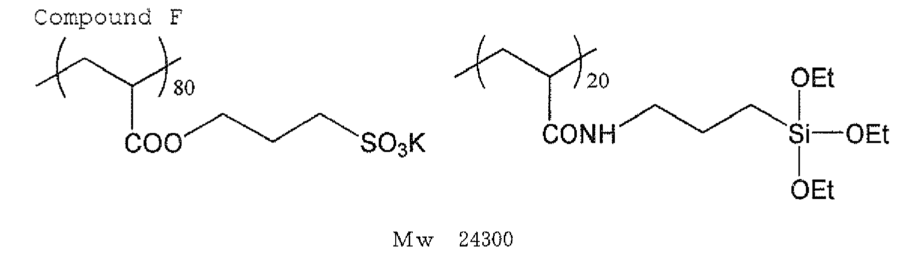

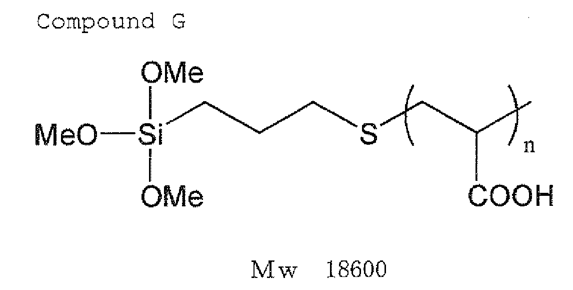

The weight-average molecular weights described above are all obtained by GPC measurement (in terms of standard polyethylene).

The antifungalagents are as follows. Commercially available ones were used as all of them.
ZPT: bis(2-pyridylthio-1-oxide)zinc
TBZ: 2-(4-thiazolyl)benzimidazole
BCM: methyl 2-benzimidazole carbamate
OBPA: 10,10'-oxy-bis-phenoxy-arsine
AGZ: silicate based silver zeolite
TCMTB: 2-(4-thiocyanomethyl)benzimidazole
BIT: 1,2-benzothiazolone
Cresol: methylphenol
In addition, the other component of TMOS is tetramethoxysilane (commercially available reagent).

Substrates are as follows.
Aluminum: A1050 with a thickness of 0.1 mm
PC: polycarbonate substrate with a thickness of 6 nm
AC: acrylic substrate with a thickness of 6 mm
SUS: SUS301 substrate with a thickness of 3 mm
PET: PET resin with a thickness of 6 mm

As is apparent from Table 1, hydrophilic members using the hydrophilic compositions of the invention are excellent in hydrophilicity, preservative properties at high temperature and high humidity, antifungal property, and water resistance.

### Industrial Applicability

The hydrophilic composition of the invention can form a hydrophilic layer which shows a high hydrophilicity that has not conventionally been attained and which can maintain high hydrophilicity and high antifungal effect even after being stored for a long period under an environment of high temperature and high humidity or after being immersed in water for a long period. It can find various applications. For example, it can be coated on an aluminum-made fin stock provided in a heat exchanger for use in an air-conditioner.
Although the invention has been described in detail and by reference to specific embodiments, it is apparent to those skilled in the art that it is possible to add various alterations and modifications insofar as the alterations and modifications do not deviate from the spirit and the scope of the invention.
This application is based on a Japanese patent application filed on Jan. 25, 2008 (Japanese Patent Application No. 2008-15141), a Japanese Patent Application filed on Mar. 25, 2008 (Japanese Patent Application No. 2008-79319), and a Japanese patent application filed on Aug. 18, 2008 (Japanese Patent Application No. 2008-210083), and the contents thereof are incorporated herein by reference.

## Claims

1. A hydrophilic composition comprising a hydrophilic polymer having at least a structural unit represented by the following general formula (I-a) and a structural unit represented by the following general formula (I-b) in a content of 50% by weight or more based on a weight of solid components, and further comprising an additive having an antifungal property: 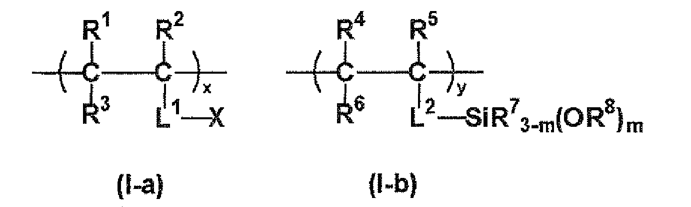 wherein, in the general formulae (I-a) and (I-b), R¹ to R⁸ each independently represents a hydrogen atom or a hydrocarbon group, L¹ represents a single bond or a multi-valent organic linking group, L² represents a single bond or a multi-valent organic linking group having one or more structures selected from the group consisting of -CONH-, - NHCONH-, -OCONH-, -SO₂NH- and -SO₃-, m represents an integer of from 1 to 3, x and y each represents a copolymerization ratio, with x being 0<x<100 and y being 0<y<100, X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, - OSO₃Rₑ, -SO₂P_{d}, -NHSO₂R_{d}, -SO₂N(Rₐ)(R_{b}), -N(Rₐ)(R_{b})(R_{c}), - N(Rₐ)(R_{b})(R_{c})(R_{g}), -PO₃(Rₑ)(R_{f}), -OPO₃(Rₑ)(R_{f}) or -PO₃(R_{d})(Rₑ) in which Rₐ, R_{b} and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and R_{g} represents a halogen ion, an inorganic anion or an organic anion.

2. The hydrophilic composition as claimed in claim 1, wherein the additive having an antifungal property comprises at least one member selected from a water-soluble organic compound and a silver based inorganic compound.

3. The hydrophilic composition as claimed in claim 1 or 2, wherein the additive having an antifungal property comprises at least one member selected from 2-(4-thiazolyl)benzimidazole, methyl 2-benzimidazole carbamate, 10,10'-oxy-bis-phenoxyarsine, bis(2-pyridylthio-1-oxide)zinc and silicate based silver zeolite.

4. The hydrophilic composition as claimed in any one of claims 1 to 3, which further comprises a hydrophilic polymer having a structure represented by the following general formula (II): 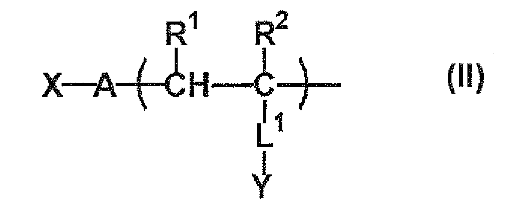 wherein, in the general formula (II), R¹ and R² each independently represents a hydrogen atom or a hydrocarbon group, X represents a reactive group, A and L¹ each independently represents a single bond or a linking group, Y represents -NHCOR⁹, -CONH₂, -CON(R⁹)₂, -COR⁹, -OH, -CO₂M, - SO₃M, -PO₃M, -OPO₃M or -N(R⁹)₃Z¹ in which R⁹ represents an alkyl group, an aryl group or an aralkyl group, M represents a hydrogen atom, an alkali metal, an alkaline earth metal or an onium, and Z¹ represents a halogen ion.

5. The hydrophilic composition as claimed in claim 4, wherein a weight ratio of {the hydrophilic polymer having at least the structural unit represented by the general formula (I-a) and the structural unit represented by the general formula (I-b)}/{the hydrophilic polymer having the structure represented by the general formula (II)} is from 50/50 to 95/5.

6. The hydrophilic composition as claimed in any one of claims 1 to 5, which further comprises a surfactant.

7. The hydrophilic composition as claimed in claim 6, wherein the surfactant is an anionic surfactant.

8. The hydrophilic composition as claimed in any one of claims 1 to 7, wherein the additive having an antifungal property has a molecular weight of from 200 to 1,000.

9. The hydrophilic composition as claimed in claim 8, wherein the additive having an antifungal property has a molecular weight of from 300 to 700.

10. A hydrophilic member comprising a hydrophilic layer formed, on a substrate made from at least one member selected from acrylic resin, polycarbonate based resin, polyester based resin, stainless steel and aluminum, with the hydrophilic composition claimed in any one of claims 1 to 9.

11. A fin stock comprising an aluminum-made fin body and a hydrophilic layer provided on at least part of a surface of the fin body, wherein the hydrophilic layer is formed by coating with the hydrophilic composition claimed in any one of claims 1 to 9.

12. A heat exchanger comprising the fin stock claimed in claim 11.

13. An air-conditioner comprising the heat exchanger claimed in claim 12.
